# EUROPEAN PATENT APPLICATION

(11) **EP 2 460 408 A1**
(43) Date of publication of application: **06.06.2012**
(21) Application number: 11176048.4
(22) Date of filing: 16.12.2005
(51) Int. Cl.: A01N 47/38, A01N 25/00

(54) **Nematicidal compositions**

(30) Priority: 17.12.2004 US 636605 P; 18.08.2005 US 709095 P
(62) Divisional of application: 08153818.3
(71) Applicant: deVGen N.V., 9052 Zwijnaarde (BE)
(72) Inventor: Leysen, Dirk, 9160 Lokeren (BE); de Kerpel, Jan, Octaaf, 9340 L Lede (BE)
(74) Representative: Bounaga, Sakina

(57) **Abstract**

The present invention concerns nematicidal compounds, their formulation as nematicidal composition and their use for controlling nematodes, preferably plant parasitic nematodes.

## Description

### Field of the invention

The present invention relates to nematicidal compounds and to nematicidal compositions. The present invention further relates to the use of these compounds or compositions for controlling nematodes, in particular for controlling plant parasitic nematodes and to the use of these compounds in preparing nematicidal compositions.

### Background of the invention

Nematodes cause a substantial loss in agricultural products including food and industrial crops and are combated with chemical compounds having nematicidal activity. To be useful in agriculture these compounds should have a high activity, a broad spectrum activity against different strains of nematodes and should not be toxic to non-target organism. The present invention describes compounds, formulations and methods of use of these compounds as nematicides.

The chemical compounds herein disclosed are compounds that were already known as herbicides, fungicides or insecticides. Surprisingly, it has now been found that these compounds also exhibit nematicidal activity and therefore, these compounds can now be employed in the fight against nematodes.

### Summary of the invention

In a first aspect the present invention relates to the use of at least one compound selected from the group of compounds of Formulas XLI, XXIII, XXIV, I, III, V, VI, VIII, IX, XI, XII, XIV, XVI, XVII, XVIII, XX, XXI, XXVI, XXVII, XXIX, XXX, XXXI, XXXIII, XXXIV, XXXV, XXXVII, XXXIX, XLVII, L, LIII, LVI or a stereoisomer, tautomer, racemic, prodrug, metabolite thereof, or a salt, ester and/or solvate thereof, as a nematicide. In a further aspect, the present invention relates to the use defined above wherein at least two compounds selected from the said group are used.

The present invention also relates to the use of a composition comprising an effective amount of at least one compound selected from the group of compounds of Formulas XLI, XXIII, XXIV, I, III, V, VI, VIII, IX, XI, XII, XIV, XVI, XVII, XVIII, XX, XXI, XXIV, XXVI, XXVII, XXIX, XXX, XXXI, XXXIII, XXXIV, XXXV, XXXVII, XXXIX, XLVII, L, LIII, LVI, or stereoisomer, tautomer, racemic, prodrug, metabolite thereof, or salt, ester and/or solvate thereof, as a nematicide. In a further aspect, the present invention relates to the use defined above wherein at least two compounds selected from the said group are used.

In an embodiment, said at least one or said at least two compound(s) is (are) selected from the group of compounds of Formulas XLIII, XXV, II, IV, VII, X, XIII, XV, XVI, XIX, XXII, XXV, XXVI, XXVIII, XXIX, XXXII, XXXIII, XXXVI, XXXVIII, XL, XLII, XLIII, XLIV, XLV, XLVI, XLVIII, XLIX, LI, LII, LIV, LV, LVII, LVIII, LIX or stereoisomer, tautomer, racemic, prodrug, metabolite thereof, or salt, ester and/or solvate thereof.

According to a particular embodiment of the present invention, the compound of Formula XLI has the Formula XLIII; the compound of Formula XXIII or XXIV has the formula XXV; the compound of Formula VIII or IX has the Formula X; the compound of Formula XI or XII has the Formula XIII; the compound of Formula XXVII has the Formula XXVIII; the compound of Formula XXX or XXXI has the Formula XXXII; the compound of Formula XXXIV or XXXV has the Formula XXXVI; the compound of Formula XXXIX has the Formula XL; and the compound of Formula XLI has the Formula XLIV;

In another embodiment, the present invention relates to the use of a compound selected from the group of compounds of Formulas I to LIX, or a stereoisomer, tautomer, racemic, prodrug, metabolite thereof, or a salt, ester and/or solvate thereof, as a nematicide.

The present compounds as described herein are particularly active against plant parasitic nematodes.

In a second aspect, the present invention relates to nematicidal compositions.

In an embodiment of the present invention, said nematicidal composition comprises an effective amount of at least one compound selected from the group of compounds of Formulas I to LIX, as defined herein or a stereoisomer, tautomer, racemic, prodrug, metabolite thereof, or a salt, ester and/or solvate of any of these compounds.

The present invention further encompasses a nematicidal composition comprising an effective amount of at least one compound as defined herein, and at least one of the following: surfactant, solid or liquid diluent, characterized in that the surfactant or the diluent is normally used in nematicidal compositions. The present invention also encompasses a fibrous nematicide composition comprising a non-woven fiber and an effective amount of at least one compound, preferably at least two compounds, as defined herein, said compound(s) covalently attached or stably adsorbed to the fiber. The invention further encompasses the use of any of the compositions as defined herein as a nematicide.

The present invention further encompasses a seed comprising a coat of a fibrous composition as defined herein.

In a third aspect, the present invention relates to methods for preparing the nematicidal compositions described herein , comprising the step of mixing at least one compound as described herein, with a surfactant or diluent normally used in nematicidal compositions. In an embodiment, said method comprises the step of mixing at least two compounds as described herein with a surfactant or diluent normally used in nematicidal compositions.

The present invention also relates to methods for controlling nematodes, comprising the application of a nematicidal composition as described herein to an organism to be protected in an effective amount to act on the nematode. Preferably, said organism is a plant. In a particular embodiment, the method comprises the application of a nematicidal composition as described herein to a locus of the organism to be protected in an effective amount to act on the nematode. The method is particularly suitable to nematodes which are plant parasitic nematodes located in the soil.

The present invention further relates to methods of producing a merchandise comprising obtaining a nematicidal composition as described herein and preparing a merchandise from said composition.

Other features and advantages of the present invention will become apparent on reading the description which follows and the examples illustrating it.

### Detailed description

The compounds to be used as nematicides according to the present invention have been described in patent EP0153284, which document text is incorporated herein by reference.

The compounds used in the present invention are prepared according to the methods described in patent EP0153284, which methods are incorporated herein by reference as if fully set forth.

Salts, esters and acid addition and/or base-addition salts of the compounds of Formula I are described in EP0153284. Salts of the aminoalkanephosphonic acids or the free acids are preferred.

A first aspect of the invention is the use of a compound as a nematicide, wherein said compound is of the general Formula I, or a stereoisomer, tautomer, racemic, prodrug, metabolite thereof, or a salt, ester and/or solvate thereof, 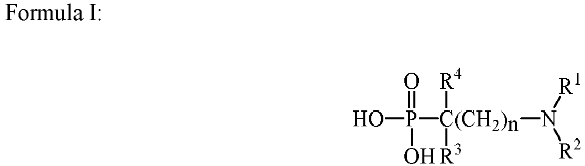 wherein R¹ and R² each independently are selected from hydrogen or C₁-C₈ alkyl groups; n is an integer of 0, 1, 2 or 3; R³ is a C₁-C₁₂ alkyl group and R⁴ is selected from hydrogen or a C₁-C₁₂ alkyl group.

Preferred compounds to be used as nematicides according to the present invention, are the compounds described as preferred compounds in the description of patent EP0153284 and the compounds further specified in the claims of patent EP0153284.

Particularly suitable compounds to be used as nematicides are compounds of the general Formula I as defined hereunder. Accordingly the present invention provides the use of a compound as a nematicide, wherein the compound is of the general Formula I, or a stereoisomer, tautomer, racemic, prodrug, metabolite thereof, or a salt, ester and/or solvate thereof, wherein R¹ and R² are each independently selected from hydrogen or C₁-C₄ alkyl groups, and most preferably hydrogen. As stated above, n is an integer of 0 to 3 and suitably of 0 to 2. An important feature of the compounds used according to the invention is the alpha-substitution to the phosphonic group by one or two alkyl groups. The number of carbon atoms in these alkyl groups, R³ and R⁴, should suitably not exceed 8, and preferably not exceed 6. If two branches are present, the total number of carbon atoms should suitably not exceed 8 and suitably not exceed 5. Thus, the preferred compounds are such containing short branches.

One specific example of a compound of the general Formula I is a compound of the Formula II, which is (RS)-1-aminopropylphosphonic acid (ampropylfos) with CAS number 16606-64-7. Accordingly the present invention provides the use of a compound as a nematicide, wherein the compound is of the Formula II, or a stereoisomer, tautomer, racemic, prodrug, metabolite thereof, or a salt, ester and/or solvate thereof, 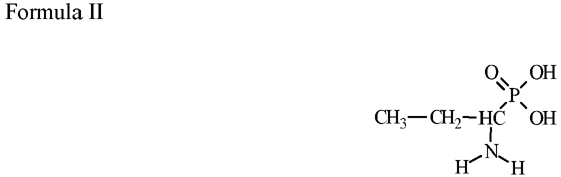 (RS)-1-aminopropylphosphonic acid has been previously described as a fungicide (see pesticide manual version 9 entry 0375).

According to another embodiment of the invention, the compounds to be used as nematicides have been described in patent US3331735, which document text is incorporated herein by reference and which compounds are herein represented as Formula III. These compounds are prepared according to the methods described in patent US3331735, which methods are incorporated herein by reference as if fully set forth. Salts of these compounds are described in patent US3331735.

Accordingly, a further aspect of the invention is the use of a compound as a nematicide, wherein said compound is of the general Formula III, or a stereoisomer, tautomer, racemic, prodrug, metabolite thereof, or a salt and/or solvate thereof, 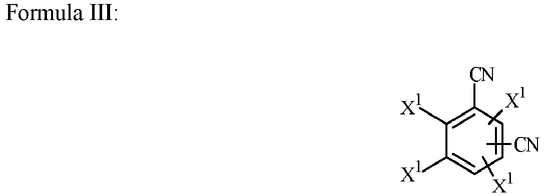 wherein each X¹ is selected from hydrogen or halogen, i.e., chlorine, fluorine, and bromine with at least one X being halogen.

One specific example of a compound of the general Formula III is a compound of the Formula IV, which is tetrachloroisophthalonitrile (chlorothalonil) with CAS number 1897-45-6. Accordingly the present invention provides the use of a compound as a nematicide, wherein the compound is of the Formula IV, or a stereoisomer, tautomer, racemic, prodrug, metabolite thereof, or a salt and/or solvate thereof,

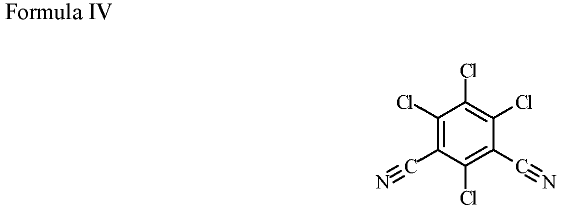

Tetrachloroisophthalonitrile has been previously described as fungicide (see e-Pesticide Manual, 12th edition, version 2.2, editor CDS Tomlin, ISBN 1-901396-31-2 entry 141).

According to another embodiment of the invention, the compounds to be used as nematicides have been described in patent US3499030, which document text is incorporated herein by reference and which compounds are herein represented as Formula V. These compounds are prepared according to the methods described in patent US3499030, which methods are incorporated herein by reference as if fully set forth. Salts, esters and acid addition and/or base-addition salts of these compounds are described in patent US3499030.

Accordingly, a further first aspect of the invention is the use of a compound as a nematicide, wherein said compound is a sulphenic acid derivative of the general Formula V, or a stereoisomer, tautomer, racemic, prodrug, metabolite thereof, or a salt, ester and/or solvate thereof, 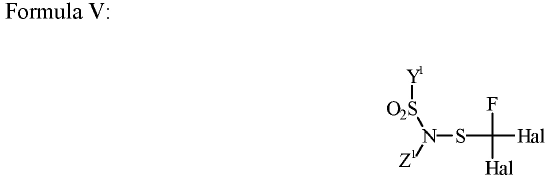 wherein
Y¹ is selected from the group consisting of N, N-dialkylamino, having a C₁-C₂ alkyl moiety, phenyl, chlorophenyl, dichlorophenyl, nitro-phenyl, nitro chlorophenyl, tolyl and chloromethyl;
Z¹ is selected from the group consisting of phenyl, fluorophenyl, lower alkyl phenyl, chlorophenyl, lower alkyl, alkyl carbonyl having a C₁-C₂ alkyl moiety, 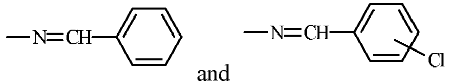
and Y¹ and Z¹ in combination with the nitrogen atom are defined as heterocyclic rings. Hal is defined as halogens and can be Cl, Br, or I.

Preferred compounds to be used as nematicides according to the present invention, are the compounds described as preferred compounds in the description of patent US3499030 and the compounds further specified in the claims of patent US3499030.

Particularly suitable compounds to be used as nematicides are compounds of the general Formula VI. Accordingly the present invention provides the use of a compound as a nematicide, wherein the compound is of the general Formula VI, or a stereoisomer, tautomer, racemic, prodrug, metabolite thereof, or a salt, ester and/or solvate thereof, 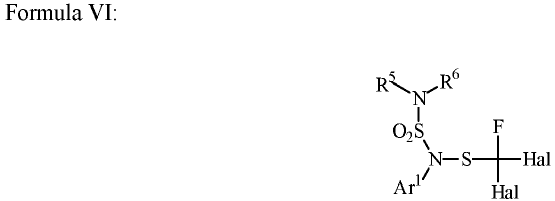 wherein
R⁵ and R⁶ are each independently selected from hydrogen, methyl or ethyl groups and
Ar¹ is selected from the group consisting of phenyl, fluorophenyl, lower alkyl phenyl or chlorophenyl and Hal is defined as halogen and can be Cl, Br, or I.

One specific example of a compound of the general Formula V or VI is a compound of the Formula VII, which is N-dichlorofluoromethylthio-N',N'-dimethyl-N-phenylsulfamide (dichlofluanid) with CAS number 1085-98-9. Accordingly the present invention provides the use of a compound as a nematicide, wherein the compound is of the Formula VII, or a stereoisomer, tautomer, racemic, prodrug, metabolite thereof, or a salt, ester and/or solvate thereof,

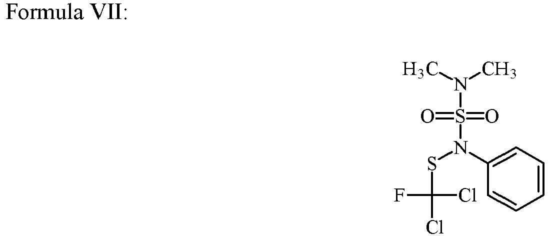

N-dichlorofluoromethylthio-N',N'-dimethyl-N-phenylsulfamide has been previously described as a fungicide (see e-Pesticide Manual, 12th edition, version 2.2, editor CDS Tomlin, ISBN 1-901396-31-2, entry 224).

According to another embodiment of the invention, the compounds to be used as nematicides have been described in patent US5952496, which document text is incorporated herein by reference and which compounds are herein represented as Formula VIII. These compounds are prepared according to the methods described in patent US5952496, which methods are incorporated herein by reference as if fully set forth. Salts of these compounds are described in patent US5952496.

Accordingly, a further first aspect of the invention is the use of a compound as a nematicide, wherein said compound is an acrylic acid morpholide derivative of the general Formula VIII, or a stereoisomer, tautomer, racemic, prodrug, metabolite thereof, or a salt and/or solvate thereof, 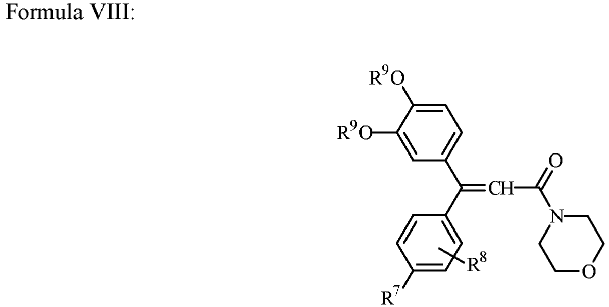 wherein
R⁷ is selected from a hydrogen, chlorine or bromine atom, a trifluoromethyl, trifluoromethoxy, C₃-C₇ alkyl, C₃-C₅ alkoxy, C₃-C₆ alkenyl, HClFC-CF₂O-,HClC=CCl-, cyclohexyl, cyclopentenyl, cyclohexenyl, phenyl, 4-chlorophenyl, 4-ethylphenyl, 4-chlorobenzyl or 4-chlorophenylthio group or a phenoxy group optionally substituted by one or more substituents selected from fluorine and chlorine atoms and methyl and ethoxycarbonyl groups and
R⁸ is selected from a hydrogen atom, a lower alkyl or a 3-phenoxy group.
R⁹ is selected from hydrogen, lower alkyl, trifluoromethyl, phenyl, substituted phenyl or can form a ring.

Preferred compounds to be used as nematicides according to the present invention, are the compounds described as preferred compounds in the description of patent US5952496 and the compounds further specified in the claims of patent US5952496.

Particularly suitable compounds to be used as nematicides are compounds of the general Formula IX. Accordingly, the present invention provides the use of a compound as a nematicide, wherein the compound is of the general Formula IX, or a stereoisomer, tautomer, racemic, prodrug, metabolite thereof, or a salt and/or solvate thereof, 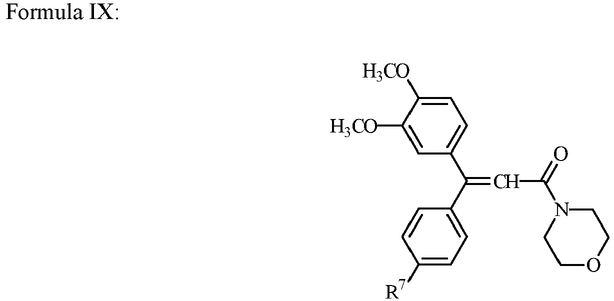 wherein
R⁷ is selected from a chlorine or bromine atom or a trifluoromethyl, trifluoromethoxy, propyl, butoxy, phenyl, 4-chlorophenylthio, 4-chlorophenoxy, 4-methylphenoxy or 4-ethoxycarbonphenoxy group, especially a chlorine or bromine atom or a trifluoromethyl, trifluoromethoxy, phenyl or 4-chlorophenoxy group.

A particularly preferred sub-group of compounds is the group of Formula IX wherein R⁷ is selected from a chlorine atom or a phenyl group.

One specific example of a compound of the general Formula VIII or IX is a compound of the Formula X, which is (E,Z)-4-[3-(4-chlorophenyl)-3-(3,4-dimethoxyphenyl)acryloyl]morpholine (dimethomorf) with CAS number 110488-70-5. Accordingly the present invention provides the use of a compound as a nematicide, wherein the compound is of the Formula X, or a stereoisomer, tautomer, racemic, prodrug, metabolite thereof, or a salt and/or solvate thereof,

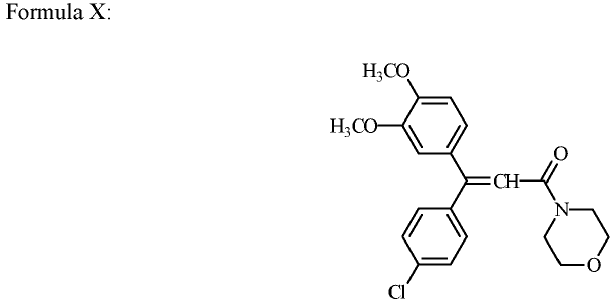

(E,Z)-4-[3-(4-chlorophenyl)-3-(3,4-dimethoxyphenyl)acryloyl]morpholine has been previously described as a fungicide (see e-Pesticide Manual, 12th edition, version 2.2, editor CDS Tomlin, ISBN 1-901396-31-2, entry 258).

According to another embodiment of the invention, the compounds to be used as nematicides have been described in patent US5945379, which document text is incorporated herein by reference and which compounds are herein represented as Formula XI. These compounds are prepared according to the methods described in patent US5945379, which methods are incorporated herein by reference as if fully set forth. Salts, esters and acid addition and/or base-addition salts of these compounds are described in patent US5945379.

Accordingly, a further first aspect of the invention is the use of a compound as a nematicide, wherein said compound is a heteroaryloxy-acetamide of the general Formula XI, or a stereoisomer, tautomer, racemic, prodrug, metabolite thereof, or a salt, ester and/or solvate thereof, 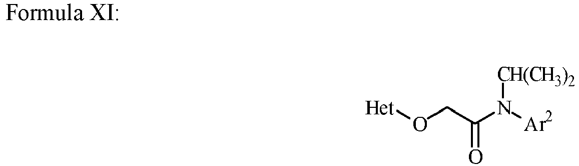 wherein
Het represents thiadiazolyl which is substituted by halogen or by C₁-C₄-alkyl or phenyl, each of which is optionally substituted by halogen, and
Ar² represents optionally halogen-, C₁-C₄-alkyl- or C₁-C₄-halogenoalkyl-substituted phenyl.

Preferred compounds to be used as nematicides according to the present invention, are the compounds described as preferred compounds in the description of US5945379 and the compounds further specified in the claims of patent US5945379.

Particularly suitable compounds to be used as nematicides are compounds of the general Formula XII. Accordingly, the present invention provides the use of a compound as a nematicide, wherein the compound is of the general Formula XII, or a stereoisomer, tautomer, racemic, prodrug, metabolite thereof, or a salt, ester and/or solvate thereof, 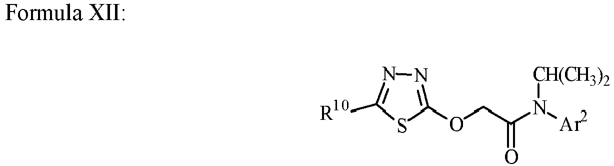 wherein
R¹⁰ is selected from halogen or C₁-C₄-alkyl which is optionally substituted by halogen, and
Ar² represents optionally halogen-, C₁-C₄-alkyl- or C₁-C₄-halogenoalkyl-substituted phenyl.

One specific example of a compound of the general Formula XI or XII is a compound of the Formula XIII, which is 4'-fluoro-N-isopropyl-2-(5-trifluoromethyl-1,3,4-thiadiazol-2-yloxy)acetanilide (flufenacet) with CAS number 142459-58-3. Accordingly, the present invention provides the use of a compound as a nematicide, wherein the compound is of the Formula XIII, or a stereoisomer, tautomer, racemic, prodrug, metabolite thereof, or a salt, ester and/or solvate thereof.

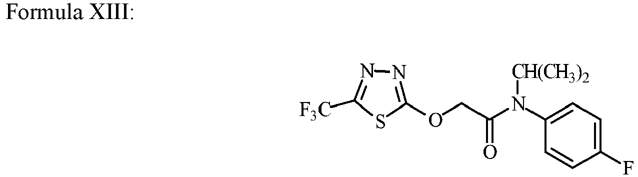

4'-fluoro-N-isopropyl-2-(5-trifluoromethyl-1,3,4-thiadiazol-2-yloxy)acetanilide has been previously described as an herbicide (see e-Pesticide Manual, 12th edition, version 2.2, editor CDS Tomlin, ISBN 1-901396-31-2, entry 362).

According to another embodiment of the invention, the compounds to be used as nematicides have been described in patent US4568376, which document text is incorporated herein by reference and which compounds are herein represented as Formula XIV. These compounds are prepared according to the methods described in patent US4568376, which methods are incorporated herein by reference as if fully set forth. Salts, esters and acid addition and/or base-addition salts of these compounds are described in patent US4568376. In particular the invention encompasses the use as nematicide of compatible salts of the compound of Formula XIV, for example, acid addition salts with respect to the exocyclic amino group; and also salts obtained via replacement of the amino hydrogen (i.e., R¹¹ and R¹² is hydrogen) with a compatible cation or enolation of the 3-oxo group following replacement of the amino hydrogen.

Accordingly, a further first aspect of the invention is the use of a compound as a nematicide, wherein said compound is a compound of the general Formula XIV, or a stereoisomer, tautomer, racemic, prodrug, metabolite thereof, or a salt, ester and/or solvate thereof, 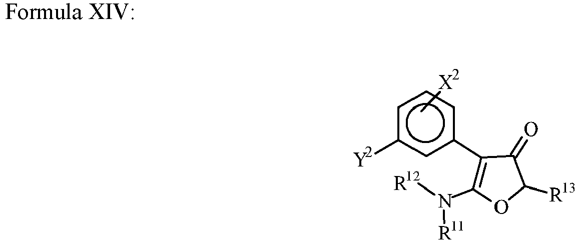 wherein R¹³ is selected from lower alkyl having 1 through 4 carbon atoms; cycloalkyl having 3 through 7 carbon atoms, lower alkenyl; haloalkyl having 1 through 4 carbon atoms and 1 through 3 halo atoms independently selected from the group of fluoro, chloro, bromo or iodo; haloalkenyl having 2 through 4 carbon atoms and 1 through 3 halo atoms independently selected from the group of fluoro, chloro, bromo, or iodo; lower alkoxyalkyl wherein the alkoxy and alkyl moiety thereof independently have 1 through 3 carbon atoms; lower alkylthioalkyl wherein the alkyl moieties independently have 1 through 3 carbon atoms; phenyl, naphth-1-yl, inden-1-yl; 4-fluorophenyl; arylalkylene having 1 through 3 carbon atoms in the alkylene moiety and wherein said aryl moiety is phenyl, naphth-1-yl or inden-1-yl; or substituted aryl or arylalkylene selected from the group having the Formulas: 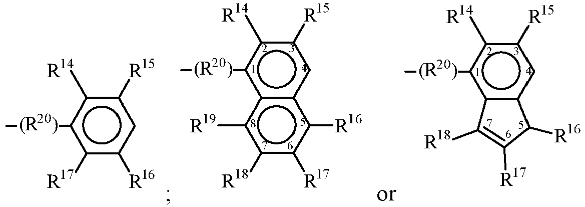 wherein
one, two or three of R¹⁴, R¹⁵, R¹⁶, R¹⁷, R¹⁸, and R¹⁹ are each independently selected from the group of lower alkyl, lower alkoxy, halo, nitro, or C₁-C₃ haloalkyl having 1 through 3 of the same or different halo atoms, and the remainder are hydrogen; and
R²⁰ is selected from a single bond or a C₁-C₃ alkylene;
R¹¹ is selected from hydrogen or C₁-C₄ alkyl;
R¹² is selected from hydrogen, C₁-C₄ alkyl , C₃-C₄ alkenyl, alkoxycarbonylalkyl having from 1 through 4 carbon atoms in the alkoxy moiety and from 1 through 4 carbon atoms in the alkyl moiety, alkoxyalkyl wherein the alkoxy and alkyl moieties independently have 1 through 3 carbon atoms or alkylthioalkyl wherein the alkyl moieties independently have 1 through 3 carbon atoms; or
R¹¹ and R¹² together with the nitrogen to which they are joined form a saturated or unsaturated nitrogen heterocycle having from 4 through 6 ring atoms one of which is nitrogen and the remainder of which are carbon atoms;
X² is selected from hydrogen, lower alkyl, lower alkoxy, halo, or trifluoromethyl and can be at any available position on the phenyl ring; and
Y² is selected from lower alkyl, lower alkoxy; halo; lower haloalkyl having 1 through 4 carbon atoms and 1 to 3 of the same or different halo atoms; lower haloalkoxy having 1 through 4 carbon atoms and 1 through 3 of the same or different halo atoms; or lower haloalkylthio having 1 through 4 carbon atoms and 1 through 3 of the same or different halo atoms; with the proviso that when Y² is halo then R¹³, R¹¹ and R¹² are not all hydrogen and the further proviso that when Y² is other than trifluoromethyl and X² is other than hydrogen, and R¹¹ is hydrogen and R¹² is hydrogen then R¹³ is methyl, ethyl, propyl, 2-halophenyl, 2-lower alkylphenyl or 4-fluorophenyl.

Preferred compounds to be used as nematicides according to the present invention, are the compounds described as preferred compounds in the description of patent US4568376 and the compounds further specified in the claims of patent US4568376.

Particularly suitable compounds to be used as nematicides are compounds of the general Formula XIV as defined hereunder. Accordingly, the present invention provides the use of a compound as a nematicide, wherein the compound is of the general Formula XIV, or a stereoisomer, tautomer, racemic, prodrug, metabolite thereof, or a salt, ester and/or solvate thereof, wherein
R¹¹ and R¹² are independently from each other selected from hydrogen or lower alkyl having 1 to 4 carbon atoms;
R²⁰ is selected from lower alkyl having 1 to 4 carbon atoms, phenyl or substituted aryl with one to three independently selected substituents from the group of lower alkyl, lower alkoxy, halogen or nitro;
X² is selected from hydrogen, lower alkyl or halogen and can be at any available position on the phenyl ring and Y² is selected from lower alkyl, lower alkoxy; halo; lower haloalkyl having 1 through 4 carbon atoms and 1 to 3 of the same or different halo atoms; lower haloalkoxy having 1 through 4 carbon atoms and 1 through 3 of the same or different halo atoms; or lower haloalkylthio having 1 through 4 carbon atoms and 1 through 3 of the same or different halo atoms.

One specific example of a compound of the general Formula XIV is a compound of the Formula XV, which is (RS)-5-methylamino-2-phenyl-4-(a,a,a-trifluoro-m-tolyl)furan-3(2H)-one (flurtamone) with CAS number 96525-23-4. Accordingly, the present invention provides the use of a compound as a nematicide, wherein the compound is of the Formula XV, or a stereoisomer, tautomer, racemic, prodrug, metabolite thereof, or a salt, ester and/or solvate thereof.

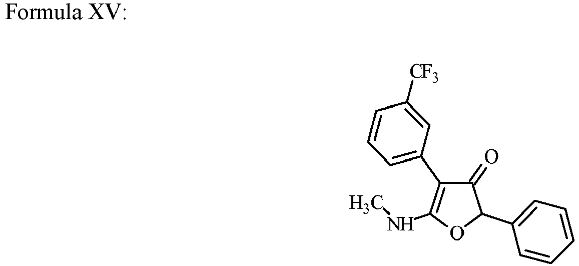

(RS)-5-methylamino-2-phenyl-4-(a,a,a-trifluoro-m-tolyl)furan-3(2H)-one has been previously described as an herbicide (see e-Pesticide Manual, 12th edition, version 2.2, editor CDS Tomlin, ISBN 1-901396-31-2 entry 382).

According to another embodiment of the invention, the compound to be used as a nematicide is a compound of the Formula XVI, which is 2-(2'-furyl)benzimidazole (fuberidazole) with CAS number 3878-19-1. Accordingly the present invention provides the use of a compound as a nematicide, wherein the compound is of the Formula XVI, or a stereoisomer, tautomer, racemic, prodrug, metabolite thereof, or a salt and/or solvate thereof,

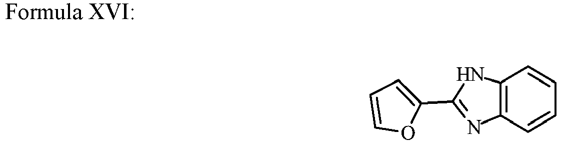

2-(2'-furyl)benzimidazole has been previously described as a fungicide (see e-Pesticide Manual, 12th edition, version 2.2, editor CDS Tomlin, ISBN 1-901396-31-2, entry 397).

According to another embodiment of the invention, the compounds to be used as nematicides have been described in patent US4814349, which document text is incorporated herein by reference and which compounds are herein represented as Formula XVII. These compounds are prepared according to the methods described in patent US4814349, which methods are incorporated herein by reference as if fully set forth. Salts of these compounds are described in patent US4814349.

Accordingly, a further first aspect of the invention is the use of a compound as a nematicide, wherein said compound is a dibenzoylhydrazine of the general Formula XVII, or a stereoisomer, tautomer, racemic, prodrug, metabolite thereof, or a salt and/or solvate thereof, 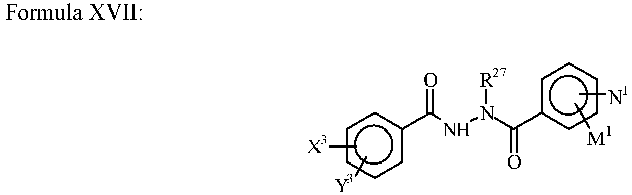 wherein
R²⁷ is selected from C₂-C₆ alkyl or C₅-C₆ cycloalkyl;
X³, Y³ , M¹ and N¹ are each independently selected from H, C₁-C₃ alkyl, C₁-C₃ alkoxy, C₁-C₃ alkylthio, C₁-C₃ alkylsulfinyl, C₁-C₃ alkylsulfonyl, cyano, F, Cl, Br, I, nitro, CF₃, R²¹CF₂Z²-, 1,1-difluoro-2,2-dichloroethoxy, R²²CO or R²³R²⁴N- and when taken together X³ and Y³ may form a ring wherein X³Y³ are represented by the structure: -OCH₂O-, -OCF₂O- or 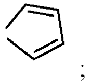
Z² is selected from S(O)ₘ or O; R²¹ is H, F, CHF₂, CHFCl or CF₃ ; R²² is C₁-C₃ alkyl, C₁-C₃ alkoxy or R²³R²⁴N; R²³ is H or C₁-C₃ alkyl; R²⁴ is H, C₁-C₃ alkyl or R²⁵CO; R²⁵ is H or C₁-C₃ alkyl and m is 0, 1 or 2; with the provisos that at least one of X³, Y³, M¹ or N¹ is selected from a substituent other than hydrogen and when M¹ is para nitro, at least one other of X³, Y³ or N¹ must be a substituent other than hydrogen.

Preferred compounds to be used as nematicides according to the present invention, are the compounds described as preferred compounds in the description of patent US4814349 and the compounds further specified in the claims of patent US4814349.

Particularly suitable compounds to be used as nematicides are compounds of the general Formula XVIII. Accordingly, the present invention provides the use of a compound as a nematicide, wherein the compound is of the general Formula XVIII, or a stereoisomer, tautomer, racemic, prodrug, metabolite thereof, or a salt and/or solvate thereof, 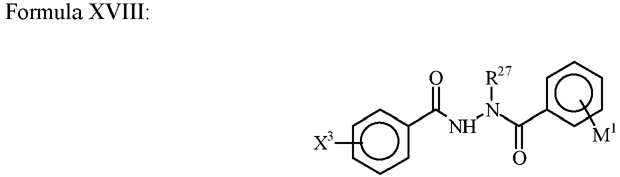 wherein X³ and M¹ are each independently selected from H, C₁-C₃ alkyl, C₁-C₃ alkoxy, C₁-C₃ alkylthio, C₁-C₃ alkylsulfinyl, C₁-C₃ alkylsulfonyl, cyano, F, Cl, Br, I, nitro, CF₃; R²⁷ is selected from hydrogen, C₂-C₆ alkyl or C₅-C₆ cycloalkyl.

One specific example of a compound of the general Formula XVII or XVIII is a compound of the Formula XIX, which is N-tert-butyl-N'-(4-chlorobenzoyl)benzohydrazide (halofenozide) with CAS number 112226-61-6. Accordingly the present invention provides the use of a compound as a nematicide, wherein the compound is of the Formula XIX, or a stereoisomer, tautomer, racemic, prodrug, metabolite thereof, or a salt and/or solvate thereof,

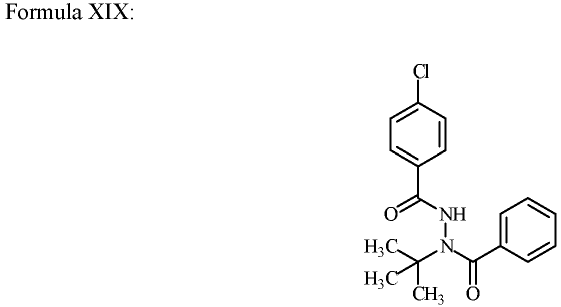

N-tert-butyl-N'-(4-chlorobenzoyl)benzohydrazide has been previously described as an insecticide (see e-Pesticide Manual, 12th edition, version 2.2, editor CDS Tomlin, ISBN 1-901396-31-2, entry 413).

According to another embodiment of the invention, the compounds to be used as nematicides have been described in patent US4845106, which document text is incorporated herein by reference and which compounds are herein represented as Formula XX. These compounds are prepared according to the methods described in patent US4845106, which methods are incorporated herein by reference as if fully set forth. Salts, esters and acid addition and/or base-addition salts of these compounds are described in patent US4845106.

Accordingly, a further first aspect of the invention is the use of a compound as a nematicide, wherein said compound is a heterocyclic compounds of the general Formula XX, or a stereoisomer, tautomer, racemic, prodrug, metabolite thereof, or a salt, ester and/or solvate thereof, 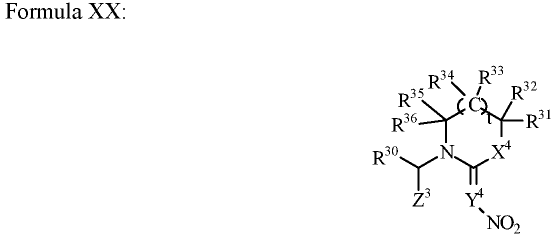 wherein
t represents 0 or 1,
R³¹, R³², R³⁵ and R³⁶ are each independently selected from a hydrogen atom or an alkyl group,
R³³ and R³⁴ are each independently selected from a hydrogen atom, a hydroxy group or an alkyl group,
wherein t represents 1, then R³² may form a single bond, together with R³⁵,
X⁴ represents a sulfur atom, an oxygen atom, 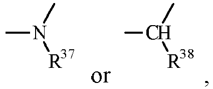 wherein
R³⁷ is selected from a hydrogen atom, a halogen atom, a hydroxy group, an alkoxy group, a benzyloxy group, an alkyl group which may be substituted by at least one substituent selected from the group consisting of alkoxy groups, alkylthio groups, a cyano group, halogen atoms, dialkylamino groups and trialkylsilyl, an alkenyl group which may be substituted by a halogen atom, an alkynyl group which may be substituted by a halogen atom, a phenyl group which may be substituted by an alkyl group and/or a halogen atom, a benzyl group which may be substituted by at least one substituent selected from the group consisting of a methyl group, a methoxy group, halogen atoms, halomethyl groups, halomethoxy groups and a nitro group, a formyl group, an alkenylcarbonyl group, an alkylcarbonyl group which may be substituted by at least one substituent selected from the group consisting of alkoxy groups, a phenoxy group, alkylthio groups, and halogen atoms, a benzoyl group which may be substituted by at least one substituent selected from the group consisting of halogen atoms, alkyl groups, halomethyl groups, alkoxy groups, haloalkoxy groups and a nitro group, a benzylcarbonyl group which may be substituted by an alkyl group and/or a halogen atom, an alkoxycarbonyl group which may be substituted by a halogen atom, an alkylthiocarbonyl group, a phenoxycarbonyl group which may be substituted by at least one substituent selected from the group consisting of methyl group, a methoxy group, halomethyl group, halomethoxy groups, halogen atoms and a nitro group, a phenylthiocarbonyl group which may be substituted by a halogen atom and/or an alkyl group, a benzyloxycarbonyl group, a monoalkyl- or dialkyl-aminocarbonyl group, a phenylaminocarbonyl group which may be substituted by at least one substituent selected from the group consisting of alkyl groups, haloalkyl groups and halogen atoms, a benzoylaminocarbonyl group which may be substituted by an alkyl group and/or a halogen atom, a phenylsulfonylamminocarbonyl group which may be substituted by an alkyl group and/or a halogen atom, a phenylthio group which may be substituted by an alkyl group and/or a halogen atom, an alkylsulfonyl group which may be substituted by a halogen atom, a phenylsulfonyl group which may be substituted by at least one substituent selected from the group consisting of alkyl groups, halogen atoms and a nitro group, an alkylcarbonylmethyl group, a phenacyl group which may be substituted by a halogen atom and/or an alkyl group, an organophosphono group, an organothionophosphono group, -CH₂-W¹ or -CO-W¹, wherein
W¹ represents a 5 to 6 membered heterocyclic group, containing at least one hetero atom selected from the group consisting of an oxygen atom, a sulfur atom and a nitrogen atom, which may be substituted by at least one substituent selected from the group consisting of halogen atoms, alkyl groups and haloalkyl groups,
R³⁸ is selected from a hydrogen atom, an alkyl group, an aryl group or a benzyl group,
Y⁴ represents a nitrogen atom or 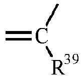 wherein
R³⁹ is selected from a hydrogen atom, a halogen atom, a hydroxy group, an alkoxy group, a benzyloxy group, an alkyl group which may be substituted by at least one substituent selected from the group consisting of halogen atoms, a hydroxy group, alkoxy groups, alkylthio groups, a cyano group, mono- or dialkylamino groups, alkylcarbonyl groups, alkoxycarbonyl groups and phenoxycarbonyl groups, an alkenyl group which may be substituted by a halogen atom, an alkynyl group, a phenyl group which may be substituted by an alkyl group and/or a halogen atom, an alkylcarbonyl group which may be substituted by a halogen atom, an alkenyl-carbonyl group, a benzoyl group which may be substituted by at least one substituent selected from the group consisting of halogen atoms, alkyl groups and alkoxy groups, an alkoxycarbonyl group which may be substituted by a halogen atom, an alkylthiocarbonyl group, a phenoxycarbonyl group which may be substituted by at least one substituent selected from the group consisting of halogen atoms, alkyl groups, alkoxy groups and a nitro group, a phenylthiocarbonyl group which may be substituted by an alkyl group and/or a halogen atom, a phenylthiocarbonyl group which may be substituted by an alkyl group and/or a halogen atom, a benzyloxycarbonyl group, a enzoylaminocarbonyl group which may be substituted by an alkyl group and/or a halogen atom, a phenylsulfonylaminocarbonyl group which may be substituted by an alkyl group and/or a halogen atom, an alkylsulfonylaminocarbonyl group, an alkylthio group, an alkylsulfonyl group which may be substituted by a halogen atom, a phenylthio group which may be substituted by an alkyl group and/or a halogen atom, a phenylsulfonyl group which may be substituted by an alkyl group and/or a halogen atom,
in addition, R³⁹ may form a bis-form of the Formula XX, via a methylene group,
R³⁰ is selected from a hydrogen atom or an alkyl group, and
Z³ represents a 5 to 6 membered heterocyclic group containing at least one hetero atom selected from the group consisting of an oxygen atom, a sulfur atom and a nitrogen atom, which may be substituted by at least one substituent selected from the group consisting of halogen atoms, alkyl groups, haloalkyl groups, a nitro group, a cyano group, alkoxy groups, alkylthio groups, alkylsulfinyl groups, alkylsulfonyl groups, alkenyl groups, haloalkoxy group, haloalkylthio groups, haloalkenyl groups, acylamino groups, haloacylamino groups, alkoxycarbonyl groups, a thiocyanato group, alkynyl groups, an amino group, alkylamino groups, dialkylamino groups, a carboxy group, a hydroxy group, a mercapto group, cycloalkyl groups, an oxo group, a thioxo group, haloalkenylthio groups, alkoxyalkyl groups, alkoxycarbonylamino groups, a carbamoyl group, acyl groups, alkylaminocarbonyl groups, dialkylaminocarbonyl groups, a formyl group, aryl groups optionally substituted by a substituent selected from the group consisting of halogen atoms, alkyl groups, halogenoalkyl groups, alkoxy groups, a nitro group and a cyano group, aryloxy groups optionally substituted by the substituent as that shown for the above aryl groups, and aralkyl groups optionally substituted by the same substituent as that shown for the aryl groups,
provided that where R³¹, R³², R³³, R³⁴, R³⁵ and R³⁶ represent hydrogen atoms simultaneously,
X⁴ represents 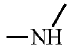
and Y⁴ represents 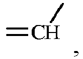
then Z³ must not stand for the pyridyl group.

Preferred compounds to be used as nematicides according to the present invention, are the compounds described as preferred compounds in the description of patent US4845106 and the compounds further specified in the claims of patent US4845106.

Particularly suitable compounds to be used as nematicides are compounds of the general Formula XXI. Accordingly, the present invention provides the use of a compound as a nematicide, wherein the compound is of the general Formula XXI, or a stereoisomer, tautomer, racemic, prodrug, metabolite thereof, or a salt, ester and/or solvate thereof, 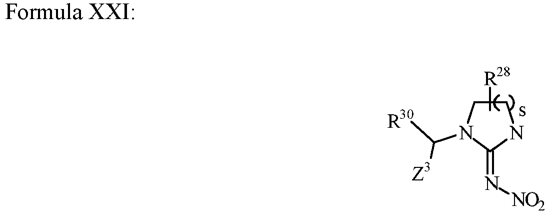 wherein
s represents 1 or 2,
Z³ is a 6-membered nitrogen containing heterocyclic ring, which may be substituted by at least one substituent selected from the group consisting of halogen atoms, alkyl groups, haloalkyl groups, an nitro group, a cyano group or alkoxy groups,
R³⁰ and R²⁸ are each independently selected from a hydrogen atom or alkyl or a hydroxy group.

One specific example of a compound of the general Formula XX or XXI is a compound of the Formula XXII, which is 1-(6-chloro-3-pyridylmethyl)-N-nitroimidazolidin-2-ylideneamine (imidacloprid) with CAS number 138261-41-3.

Accordingly, the present invention provides the use of a compound as a nematicide, wherein the compound is of the Formula XXII, or a stereoisomer, tautomer, racemic, prodrug, metabolite thereof, or a salt, ester and/or solvate thereof,

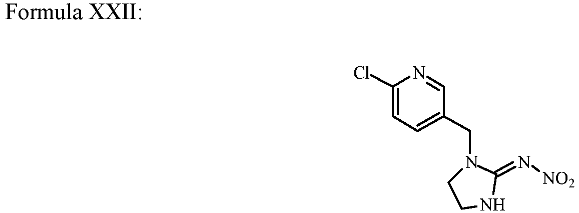

1-(6-chloro-3-pyridylmethyl)-N-nitroimidazolidin-2-ylideneamine has been previously described as an insecticide (see e-Pesticide Manual, 12th edition, version 2.2, editor CDS Tomlin, ISBN 1-901396-31-2, entry 446).

According to another embodiment of the invention, the compounds to be used as nematicides have been described in patent US3755350, which document text is incorporated herein by reference and which compounds are herein represented as Formula XXIII. These compounds are prepared according to the methods described in patent US3755350, which methods are incorporated herein by reference as if fully set forth. Salts of these compounds are described in patent US3755350.

Accordingly, a further first aspect of the invention is the use of a compound as a nematicide, wherein said compound is a hydantoin derivative of the general Formula XXIII, or a stereoisomer, tautomer, racemic, prodrug, metabolite thereof, or a salt and/or solvate thereof, 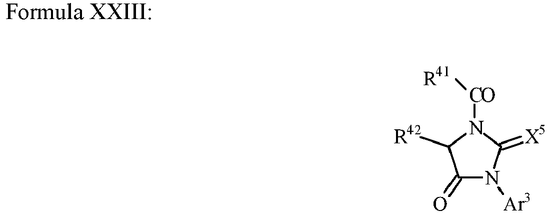 wherein
Ar³ represents a phenyl radical or a phenyl radical carrying one to five substituents, which may be the same or different, selected from halogen atoms (preferably chlorine), alkyl and alkoxy radicals containing one to four carbon atoms and the trifluoromethyl radical,
R⁴¹ is selected from an alkoxy radical containing one to four carbon atoms or a grouping -NR⁴³R⁴⁴, wherein R⁴³ and R⁴⁴ are the same or different and each represents a hydrogen atom, an alkyl radical containing one to four carbon atoms or an alkenyl radical containing two to four carbon atoms,
R⁴² is selected from a hydrogen atom or an alkyl radical containing one to four carbon atoms, and X⁵ represents an oxygen or sulphur atom.

Preferred compounds to be used as nematicides according to the present invention, are the compounds described as preferred compounds in the description of patent US3755350 and the compounds further specified in the claims of patent US3755350.

Particularly suitable compounds to be used as nematicides are compounds of the general Formula XXIV. Accordingly, the present invention provides the use of a compound as a nematicide, wherein the compound is of the general Formula XXIV, or a stereoisomer, tautomer, racemic, prodrug, metabolite thereof, or a salt and/or solvate thereof, 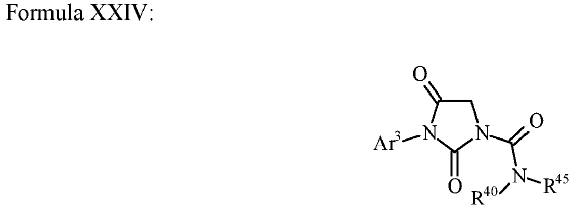 wherein
Ar³ represents a phenyl radical or a phenyl radical carrying one to five substituents, which may be the same or different, selected from halogen atoms (preferably chlorine),
R⁴⁰ and R⁴⁵ are the same or different and each independently represents a hydrogen atom, or C₁-C₄ alkyl radical.

One specific example of a compound of the general Formula XXIII or XXIV is a compound of the Formula XXV, which is 3-(3,5-dichlorophenyl)-N-isopropyl-2,4-dioxoimidazolidine-1-carboxamide (iprodione) with CAS number 36734-19-7. Accordingly the present invention provides the use of a compound as a nematicide, wherein the compound is of the Formula XXV, or a stereoisomer, tautomer, racemic, prodrug, metabolite thereof, or a salt and/or solvate thereof,

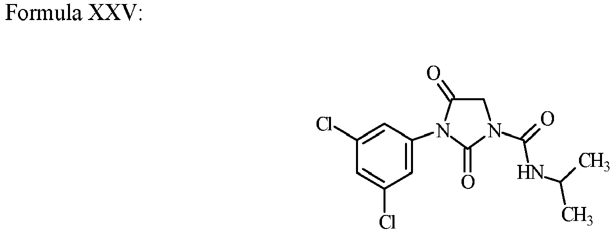

3-(3,5-dichlorophenyl)-N-isopropyl-2,4-dioxoimidazolidine-1-carboxamide has been previously described as a fungicide (see e-Pesticide Manual, 12th edition, version 2.2, editor CDS Tomlin, ISBN 1-901396-31-2, entry 458).

According to another embodiment of the invention, the compounds to be used as a nematicide is a compound of the Formula XXVI, which is 5-cyclopropyl-1,2-oxazol-4-yl a,a,a-trifluoro-2-mesyl-p-tolyl ketone (isoxaflutole) with CAS number 141112-29-0. Accordingly, the present invention provides the use of a compound as a nematicide, wherein the compound is of the Formula XXVI, or a stereoisomer, tautomer, racemic, prodrug, metabolite thereof, or a salt and/or solvate thereof,

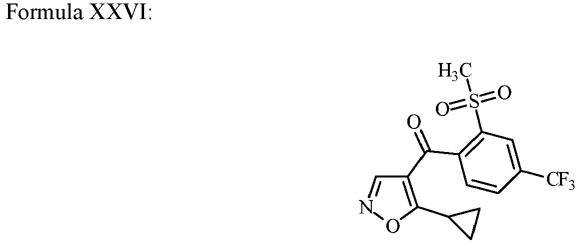

These compounds may be prepared according to the methods described in patent EP0527036, which methods are incorporated herein by reference as if fully set forth.

5-cyclopropyl-1,2-oxazol-4-yl a,a,a-trifluoro-2-mesyl-p-tolyl ketone has been previously described as a herbicide (see e-Pesticide Manual, 12th edition, version 2.2, editor CDS Tomlin, ISBN 1-901396-31-2, entry 467).

According to another embodiment of the invention, the compounds to be used as nematicides have been described in patent US4021461, which document text is incorporated herein by reference and which compounds are herein represented as Formula XXVII. These compounds are prepared according to the methods described in patent US4021461, which methods are incorporated herein by reference as if fully set forth. Salts of these compounds are described in patent US4021461.

Accordingly, a further first aspect of the invention is the use of a compound as a nematicide, wherein said compound is a di-olefinic compound of the general Formula XXVII, or a stereoisomer, tautomer, racemic, prodrug, metabolite thereof, or a salt and/or solvate thereof, 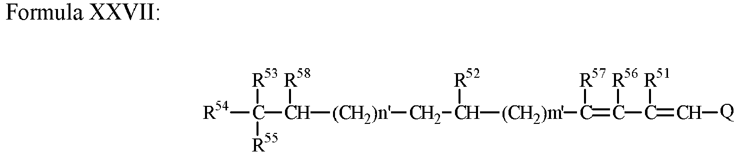 wherein,
each of m' and n' is 0 or the positive integer one, two or three;
each of R⁵¹ and R⁵² is lower alkyl;
R⁵⁴ is alkyl;
each of R⁵³, R⁵⁵, R⁵⁶, R⁵⁷ and R⁵⁸ is independently selected from hydrogen or lower alkyl; and
Q is one of the groups: 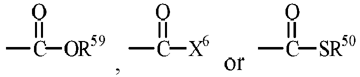 wherein,
X⁶ is bromo, chloro or fluoro,
R⁵⁹ is selected from hydrogen, lower alkyl, lower alkenyl, lower alkynyl, cycloalkyl, aryl, aralkyl, lower alkylthioalkyl, lower alkoxyalkyl, halogen substituted lower alkyl, heterocyclo, or a metal cation; and
R⁵⁰ is selected from hydrogen, lower alkyl, lower alkenyl, lower alkynyl, cycloalkyl, aryl or aralkyl.

Preferred compounds to be used as nematicides according to the present invention, are the compounds described as preferred compounds in the description of patent US4021461 and the compounds further specified in the claims of patent US4021461.

Particularly suitable compounds to be used as nematicides are compounds of the general Formula XXVII as defined hereunder. Accordingly, the present invention provides the use of a compound as a nematicide, wherein the compound is of the general Formula XXVII, or a stereoisomer, tautomer, racemic, prodrug, metabolite thereof, or a salt and/or solvate thereof, wherein
m is one,
n is one,
R⁵¹, R⁵² and R⁵⁴ are lower alkyl,
R⁵⁶ R⁵⁷ and R⁵⁸ are hydrogen,
R⁵³ and R⁵⁵ are hydrogen or lower alkyl,
Q is 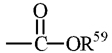
wherein R⁵⁹ is selected from hydrogen, lower alkyl, lower alkenyl or lower alkynyl.

One specific example of a compound of the general Formula XXVII is a compound of the Formula XXVIII, which is prop-2-ynyl (E,E)-(RS)-3,7,11-trimethyldodeca-2,4-dienoate (kinoprene) with CAS number 42588-37-4. Accordingly the present invention provides the use of a compound as a nematicide, wherein the compound is of the Formula XXVIII, or a stereoisomer, tautomer, racemic, prodrug, metabolite thereof, or a salt and/or solvate thereof,

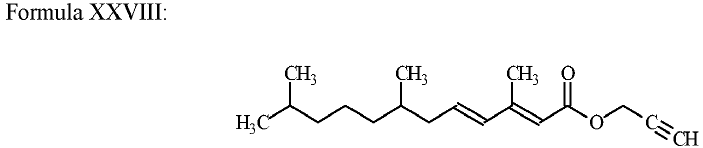

prop-2-ynyl (E,E)-(RS)-3,7,11-trimethyldodeca-2,4-dienoate has been previously described as an insecticide (see e-Pesticide Manual, 12th edition, version 2.2, editor CDS Tomlin, ISBN 1-901396-31-2, entry 471).

According to another embodiment of the invention, the compounds to be used as a nematicide is a compound of the Formula XXIX, which is (E)-N-(6-chloro-3-pyridylmethyl)-N-ethyl-N'-methyl-2-nitrovinylidenediamine (nitenpyram) with CAS number 120738-89-8. Accordingly the present invention provides the use of a compound as a nematicide, wherein the compound is of the Formula XXIX, or a stereoisomer, tautomer, racemic, prodrug, metabolite thereof, or a salt and/or solvate thereof,

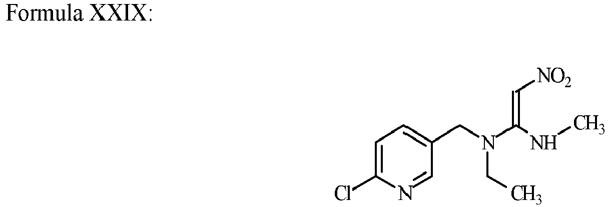

This compound may be prepared according to the methods described in patent EP0375612, which methods are incorporated herein by reference as if fully set forth. Salts of such a compound are described in patent EP0375612.

(E)-N-(6-chloro-3-pyridylmethyl)-N-ethyl-N'-methyl-2-nitrovinylidenediamine has been previously described as an insecticide (see e-Pesticide Manual, 12th edition, version 2.2, editor CDS Tomlin, ISBN 1-901396-31-2, entry 562).

According to another embodiment of the invention, the compounds to be used as nematicides have been described in patent US2485681, which document text is incorporated herein by reference and which compounds are herein represented as Formula XXX._These compounds are prepared according to the methods described in patent US2485681, which methods are incorporated herein by reference as if fully set forth. Salts, esters and acid addition and/or base-addition salts of these compounds are described in patent US2485681.

Accordingly, a further first aspect of the invention is the use of a compound as a nematicide, wherein said compound is of the general Formula XXX, or a stereoisomer, tautomer, racemic, prodrug, metabolite thereof, or a salt, ester and/or solvate thereof. 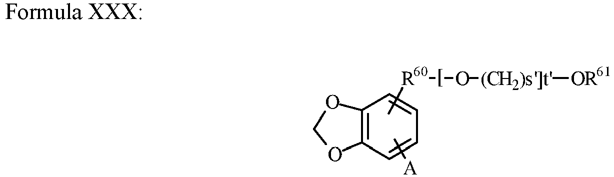 wherein
A is hydrogen or an aliphatic radical on the benzene nucleus, such as the propyl radical or higher alkyl radicals,
R⁶⁰ is an intermediate aliphatic hydrocarbon radical, e.g., -CH₂-, etc.,
R⁶¹ is a hydrocarbon radical which may be alkyl, aryl, or a heterocyclic or carboxylic group,
s' is two or more and t' is one in the case of a monoglycol ether and more than one in the case of a polyglycol ether radical

Preferred compounds to be used as nematicides according to the present invention, are the compounds described as preferred compounds in the description of patent US2485681 and the compounds further specified in the claims of patent US2485681.

Particularly suitable compounds to be used as nematicides are compounds of the general Formula XXXI. Accordingly, the present invention provides the use of a compound as a nematicide, wherein the compound is of the general Formula XXXI, or a stereoisomer, tautomer, racemic, prodrug, metabolite thereof, or a salt, ester and/or solvate thereof, 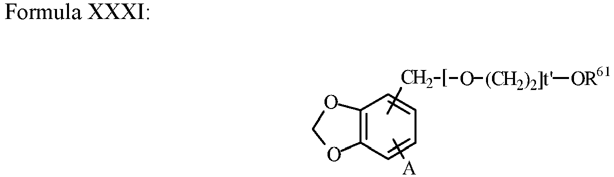 wherein
A is hydrogen or an aliphatic radical on the benzene nucleus, such as the propyl radical or higher alkyl radicals and
R⁶¹ is a hydrocarbon radical which may be selected from alkyl, aryl, or a heterocyclic or carboxylic group,and
t' is one in the case of a monoglycol ether and more than one in the case of a polyglycol ether radical

One specific example of a compound of the general Formula XXX or XXXI is a compound of the Formula XXXII, which is 5-[2-(2-butoxyethoxy)ethoxymethyl]-6-propyl-1,3-benzodioxole; 2-(2-butoxyethoxy)ethyl 6-propylpiperonyl ether (piperonyl butoxide) with CAS number 51-03-6. Accordingly the present invention provides the use of a compound as a nematicide, wherein the compound is of the Formula XXXII, or a stereoisomer, tautomer, racemic, prodrug, metabolite thereof, or a salt, ester and/or solvate thereof,

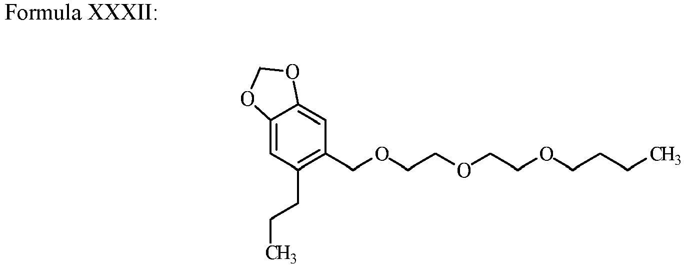

5-[2-(2-butoxyethoxy)ethoxymethyl]-6-propyl-1,3-benzodioxole; 2-(2-butoxyethoxy)ethyl 6-propylpiperonyl ether has been previously described as an insecticide (see e-Pesticide Manual, 12th edition, version 2.2, editor CDS Tomlin, ISBN 1-901396-31-2, entry 625).

According to another embodiment of the invention, the compound to be used as nematicides is a compound of the Formula XXXIII, which is (4-ethoxyphenyl)[3-(4-fluoro-3-phenoxyphenyl)propyl](dimethyl)silane (silafluofen) with CAS number 105024-66-6. Accordingly the present invention provides the use of a compound as a nematicide, wherein the compound is of the Formula XXXIII, or a stereoisomer, tautomer, racemic, prodrug, metabolite thereof, or a salt and/or solvate thereof,

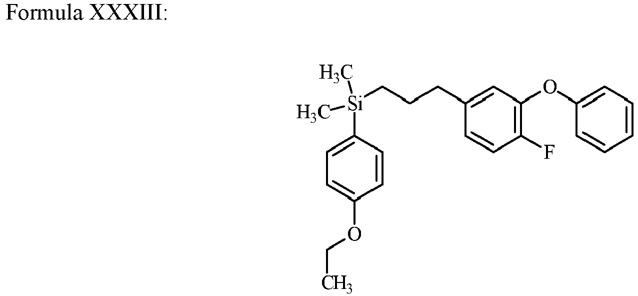

This compound may be prepared according to the methods described in patent EP224024, which methods are incorporated herein by reference as if fully set forth. (4-ethoxyphenyl)[3-(4-fluoro-3-phenoxyphenyl)propyl](dimethyl)silane has been previously described as an insecticide (see e-Pesticide Manual, 12th edition, version 2.2, editor CDS Tomlin, ISBN 1-901396-31-2, entry 696).

According to another embodiment of the invention, the compounds to be used as nematicides have been described in patent US4243819, which document text is incorporated herein by reference and which compounds are herein represented as Formula XXXIV. These compounds are prepared according to the methods described in patent US4243819, which methods are incorporated herein by reference as if fully set forth. Salts, esters and acid addition and/or base-addition salts of these compounds are described in patent US4243819.

Accordingly, a further first aspect of the invention is the use of a compound as a nematicide, wherein said compound is an ester or thioester of amino acids of the general Formula XXXIV, or a stereoisomer, tautomer, racemic, prodrug, metabolite thereof, or a salt, ester and/or solvate thereof, 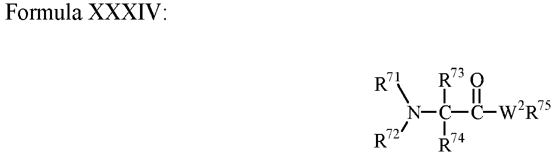 wherein,
W² is oxygen or sulfur;
R⁷¹ is selected from cycloalkyl, cycloalkenyl, cycloalkenyl substituted with halo or lower alkyl, or the group 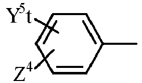 wherein
t is zero, one, two, three or four;
Y⁵ is selected from hydrogen, lower alkyl, lower haloalkyl, lower alkoxy, lower alkylthio, lower alkylcarbonyl, lower alkoxycarbonyl, lower aryloxy, halogen, cyano, nitro, and lower haloalkylthio; and
Z⁴ is selected from the values of Y⁵, cycloalkyl, and lower haloalkoxy; or Y⁵ and Z⁴ form a methylenedioxy group;
R⁷² is selected from hydrogen, lower alkyl, lower haloalkylcarbonyl, or formyl;
R⁷³ is selected from lower alkyl of 2 to 5 carbon atoms, lower alkenyl of 2 to 5 carbon atoms, lower haloalkyl of 1 to 4 carbon atoms, lower haloalkenyl of 2 to 4 carbon atoms, or lower cycloalkyl of 3 or 4 carbon atoms;
R⁷⁴ is hydrogen or fluoro; and
R⁷⁵ is a group selected from: 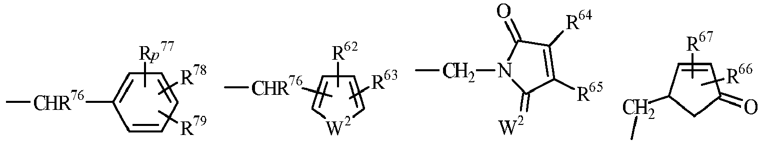 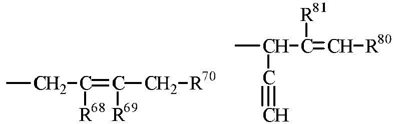 wherein,
p is zero, one, two or three;
R⁷⁶ is selected from hydrogen, cyano, methyl, trifluoromethyl, ethynyl, or 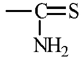
R⁷⁷ is selected from halogen, lower alkyl, lower haloalkyl, lower alkoxy, lower haloalkoxy, lower alkylthio, lower alkenyl, or lower haloalkenyl;
R⁷⁸ is selected from hydrogen or together with R⁷⁷ forms a lower alkylenedioxy bridge across adjacent ring carbon atoms;
R⁷⁹ is selected from hydrogen, lower alkenyloxy, lower alkynyl, lower alkynyloxy, lower haloalkynyl, lower alkylcarbonyl, arylcarbonyl, substituted arylcarbonyl, aryloxy, substituted aryloxy, arylthio, substituted arylthio, aralkyl, substituted aralkyl, cycloalkyl, cycloalkalkyl, lower acyloxy, aryloxycarbonyl, lower alkoxycarbonyl, or lower haloalkenyloxy;
R⁶² is hydrogen or lower alkyl;
R⁶³ is selected from lower alkenyl, lower alkynyl, or aralkyl;
R⁶⁴ and R⁶⁵ taken together form a lower alkylene or a lower alkenylene bridge;
R⁶⁶ is selected from hydrogen, lower alkyl, lower alkenyl, lower alkynyl, or aralkyl;
R⁶⁷ is hydrogen or lower alkyl;
R⁶⁸ is selected from hydrogen, chloro, fluoro, or methyl;
R⁶⁹ is selected from hydrogen, chloro, fluoro, methyl, or taken together with R⁶⁸ forms a carbon-carbon bond;
R⁷⁰ is phenyl or phenyloxy;
R⁸⁰ is selected from hydrogen, halogen, methyl, or ethyl; and
R⁸¹ is selected from allyl, propargyl, 3-butenyl, 3-butynyl, phenyl, or benzyl; and the salts thereof of strong inorganic acids or organic acids.

Preferred compounds to be used as nematicides according to the present invention, are the compounds described as preferred compounds in the description of patent US4243819 and the compounds further specified in the claims of patent US4243819.

Particularly suitable compounds to be used as nematicides are compounds of the general Formula XXXV. Accordingly, the present invention provides the use of a compound as a nematicide, wherein the compound is of the general Formula XXXV, or a stereoisomer, tautomer, racemic, prodrug, metabolite thereof, or a salt, ester and/or solvate thereof, 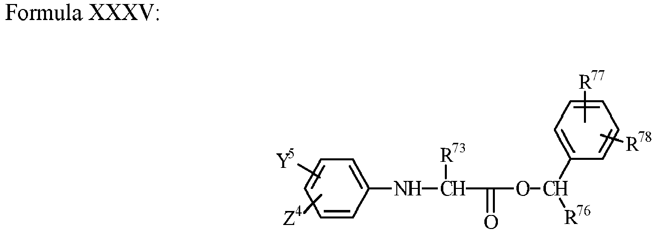 wherein,
R⁷³ is lower C₂-C₆ alky;
Y⁵ and Z⁴ are each independently selected from hydrogen, lower alkyl, lower haloalkyl, lower alkoxy, lower alkylthio, lower alkylcarbonyl, lower alkoxycarbonyl, lower aryloxy, halogen, cyano, nitro, or lower haloalkylthio;
R⁷⁶ is selected from hydrogen, cyano, methyl, trifluoromethyl, or ethynyl;
R⁷⁷ is selected from hydrogen, halogen, lower alkyl, lower haloalkyl, lower alkoxy, or lower haloalkoxy;
R⁷⁸ is selected from hydrogen, lower alkenyloxy, lower alkynyl, lower alkynyloxy, substituted arylcarbonyl, aryloxy, or substituted aryloxy.

One specific example of a compound of the general Formula XXXIV or XXXV is a compound of the Formula XXXVI, which is (RS)-α-cyano-3-phenoxybenzyl N-(2-chloro-a,a,a-trifluoro-p-tolyl)-D-valinate (Tau-fluvalinate) with CAS number 102851-06-9. Accordingly the present invention provides the use of a compound as a nematicide, wherein the compound is of the Formula XXXVI, or a stereoisomer, tautomer, racemic, prodrug, metabolite thereof, or a salt, ester and/or solvate thereof,

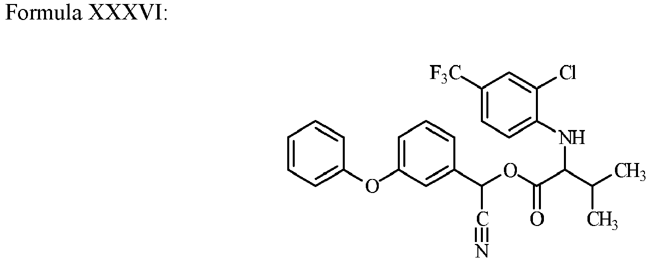

(RS)-α-cyano-3-phenoxybenzyl N-(2-chloro-a,a,a-trifluoro-p-tolyl)-D-valinate has been previously described as an insecticide (see e-Pesticide Manual, 12th edition, version 2.2, editor CDS Tomlin, ISBN 1-901396-31-2, entry 388).

According to another embodiment of the invention, the compounds to be used as nematicides have been described in patent US4950338, which document text is incorporated herein by reference and which compounds are herein represented as Formula XXXVII. These compounds are prepared according to the methods described in patent US4950338, which methods are incorporated herein by reference as if fully set forth. Salts, esters and acid addition and/or base-addition salts of these compounds are described in patent US4950338.

Accordingly, a further first aspect of the invention is the use of a compound as a nematicide, wherein said compound is a pyrazole derivative of the general Formula XXXVII, or a stereoisomer, tautomer, racemic, prodrug, metabolite thereof, or a salt, ester and/or solvate thereof, 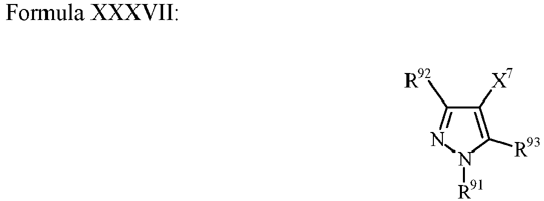 wherein R⁹¹ represents C₁-C₄ alkyl group, C₁-C₄ haloalkyl group, phenyl group or benzyl group; one of R⁹² and R⁹³ represents 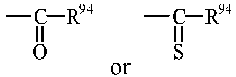 wherein R⁹⁴ represents 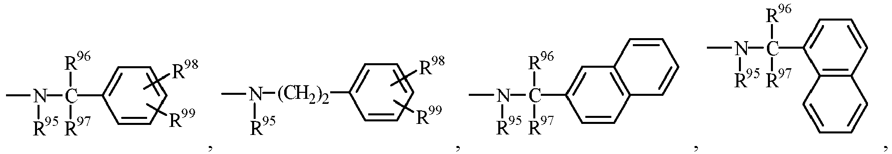 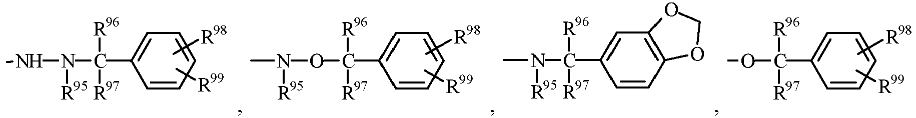 or 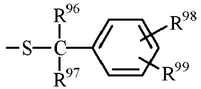 wherein
R⁹⁵, R⁹⁶ and R⁹⁷ represent respectively hydrogen atom, C₁-C₄ alkyl group or phenyl group,
R⁹⁸ and R⁹⁹ represent respectively hydrogen atom, halogen atom, C₁-C₈ alkyl group, C₃-C₅ alkenyl group, C₃-C₅ alkynyl group, C₃-C₆ cycloalkyl group, C₂-C₄ alkoxyalkyl group, C₁-C₄ alkoxy group, C₁-C₄ haloalkoxy group, nitro group, trifluoromethyl group, phenyl group, benzyl group, phenoxy group, benzyloxy group, amino group, C₁-C₄ alkylamino group, C₂-C₈ dialkylamino group, cyano group, carboxyl group, C₂-C₅ alkoxycarbonyl group, C₄-C₇ cycloalkoxycarbonyl group, C₃-C₉ alkoxyalkoxycarbonyl group, C₂-C₆ alkylaminocarbonyl group, C₃-C₁₁ dialkylaminocarbonyl group, piperidinocarbonyl group, morpholinocarbonyl group, trimethylsilyl group, C₁-C₄ alkylthio group, C₁-C₄ alkylsulfinyl group, or C₁-C₄ alkylsulfonyl group, the other of R⁹² and R⁹³ represents hydrogen atom, C₁-C₄ alkyl group, C₁-C₄ haloalkyl group, C₃-C₆ cycloalkyl group or phenyl group;
X⁷ represents hydrogen atom, halogen atom, C₁-C₄ alkyl group, nitro group, cyano group, C₁-C₅ alkylamino group, C₂-C₁₀ dialkylamino group and C₂-C₇ acylamino group.

Preferred compounds to be used as nematicides according to the present invention, are the compounds described as preferred compounds in the description of patent US4950338 and the compounds further specified in the claims of patent US4950338.

Particularly suitable compounds to be used as nematicides are compounds of the general Formula XXXVII as defined hereunder. Accordingly, the present invention provides the use of a compound as a nematicide, wherein the compound is of the general Formula XXXVII, or a stereoisomer, tautomer, racemic, prodrug, metabolite thereof, or a salt, ester and/or solvate thereof,
wherein R⁹¹ represents C₁-C₄ alkyl group; one of R⁹² and R⁹³ represents 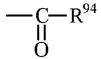 wherein R⁹⁴ represents 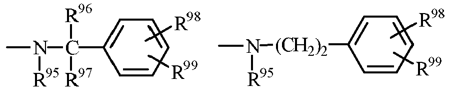 wherein
R⁹⁵, R⁹⁶ and R⁹⁷ represent respectively hydrogen atom, C₁-C₄alkyl group,
R⁹⁸ and R⁹⁹ represent respectively hydrogen atom, halogen atom, C₁-C₄ alkyl group, C₁-C₄ alkoxy group, nitro group, trifluoromethyl group, C₁-C₄ alkylamino group, cyano group, carboxyl group, the other of R2 and R3 represents hydrogen atom, C₁-C₄ alkyl group, C₁-C₄ haloalkyl group;
X⁷ represents hydrogen atom, halogen atom, C₁-C₄ alkyl group, nitro group, cyano group.

One specific example of a compound of the general Formula XXXVII is a compound of the Formula XXXVIII, which is N-(4-tert-butylbenzyl)-4-chloro-3-ethyl-1-methylpyrazole-5-carboxamide (tebufenpyrad) with CAS number 119168-77-3. Accordingly the present invention provides the use of a compound as a nematicide, wherein the compound is of the Formula XXXVIII, or a stereoisomer, tautomer, racemic, prodrug, metabolite thereof, or a salt, ester and/or solvate thereof,

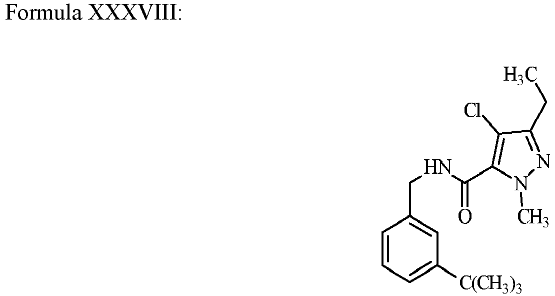

N-(4-tert-butylbenzyl)-4-chloro-3-ethyl-1-methylpyrazole-5-carboxamide has been previously described as acaricide (see e-Pesticide Manual, 12th edition, version 2.2, editor CDS Tomlin, ISBN 1-901396-31-2, entry 726).

According to another embodiment of the invention, the compounds to be used as nematicides have been described in patent EP0030142, which document text is incorporated herein by reference and which compounds are herein represented as Formula XXXIX. These compounds are prepared according to the methods described in patent EP0030142, which methods are incorporated herein by reference as if fully set forth. Salts, esters and acid addition and/or base-addition salts of these compounds are described in patent EP0030142.

Accordingly, a further first aspect of the invention is the use of a compound as a nematicide, wherein said compound is an urea or isourea of the general Formula XXXIX, or a stereoisomer, tautomer, racemic, prodrug, metabolite thereof, or a salt, ester and/or solvate thereof, 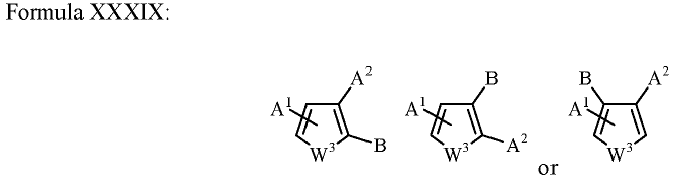 wherein
W³ is O or S;
A¹ is selected from H, Cl, Br, C₁-C₄ alkyl, OCH₃, NO₂ or CF₃;
A² is 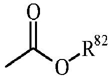 wherein
R⁸² is selected from C₁-C₆ alkyl; C₃-C₆ alkenyl; C₃-C₆ alkynyl; C₂-C₆ alkyl substituted with 1, 2 or 3 Cl, F or Br, or one of CN or CH₃;
B is 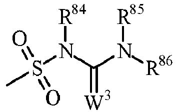
wherein R⁹⁴ is H or CH₃; W³ is O or S;
R⁸⁵ is H, CH₃ or CH₃O; with the proviso that either R⁸⁴ or R⁸⁵ must be H;
R⁸⁶ is 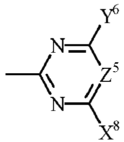
wherein Z⁵ is selected from N, CH or C-F;
X⁸ represents H, Cl, -CH₃, -OCH₃ or -OCH₂CH₃;
Y⁶ represents H; Cl; C₁-C₄ alkyl; C₁-C₄ alkyl substituted with -OCH₃, -OC₂H₅, -CN, -CO₂CH₃, -CO₂C₂H₅, 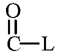 or 1-3 atoms of F, Cl, Br; C₃-C₄ alkenyl; -O-(CH₂)n'O-(C₁-C₃ alkyl) wherein n' is 2 or 3; 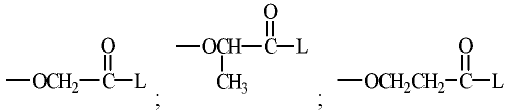
wherein L is selected from OH, -NH₂, -N(CH₃)-OCH₃, -NH(C₁-C₄ alkyl), -N(C₁-C₄ alkyl)₂ or C₁-C₆ alkoxy; SCN; or -N₃.

Preferred compounds to be used as nematicides according to the present invention, are the compounds described as preferred compounds in the description of patent EP0030142 and the compounds further specified in the claims of patent EP0030142.

Particularly suitable compounds to be used as nematicides are compounds of the general Formula XXXIX as defined hereunder. Accordingly, the present invention provides the use of a compound as a nematicide, wherein the compound is of the general Formula XXXIX, or a stereoisomer, tautomer, racemic, prodrug, metabolite thereof, or a salt, ester and/or solvate thereof, wherein
W³ is O or S;
A¹ is selected from H, Cl, Br, C₁-C₄ alkyl, OCH₃, NO₂, or CF₃;
A² is 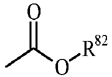
wherein R⁸² is selected from C₁-C₆ alkyl; C₃-C₆ alkenyl; C₃-C₆ alkynyl; C₂-C₆ alkyl substituted with 1, 2 or3 Cl, F or Br, or one of CN or CH₃
B is 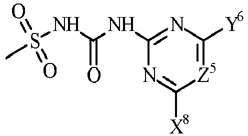
wherein Z⁵ is N, CH or C-F;
X⁸ represents H, Cl, -CH₃, -OCH₃ or -OCH₂CH₃;
Y⁶ represents H; Cl; C₁-C₄ alkyl; C₁-C₄ alkyl substituted with -OCH₃, -OC₂H₅, -CN, -CO₂CH₃, - CO₂C₂H₅.

One specific example of a compound of the general Formula XXXIX is a compound of the Formula XL, which is 3-(4-methoxy-6-methyl-1,3,5-triazin-2-ylcarbamoylsulfamoyl)thiophen-2-carboxylic acid (thifensulfuron-methyl) with CAS number 79277-67-1. Accordingly the present invention provides the use of a compound as a nematicide, wherein the compound is of the Formula XL, or a stereoisomer, tautomer, racemic, prodrug, metabolite thereof, or a salt, ester and/or solvate thereof,

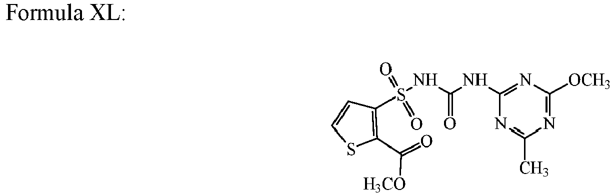

3-(4-methoxy-6-methyl-1,3,5-triazin-2-ylcarbamoylsulfamoyl)thiophen-2-carboxylic acid has been previously described as an herbicide (see e-Pesticide Manual, 12th edition, version 2.2, editor CDS Tomlin, ISBN 1-901396-31-2, entry 754).

According to another embodiment of the invention, the compounds to be used as nematicides are compounds of the general Formula XLI. These compounds are prepared according to the methods described in patents US2720480, GB1400710, US4997941, GB1587573 and DE 151404, which methods are incorporated herein by reference as if fully set forth. Salts, esters and acid addition and/or base-addition salts of these compounds are also described in patents US2720480, GB1400710, US4997941, GB1587573 and DE 151404.

Accordingly, a further first aspect of the invention is the use of a compound as a nematicide, wherein said compound is of the general Formula XLI, or a stereoisomer, tautomer, racemic, prodrug, metabolite thereof, or a salt, ester and/or solvate thereof, 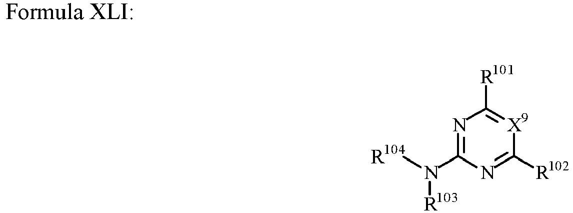 wherein
X⁹ represents the group =N-, -CH= or -C(R¹⁰⁵)=; R¹⁰⁵ is selected from lower alkyl, lower alkynyl, or lower alkenyl;
R¹⁰¹ is selected from hydrogen, halogen, alkyl, OR¹⁰⁶, OSO₂N(R¹⁰⁷)₂, NH₂, wherein R¹⁰⁶ and R¹⁰⁷ are independently of each other selected from hydrogen or a lower alkyl group;
R¹⁰² is selected from lower alkyl, cycloalkyl, halogen, NH₂ or OH;
R¹⁰³ is selected from hydrogen, lower alkyl or cycloalkyl groups;
R¹⁰⁴ is selected from hydrogen or an aromatic hydrocarbon radical such as phenyl, naphthyl or phenanthryl, which may be further ring substituted with hydrocarbon or monovalent radicals chosen from nitroso, nitro, amino, substituted amino, fluoro, chloro, bromo, iodo, hydroxyl, substituted hydroxyl, azo, cyano, thiocyano, acyloxy, aroyloxy, mercaptyl and substituted mercaptyl groups.

Preferred compounds to be used as nematicides according to the present invention, are the compounds described as preferred compounds in the description of patents US2720480, GB1400710, US4997941, GB1587573 and DE 151404 and the compounds further specified in the claims of patents US2720480, GB1400710, US4997941, GB1587573 and DE 151404.

One specific example of a compound of the general Formula XLI is a compound of the Formula XLII, which is 4,6-dichloro-N -(2-chlorophenyl)-1,3,5-triazin-2-amine; 2-chloro-N -(4,6-dichloro-1,3,5-triazin-2-yl)aniline (anilazine) with CAS number 101-05-3. Accordingly the present invention provides the use of a compound as a nematicide, wherein the compound is of the Formula XLII, or a stereoisomer, tautomer, racemic, prodrug, metabolite thereof, or a salt, ester and/or solvate thereof,

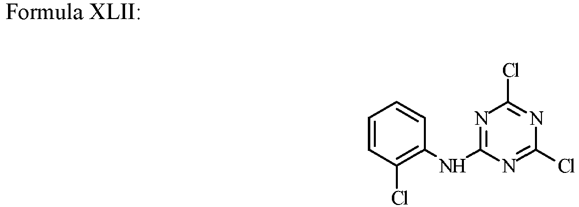

4,6-dichloro-N-(2-chlorophenyl)-1,3,5-triazin-2-amine; 2-chloro-N-(4,6-dichloro-1,3,5-triazin-2-yl)aniline has been previously described as a fungicide (see pesticide manual version 10 Entry 29).

Another specific example of a compound of the general Formula XLI is a compound of the Formula XLIII, which is 5-butyl-2-ethylamino-6-methylpyrimidin-4-yl dimethylsulfamate (bupirimate) with CAS number 41483-43-6. Accordingly the present invention provides the use of a compound as a nematicide, wherein the compound is of the Formula XLIII, or a stereoisomer, tautomer, racemic, prodrug, metabolite thereof, or a salt, ester and/or solvate thereof,

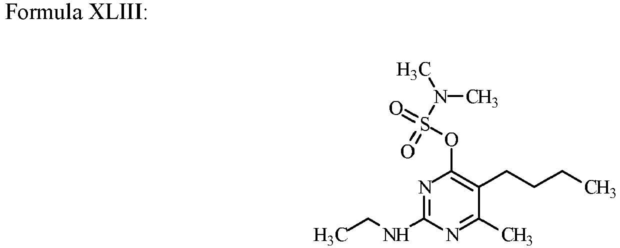

5-butyl-2-ethylamino-6-methylpyrimidin-4-yl dimethylsulfamate has been previously described as a fungicide (see e-Pesticide Manual, 12th edition, version 2.2, editor CDS Tomlin, ISBN 1-901396-31-2, entry 96).

Yet another specific example of a compound of the general Formula XLI is a compound of the Formula XLIV, which is 4-cyclopropyl-6-methyl-N-phenylpyrimidin-2-amine (cyprodinil) with CAS number 121552-61-2. Accordingly the present invention provides the use of a compound as a nematicide, wherein the compound is of the Formula XLIV, or a stereoisomer, tautomer, racemic, prodrug, metabolite thereof, or a salt, ester and/or solvate thereof,

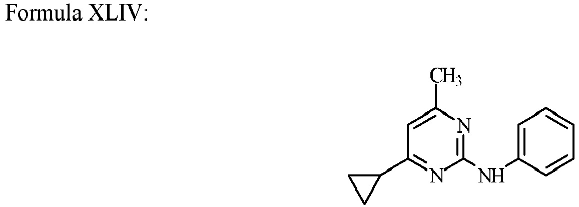

Cyprodinil has been previously described as a fungicide (see e-Pesticide Manual, 12th edition, version 2.2, editor CDS Tomlin, ISBN 1-901396-31-2, entry 203).

Yet another specific example of a compound of the general Formula XLI is a compound of the Formula XLV, which is N-cyclopropyl-1,3,5-triazine-2,4,6-triamine (cyromazine) with CAS number 66215-27-8. Accordingly the present invention provides the use of a compound as a nematicide, wherein the compound is of the Formula XLV, or a stereoisomer, tautomer, racemic, prodrug, metabolite thereof, or a salt, ester and/or solvate thereof,

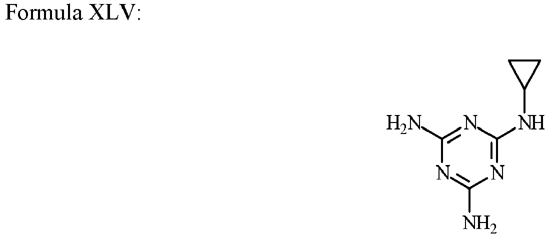

N-cyclopropyl-1,3,5-triazine-2,4,6-triamine has been previously described as an insecticide (see e-Pesticide Manual, 12th edition, version 2.2, editor CDS Tomlin, ISBN 1-901396-31-2, entry 204).

Yet another specific example of a compound of the general Formula XLI is a compound of the Formula XLVI, which is N-(4,6-dimethylpyrimidin-2-yl)aniline (pyrimethanil) with CAS number 53112-28-0. Accordingly the present invention provides the use of a compound as a nematicide, wherein the compound is of the Formula XLVI, or a stereoisomer, tautomer, racemic, prodrug, metabolite thereof, or a salt, ester and/or solvate thereof,

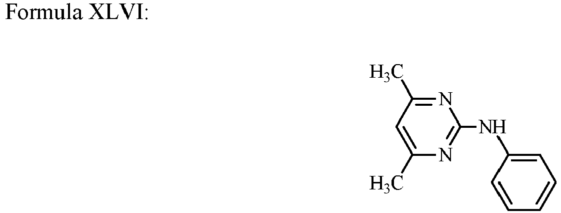

N-(4,6-dimethylpyrimidin-2-yl)aniline has been previously described as a fungicide (see e-Pesticide Manual, 12th edition, version 2.2, editor CDS Tomlin, ISBN 1-901396-31-2, entry 674).

According to another embodiment of the invention, the compounds to be used as nematicides are compounds of the general Formula XLVII. These compounds are prepared according to the methods described in patents US3952002 and US5266585, which methods are incorporated herein by reference as if fully set forth. Salts, esters and acid addition and/or base-addition salts of these compounds are also described in patents US3952002 and US5266585.

Accordingly, a further first aspect of the invention is the use of a compound as a nematicide, wherein said compound is of the general Formula XLVII, or a stereoisomer, tautomer, racemic, prodrug, metabolite thereof, or a salt, ester and/or solvate thereof, 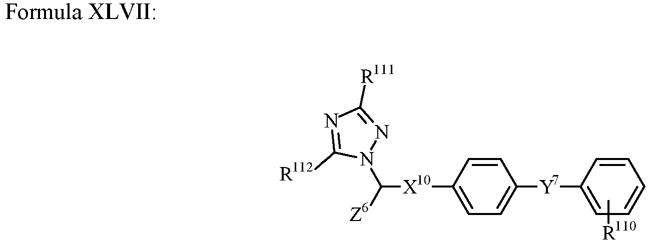 wherein
X¹⁰ represents -C(R¹¹³)₂-, -O-, -NR¹¹³-,-S-, -(C=O)-, or 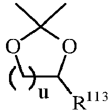
R¹¹³ is selected from hydrogen or lower alkyl with up to 6 carbon atoms;
u is either 1 or 2;
R¹¹⁰, R¹¹¹ and R¹¹² are each independently of each other selected from hydrogen, halogen or lower alkyl;
Y⁷ represents a bond or -O-;
Z⁶ represents hydrogen, lower alkyl or lower alkyl which is optionally substituted by hydroxyl or halogen.

Preferred compounds to be used as nematicides according to the present invention, are the compounds described as preferred compounds in the description of patents US3952002 and US5266585 and the compounds further specified in the claims of patents US3952002 and US5266585.

One specific example of a compound of the general Formula XLVII is a compound of the Formula XLVIII, which is 1-(biphenyl-4-yloxy)-3,3-dimethyl-1-(1H-1,2,4-triazol-1-yl)butan-2-ol (bitertanol) with CAS number 70585-36-3. Accordingly the present invention provides the use of a compound as a nematicide, wherein the compound is of the Formula XLVIII, or a stereoisomer, tautomer, racemic, prodrug, metabolite thereof, or a salt, ester and/or solvate thereof,

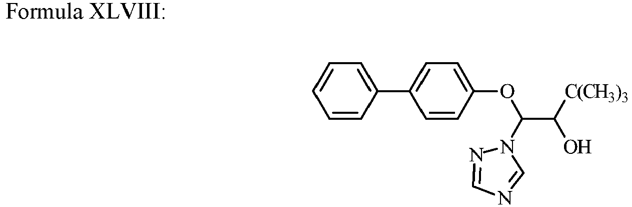

1-(biphenyl-4-yloxy)-3,3-dimethyl-1-(1H-1,2,4-triazol-1-yl)butan-2-ol has been previously described as a fungicide (see e-Pesticide Manual, 12th edition, version 2.2, editor CDS Tomlin, ISBN 1-901396-31-2, entry 83).

Another specific example of a compound of the general Formula XLVII is a compound of the Formula XLIX, which is cis,trans-3-chloro-4-[4-methyl-2-(1H-1,2,4-triazol-1-ylmethyl)-1,3-dioxolan-2-yl]phenyl 4-chlorophenyl ether (difenoconazole) with CAS number 119446-68-3. Accordingly the present invention provides the use of a compound as a nematicide, wherein the compound is of the Formula XLIX, or a stereoisomer, tautomer, racemic, prodrug, metabolite thereof, or a salt, ester and/or solvate thereof,

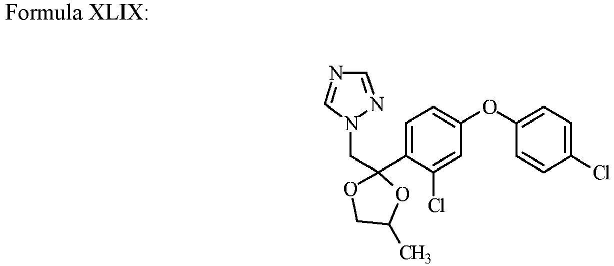

cis,trans-3-chloro-4-[4-methyl-2-(1H-1,2,4-triazol-1-ylmethyl)-1,3-dioxolan-2-yl]phenyl 4-chlorophenyl ether has been previously described as a fungicide (see e-Pesticide Manual, 12th edition, version 2.2, editor CDS Tomlin, ISBN 1-901396-31-2, entry 241).

According to another embodiment of the invention, the compounds to be used as nematicides are compounds of the general Formula L. These compounds are prepared according to the methods described in patents JP57077604 and US3957847, which methods are incorporated herein by reference as if fully set forth. Salts, esters and acid addition and/or base-addition salts of these compounds are also described in patents JP57077604 and US3957847.

Accordingly, a further first aspect of the invention is the use of a compound as a nematicide, wherein said compound is of the general Formula L, or a stereoisomer, tautomer, racemic, prodrug, metabolite thereof, or a salt, ester and/or solvate thereof, 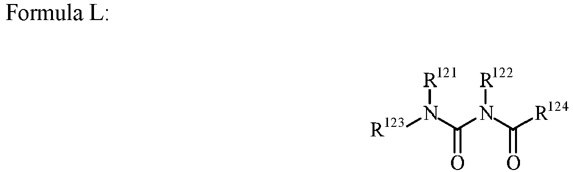 wherein
R¹²¹ and R¹²² are each independently selected from hydrogen or C₁-C₆ straight or branched alkyl,
R¹²³ is selected from aryl or heteroaryl groups, substituted or unsubstituted,
and R¹²⁴ is selected from aryl or heteroaryl groups, substituted or unsubstituted, or a group of Formula 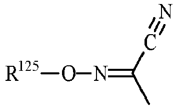
wherein R¹²⁵ is a lower alkyl group.

Preferred compounds to be used as nematicides according to the present invention, are the compounds described as preferred compounds in the description of patents JP57077604 and US3957847and the compounds further specified in the claims of patents JP57077604 and US3957847.

Particularly suitable compounds to be used as nematicides are compounds of the general Formula L as defined hereunder. Accordingly, the present invention provides the use of a compound as a nematicide, wherein the compound is of the general Formula L, or a stereoisomer, tautomer, racemic, prodrug, metabolite thereof, or a salt, ester and/or solvate thereof, wherein R¹²¹ and R¹²² are each independently selected from hydrogen or C₁-C₆ straight or branched alkyl,;
R¹²³ is selected from a lower alkyl or Ar⁴ or Ar⁵-O-Ar⁶-;
R¹²⁴ is selected from Ar⁴ or a group of Formula 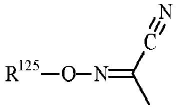 wherein R¹²⁵ is a lower alkyl group;
wherein Ar⁴, Ar⁵ or Ar⁶ are each independently selected from an aromatic hydrocarbon radical such as aryl or heteroaryl including phenyl, pyridine, naphthyl and the likes, which may be further ring substituted with hydrocarbon or monovalent radicals chosen from nitroso, nitro, amino, substituted amino, chloro, bromo, iodo, hydroxyl, substituted hydroxyl, azo, cyano, thiocyano, acyloxy, aroyloxy, mercaptyl and substituted mercaptyl groups;

One specific example of a compound of the general Formula L is a compound of the Formula LI, which is 1-[3,5-dichloro-4-(3-chloro-5-trifluoromethyl-2-pyridyloxy)phenyl]-3-(2,6-difluorobenzoyl)urea (chlorfluazuron) with CAS number 71422-67-8. Accordingly the present invention provides the use of a compound as a nematicide, wherein the compound is of the Formula LI, or a stereoisomer, tautomer, racemic, prodrug, metabolite thereof, or a salt, ester and/or solvate thereof,

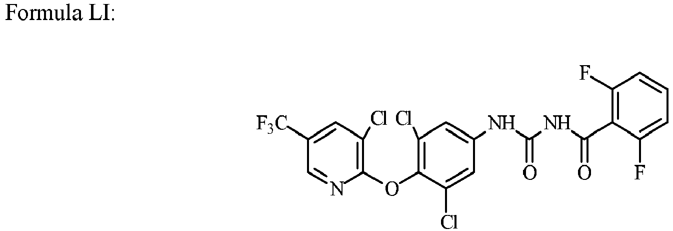

1-[3,5-dichloro-4-(3-chloro-5-trifluoromethyl-2-pyridyloxy)phenyl]-3-(2,6-difluorobenzoyl)urea has been previously described as an insecticide (see e-Pesticide Manual, 12th edition, version 2.2, editor CDS Tomlin, ISBN 1-901396-31-2, entry 132).

Another specific example of a compound of the general Formula L is a compound of the Formula LII, which is 1-(2-cyano-2-methoxyiminoacetyl)-3-ethylurea (cymoxanil) with CAS number 57966-95-7. Accordingly the present invention provides the use of a compound as a nematicide, wherein the compound is of the Formula LII, or a stereoisomer, tautomer, racemic, prodrug, metabolite thereof, or a salt, ester and/or solvate thereof,

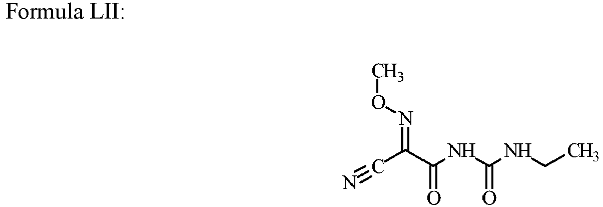

1-(2-cyano-2-methoxyiminoacetyl)-3-ethylurea has been previously described as a fungicide (see e-Pesticide Manual, 12th edition, version 2.2, editor CDS Tomlin, ISBN 1-901396-31-2, entry 195).

According to another embodiment of the invention, the compounds to be used as nematicides are compounds of the general Formula LIII. These compounds are prepared according to the methods described in patents US3933860 and GB2058059, which methods are incorporated herein by reference as if fully set forth. Salts, esters and acid addition and/or base-addition salts of these compounds are also described in patents US3933860 and GB2058059.

Accordingly, a further first aspect of the invention is the use of a compound as a nematicide, wherein said compound is of the general Formula LIII, or a stereoisomer, tautomer, racemic, prodrug, metabolite thereof, or a salt, ester and/or solvate thereof, 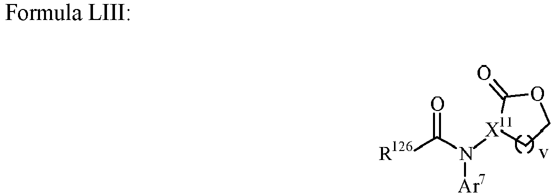 wherein
Ar⁷ is phenyl or phenyl substituted, preferentially in ortho position, with 1 to 3 of the same or different substituents selected from fluoro, chloro, bromo, C₁-C₄ alkyl , C₁-C₄ alkoxy or nitro;
R¹²⁶ is selected from C₁-C₄ alkyl , C₁-C₄alkoxy , nitro, C₁-C₄alkoxy-C₁-C₄alkyl, or C₁-C₃ haloalkyl having 1 to 5 of the same or different halogens selected from fluoro, chloro or bromo;
X¹¹ is selected from a carbon atom or a nitrogen atom,
v is 1 or 2.

Preferred compounds to be used as nematicides according to the present invention, are the compounds described as preferred compounds in the description of patents US3933860 and GB2058059and the compounds further specified in the claims of patents US3933860 and GB2058059.

One specific example of a compound of the general Formula LIII is a compound of the Formula LIV, which is (±)-a-(2-chloro-N-2,6-xylylacetamido)-g-butyrolactone (ofurace) with CAS number 58810-48-3. Accordingly the present invention provides the use of a compound as a nematicide, wherein the compound is of the Formula LIV, or a stereoisomer, tautomer, racemic, prodrug, metabolite thereof, or a salt, ester and/or solvate thereof,

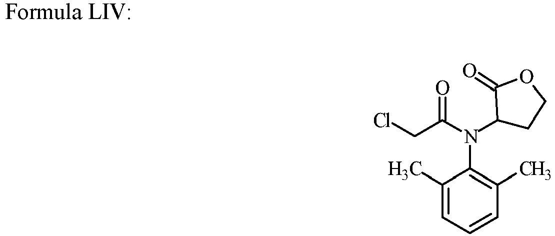

(±)-a-(2-chloro-N-2,6-xylylacetamido)-g-butyrolactone has been previously described as a fungicide (see e-Pesticide Manual, 12th edition, version 2.2, editor CDS Tomlin, ISBN 1-901396-31-2, entry 571).

Another specific example of a compound of the general Formula LIII is a compound of the Formula LV, which is 2-methoxy-N-(2-oxo-1,3-oxazolidin-3-yl)aceto-2',6'-xylidide (oxadixyl) with CAS number 77732-09-3. Accordingly the present invention provides the use of a compound as a nematicide, wherein the compound is of the Formula LV, or a stereoisomer, tautomer, racemic, prodrug, metabolite thereof, or a salt, ester and/or solvate thereof,

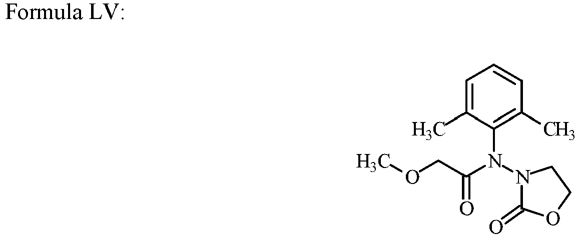

2-methoxy-N-(2-oxo-1,3-oxazolidin-3-yl)aceto-2',6'-xylidide has been previously described as a fungicide (see e-Pesticide Manual, 12th edition, version 2.2, editor CDS Tomlin, ISBN 1-901396-31-2, entry 580).

According to another embodiment of the invention, the compounds to be used as nematicides are compounds of the general Formula LVI. These compounds are prepared according to the methods described in patents US3465007, US4405640 and US3268398, which methods are incorporated herein by reference as if fully set forth. Salts, esters and acid addition and/or base-addition salts of these compounds are also described in patents US3465007, US4405640 and US3268398.

Accordingly, a further first aspect of the invention is the use of a compound as a nematicide, wherein said compound is of the general Formula LVI, or a stereoisomer, tautomer, racemic, prodrug, metabolite thereof, or a salt, ester and/or solvate thereof, 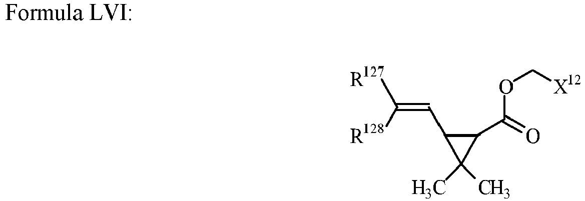 wherein
R¹²⁷ and R¹²⁸ are independently from each other selected from hydrogen, lower alkyl, cycloalkyl, halomethyl, such as trifluoromethyl, and halogen;
X¹² represents aromatic or unsaturated rings including aryl, heteroaryl, heterocycloalkyl such as furane or phenyl which are optionally substituted with one or more nitroso, nitro, amino, substituted amino, fluoro, chloro, bromo, iodo, hydroxyl, substituted hydroxyl, azo, cyano, alkyl, arylalkyl or alkylaryl groups such as benzyl or X can represents -N(R¹²⁹)-CO-R¹³⁰,
wherein R¹²⁹ is selected from hydrogen, lower alkyl or alkanoyl; R¹³⁰ is selected from hydrogen, lower alkyl and alkenyl; or R¹²⁹ and R¹³⁰ together may represent a ring system thereby including lactames and imines, optionally fused with one or more aryl or cycloalkyl.

Preferred compounds to be used as nematicides according to the present invention, are the compounds described as preferred compounds in the description of patents US3465007, US4405640 and US3268398 and the compounds further specified in the claims of patents US3465007, US4405640 and US3268398.

One specific example of a compound of the general Formula LVI is a compound of the Formula LVII, which is 5-benzyl-3-furylmethyl (1RS,3RS;1RS,3SR)-2,2-dimethyl-3-(2-methylprop-1-enyl)cyclopropanecarboxylate (resmethrin) with CAS number 10453-86-8. Accordingly the present invention provides the use of a compound as a nematicide, wherein the compound is of the Formula LVII, or a stereoisomer, tautomer, racemic, prodrug, metabolite thereof, or a salt, ester and/or solvate thereof,

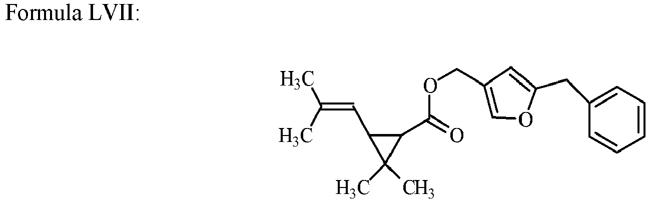

5-benzyl-3-furylmethyl (1RS,3RS;1RS,3SR)-2,2-dimethyl-3-(2-methylprop-1-enyl)cyclopropanecarboxylate has been previously described as an insecticide (see e-Pesticide Manual, 12th edition, version 2.2, editor CDS Tomlin, ISBN 1-901396-31-2, entry 688).

Another specific example of a compound of the general Formula LVI is a compound of the Formula LVIII, which is 2,3,5,6-tetrafluoro-4-methylbenzyl (Z)-(1RS,3RS)-3-(2-chloro-3,3,3-trifluoroprop-1-enyl)-2,2-dimethylcyclopropanecarboxylate (tefluthrin) with CAS number 79538-32-2. Accordingly the present invention provides the use of a compound as a nematicide, wherein the compound is of the Formula LVIII, or a stereoisomer, tautomer, racemic, prodrug, metabolite thereof, or a salt, ester and/or solvate thereof,

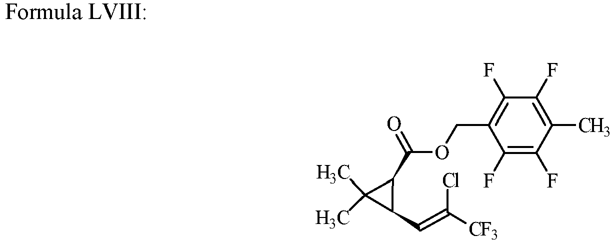

2,3,5,6-tetrafluoro-4-methylbenzyl (Z)-(1RS,3RS)-3-(2-chloro-3,3,3-trifluoroprop-1-enyl)-2,2-dimethylcyclopropanecarboxylate has been previously described as an insecticide (see e-Pesticide Manual, 12th edition, version 2.2, editor CDS Tomlin, ISBN 1-901396-31-2, entry 733).

Yet another specific example of a compound of the general Formula LVI is a compound of the Formula LIX, which is cyclohex-1-ene-1,2-dicarboximidomethyl (1RS,3RS;1RS,3SR)-2,2-dimethyl-3-(2-methylprop-1-enyl)cyclopropanecarboxylate (tetramethrin) with CAS number 7696-12-0. Accordingly the present invention provides the use of a compound as a nematicide, wherein the compound is of the Formula LIX, or a stereoisomer, tautomer, racemic, prodrug, metabolite thereof, or a salt, ester and/or solvate thereof,

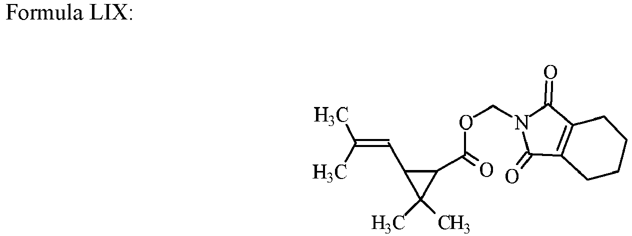

cyclohex-1-ene-1,2-dicarboximidomethyl (1RS,3RS;1RS,3SR)-2,2-dimethyl-3-(2-methylprop-1-enyl)cyclopropanecarboxylate has been previously described as an insecticide (see e-Pesticide Manual, 12th edition, version 2.2, editor CDS Tomlin, ISBN 1-901396-31-2, entry 747).

The articles "a" and "an" are used herein to refer to one or to more than one, i.e. to at least one, the grammatical object of the article. By way of example a compound means one compound or more than one compound.

By the terms "lower alkyl" are intended groups containing up to 6 carbon atoms, although lower alkyl groups containing up to 4 carbon atoms are generally preferred. Such a group may be a straight or branched chain or cyclic group, and may be for instance alkyl, alkenyl or alkynyl groups. Suitable alkyl groups include, for example, methyl, ethyl, propyl, and butyl, and these may be normal, iso or tertiary groups where appropriate.

For nematicidal use, the compounds of the invention may be used as a free acid or base, and/or in the form of a pharmaceutically acceptable acid-addition and/or base-addition salt (e.g. obtained with non-toxic organic or inorganic acid or base), in the form of a hydrate, solvate and/or complex, and/or in the form or a pro-drug or pre-drug, such as an ester.

Examples of salt-forming acids are, amongst the inorganic acids, hydrogenhalide acids, such as hydrofluoric acid, hydrochloric acid, hydrobromic acid or hydroiodic acid, and furthermore sulfuric acid, phosphoric acid, phosphorous acid and nitric acid, and, amongst the organic acids, acetic acid, trifluoroacetic acid, trichloroacetic acid, propionic acid, glycolic acid, thiocyanic acid, lactic acid, succinic acid, citric acid, benzoic acid, cinnamic acid, oxalic acid, formic acid, benzenesulfonic acid, p-toluenesulfonic acid, methanesulfonic acid, salicylic acid, p-aminosalicylic acid, 2-phenoxybenzoic acid or 2-acetoxybenzoic acid.

As used herein and unless otherwise stated, the term "solvate" includes any combination which may be formed by a compound of this invention with a suitable inorganic solvent (e.g. hydrates) or organic solvent, such as but not limited to alcohols, ketones, esters and the like. Such salts, hydrates, solvates, etc. and the preparation thereof will be clear to the skilled person; reference is for instance made to the salts, hydrates, solvates, etc. described in US-A-6,372,778, US-A-6,369,086, US-A-6,369,087 and US-A-6,372,733.

The term "pro-drug" as used herein means the pharmacologically or agriculturally acceptable derivatives such as esters, amides and phosphates, such that the resulting in vivo biotransformation product of the derivative is the active drug. For example, the prodrug as used herein means pronematicide and the resulting in vivo biotransformation product of the derivative is the active nematicide. The reference by Goodman and Gilman (The Pharmacological Basis of Therapeutics, 8th Ed, McGraw-Hill, Int. Ed. 1992, "Biotransformation of Drugs", p 13-15) describing pro-drugs generally is hereby incorporated. Pro-drugs of the compounds of the invention can be prepared by modifying functional groups present in said component in such a way that the modifications are cleaved, either in routine manipulation or in vivo, to the parent component. Typical examples of pro-drugs are described for instance in WO 99/33795, WO 99/33815, WO 99/33793 and WO 99/33792 all incorporated herein by reference. Pro-drugs are characterized by increased bioavailability and are readily metabolized into the active inhibitors in vivo.

The term "stereoisomer" as used herein, defines all possible compounds made up of the same atoms bonded by the same sequence of bonds but having different three-dimensional structures which are not interchangeable, which the compounds of the present invention may possess. It will be clear to the skilled person that some of the compounds of the invention may contain one or more asymmetric carbon atoms that serve as a chiral center, which may lead to different optical forms (e.g. enantiomers or diastereoisomers). Unless otherwise mentioned or indicated, the chemical designation of a compound herein encompasses all such optical forms in all possible configurations as well as the mixture of all possible stereochemically isomeric forms, which said compound may possess. Said mixture may contain all diastereomers and/or enantiomers of the basic molecular structure of said compound. All stereochemically isomeric forms of the compounds of the invention either in pure form or in admixture with each other are intended to fall within the scope of the present invention.

More generally, from the above, it will be clear to the skilled person that some of the compounds of the invention may exist in the form of different isomers and/or tautomers, including but not limited to geometrical isomers, conformational isomers, and stereochemical isomers (i.e. enantiomers and diastereoisomers) and isomers that correspond to the presence of the same substituents on different positions of the rings present in the compounds of the invention. All such possible isomers, tautomers and mixtures thereof are included within the scope of the invention.

It will also be clear that when the desired compounds of the invention, and/or the starting materials, precursors and/or intermediates used in the preparation thereof, contain functional groups that are sensitive to the reaction conditions used in the preparation of the compounds of the invention (i.e. that would undergo undesired reactions under those conditions if they were not suitably protected) can be protected during said reaction with one or more suitable protective group, which protective group can then be suitably removed after either completion of said reaction and/or as a later or final step in the preparation of the compounds of the invention. Protected forms of the inventive compounds are included within the scope of the present invention. Suitable protective groups, as well as methods and conditions for inserting them and removing them, will be clear to the skilled person and are generally described in the standard handbooks of organic chemistry, such as Greene and Wuts, "Protective groups in organic synthesis", 3rd Edition, Wiley and Sons, 1999, which is incorporated herein by reference in its entirety. It will also be clear to the skilled person that compounds of the invention wherein one or more functional groups have been protected with suitable functional groups can find use as intermediates in the production and/or synthesis of the compounds of the invention, and as such form a further aspect of the invention.

The terms "compound (as) described herein", "compound (as) defined herein" and "active compound" are used interchangeably and refer to a nematicidal compound selected from the group of compounds of Formula I to LIX as described herein.

As a "nematicide" as used herein means that the compound is capable of controlling nematodes.

"Controlling nematodes" as used in the present invention means killing nematodes or preventing nematodes to develop or to grow. Controlling nematodes as used herein also encompasses controlling nematode progeny (development of viable cysts and/or egg masses). The compounds described herein, may be used to keep an organism healthy and may be used curatively, preventively or systematically to control nematodes.

The "organism" as mentioned in the above paragraphs may be a plant. When using the compounds described herein, to keep a plant healthy, the controlling of nematodes as used herein encompasses the reduction of damage to plants and encompasses increased yield.

Alternatively, the organisms as mentioned above may be a human or an animal. When using the compounds described herein to keep a human or animal healthy, the use encompasses therapeutic use and veterinarian use with the aim to prevent or to cure damage by nematodes.

"Nematodes" as used herein encompass all species of the order Nematoda and in particular species that are parasitic or cause health problems to plant or to fungi (for example species of the orders *Aphelenchida, Tylenchida* and others) or to humans and animals (for example species of the orders *Ascaradida, Oxyurida, Strongylida, Stronglyloides* and *Trichocephalida*).

Preferably, "nematodes" as used herein, refer to plant nematodes meaning plant parasitic nematodes that cause damage to plants. Plant nematodes encompass plant parasitic nematodes and nematodes living in the soil. Plant parasitic nematodes include, but are not limited to, ectoparasites such as *Xiphinema spp*., *Longidorus spp*., and *Trichodorus spp*.; semiparasites such as *Tylenchulus spp*.; migratory endoparasites such as *Pratylenchus* spp., *Radopholus spp*., and *Scutellonerna. spp*.; sedentary parasites such as *Heterodera spp*., *Globodera spp*., and *Meloidogyne spp*., and stem and leaf endoparasites such as *Ditylenchus spp*., *Aphelenchoides spp*., and *Hirshmaniella spp.* The compounds described herein are distinguished especially for their effective control of harmful root parasitic soil nematodes such as, cyst-forming nematodes of the genera *Heterodera* or *Globodera,* and/or root knot nematodes of the genus *Meloidogyne.* Harmful species of these genera are for example *Meloidogyne incognata, Heterodera glycines* (soybean cyst nematode), *Globodera pallida* and *Globodera rostochiensis* (potato cyst nematode), which species are effectively controlled with the compounds described herein. However, the use of the compounds described herein is in no way restricted to these genera or species, but also extends in the same manner to other nematodes. Furthermore, the compounds described herein may have a broad spectrum activity against various genera and/or strains and/or species of nematodes including but not limited to *Rotylenchulus spp*., *Paratriclodorus spp., Pratylenchus penetrans, Radolophus simuli, Ditylenchus dispaci, Tylenchulus semipenetrans, Xiphinema spp*., *Bursaphelenchus spp*., and the like.

Alternatively, "nematodes" as used herein, refer to nematodes cause damage to humans or animals. Specific nematode species harmful to humans or animals are *Ascaris suum, Trichinella spiralis, Trichuris suis* (pig), *Ascaris lumbricoides, Trichinella* sp. (human), *Ostertagia ostertagi, Haemonchus placei, Cooperia oncophora, Dictyocaulus viviparus, Fasciola hepatica* (cattle), *Haemonchus contortus, nematodirus battus* (sheep), *Strongyloides* sp.(horse), *Ancylostoma caninum, Toxocara canis* (dog), *Toxocara cati, Taenia taeniaeformis* (cat). Moreover, many known nematicides are equally active as anthelmintic and are used to control human and animal ecto-parasitic worms, which do not necessarily belong to the group of nematoda. Therefore, it is envisaged by the present invention that the compounds described herein may also be used as anthelmintic.

A further aspect of the invention are nematicidal composition, comprising an effective amount of at least one compound as defined herein and at least one of the following: surfactant, solid or liquid diluent, characterized in that the surfactant or the diluent is normally used in nematicidal compositions. In an embodiment, said composition comprises at least two compounds as defined herein.

A related aspect of the invention is a method for preparing a nematicidal composition as described herein, comprising the step of mixing at least one compound as described herein with a surfactant or diluent normally used in nematicidal compositions. In an embodiment, said method comprises mixing least two compounds as defined herein with a surfactant or diluent normally used in nematicidal compositions.

In particular, the present invention relates to nematicidal composition developed to be used in agriculture or horticulture. These nematicidal compositions may be prepared in a manner known per se. For example, the active compounds can be converted into the customary formulations, such as solutions, emulsions, wettable powders, water dispersible granules, suspensions, powders, dusting agents, foaming agents, pastes, soluble powders, granules, suspo-emulsion concentrates, microcapsules, fumigants, natural and synthetic materials impregnated with active compound and very fine capsules and polymeric substances.

These formulations can be prepared in a known manner, for example by mixing the active compounds with surfactant or diluent normally used in nematicidal compositions such as for example mixing with extenders, that is liquid solvents, liquefied gas and/or solid diluents or carriers, if appropriate with the use of surface-active agents, that is emulsifiers and/or dispersants and/or foam-formers. If the extender used is water, it is also possible to use, for example, organic solvents as auxiliary solvents. Suitable liquid solvents are essentially: aromatics, such as xylene, toluene, or alkylnaphthalenes, chlorinated aromatics and chlorinated aliphatic hydrocarbons, such as chlorobenzene, chloroethylene or methylene chloride, aliphatic hydrocarbons, such as cyclohexane or paraffins, for example mineral oil fractions, mineral or vegetable oil, alcohols, such as butanol or glycol, and also their ethers and esters, ketones, such as acetone, methyl ethyl ketone, methyl isobutyl ketone or cyclohexanone, strongly polar solvents, such as dimethylformamide and dimethyl sulphoxide, and also water.

Liquefied gas diluents or carriers are liquefied substances, which are gases at normal temperature and pressure. Liquefied gas diluents can be, for example, aerosol propellants such as butane, propane, nitrogen gas, carbon dioxide, halogenated hydrocarbons, etc. Suitable solid diluents or carriers can be: for example ammonium salts and ground natural minerals, such as kaolins, clays, talc, chalk, quartz, attapulgite, montmorillonite or diatomaceous earth, and ground synthetic minerals, such as finely divided silica, alumina and silicates; suitable solid carriers for granules are: for example crushed and fractionated natural rocks such as calcite, marble, pumice, sepiolite and dolomite, as well as synthetic granules of inorganic and organic meals, and granules of organic material such as sawdust, coconut shells, maize cobs and tobacco stalks; suitable emulsifiers and/or foam-formers are: for example nonionic and anionic emulsifiers, such as polyoxyethylene fatty acid esters, polyoxyethylene fatty alcohol ethers, for example alkylaryl polyglycol ethers, alkylsulphonates, alkyl sulphates, arylsulphonates and protein hydrolysates; suitable dispersants are: for example lignin-sulphite waste liquors and methylcellulose. Tackifiers such as carboxymethylcellulose and natural and synthetic polymers in the form of powders, granules or lattices, such as gum arabic, polyvinyl alcohol and polyvinyl acetate, as well as natural phospholipids, such as cephalins and lecithins, and synthetic phospholipids, can be used in the formulations. Other additives can be mineral and vegetable oils. It is possible to use colorants such as inorganic pigments, for example iron oxide, titanium oxide and Prussian Blue, and organic dyestuffs, such as alizarin dyestuffs, azo dyestuffs and metal phthalocyanine dyestuffs, and trace nutrients such as salts of iron, manganese, boron, copper, cobalt, molybdenum and zinc. The formulations in general contain between 0.01 and 95 per cent by weight of active compound, preferably between 0.1 and 90%, particularly preferably between 0.5 and 90%.

Furthermore, the nematicidal compositions according to the present invention may comprise a synergist. A synergist is a chemical compound which increases the action of the active compound or prolongs the chemical or metabolic stability of the compound, without it being necessary for the synergist added to be active itself. Examples of such synergists are piperonyl butoxide, piprotal, propyl isome, sesamex and sesamolin.

The active compounds according to the invention, as such or in their formulations, can also be used in a mixture with known fungicides, bactericides, acaricides, nematicides or insecticides, to widen, for example, the activity spectrum or to prevent the development of resistance. In many cases, this results in synergistic effects, i.e. the activity of the mixture exceeds the activity of the individual components. Examples of particularly advantageous mixing components are the following:

Fungicides: aldimorph, ampropylfos, ampropylfos potassium, andoprim, anilazine, azaconazole, azoxystrobin, benalaxyl, benodanil, benomyl, benzamacril, benzamacril-isobutyl, bialaphos, binapacryl, biphenyl, bitertanol, blasticidin-S, bromuconazole, bupirimate, buthiobate, calcium polysulphide, capsimycin, captafol, captan, carbendazim, carboxin, carvon, quinomethionate, chlobenthiazone, chlorfenazole, chloroneb, chloropicrin, chlorothalonil, chlozolinate, clozylacon, cufraneb, cymoxanil, cyproconazole, cyprodinil, cyprofuram, debacarb, dichlorophen, diclobutrazole, diclofluanid, diclomezine, dicloran, diethofencarb, difenoconazole, dimethirimol, dimethomorf, diniconazole, diniconazole-M, dinocap, diphenylamine, dipyrithione, ditalimfos, dithianon, dodemorph, dodine, drazoxolon, ediphenphos, epoxiconazole, etaconazole, ethirimol, etridiazole, famoxadon, fenapanil, fenarimol, fenbuconazole, fenfuram, fenitropan, fenpiclonil, fenpropidin, fenpropimorph, fentin acetate, fentin hydroxide, ferbam, ferimzone, fluazinam, flumetover, fluoromide, fluquinconazole, flurprimidol, flusilazole, flusulfamide, flutolanil, flutriafol, folpet, fosetyl-aluminium, fosetyl-sodium, fthalide, fuberidazole, furalaxyl, furametpyr, furcarbonil, furconazole, furconazolecis, furmecyclox, guazatine, hexachlorobenzene, hexaconazole, hymexazole, imazalil, imibenconazole, iminoctadine, iminoctadine albesilate, iminoctadine triacetate, iodocarb, ipconazole, iprobenfos (IBP), iprodione, irumamycin, isoprothiolane, isovaledione, kasugamycin, kresoxim-methyl, copper preparations, such as: copper hydroxide, copper naphthenate, copper oxychloride, copper sulphate, copper oxide, oxine-copper and Bordeaux mixture, mancopper, mancozeb, maneb, meferimzone, mepanipyrim, mepronil, metalaxyl, metconazole, methasulfocarb, methfuroxam, metiram, metomeclam, metsulfovax, mildiomycin, myclobutanil, myclozolin, nickel dimethyldithiocarbamate, nitrothal-isopropyl, nuarimol, ofurace, oxadixyl, oxamocarb, oxolinic acid, oxycarboxim, oxyfenthiin, paclobutrazole, pefurazoate, penconazole, pencycuron, phosdiphen, pimaricin, piperalin, polyoxin, polyoxorim, probenazole, prochloraz, procymidone, propamocarb, propanosine-sodium, propiconazole, propineb, pyrazophos, pyrifenox, pyrimethanil, pyroquilon, pyroxyfur, quinconazole, quintozene (PCNB), sulphur and sulphur preparations, tebuconazole, tecloftalam, tecnazene, tetcyclacis, tetraconazole, thiabendazole, thicyofen, thifluzamide, thiophanate-methyl, thiram, tioxymid, tolclofos-methyl, tolylfluanid, triadimefon, triadimenol, triazbutil, triazoxide, trichlamide, tricyclazole, tridemorph, triflumizole, triforine, triticonazole, uniconazole, validamycin A, vinclozolin, viniconazole, zarilamide, zineb, ziram and also Dagger G, OK-8705, OK-8801, α-(1,1-dimethylethyl)-β-(2-phenoxyethyl)-1H-1,2,4-triazole-1-ethanol, α-(2,4-dichlorophenyl)-β-fluoro-b-propy)-1H-1,2,4-triazole-1-ethanol, α-(2,4-dichlorophenyl)-β-methoxy-a-methyl-1H-1,2,4-triazole-1-ethanol, α-(5-methyl-1,3-dioxan-5-yl)-β-[[4-(trifluoromethyl)-phenyl]-methylene]-1H-1,2,4-triazole-1-ethanol, (5RS,6RS)-6-hydroxy-2,2,7,7-tetramethyl-5-(1H-1,2,4-triazol-1-yl)-3-octanone, (E)-a-(methoxyimino)-N-methyl-2-phenoxy-phenylacetamide, isopropyl 1-{2-methyl-1-[[[1-(4-methylphenyl)-ethyl]-amino]-carbonyl]-propyl}-carbamate, 1-(2,4-dichlorophenyl)-2-(1H-1,2,4-triazol-1-yl)-ethanone O-(phenylmethyl) oxime, 1-(2-methyl-1-naphthalenyl)-1H-pyrrol-2,5-dione, 1-(3,5-dichlorophenyl)-3-(2-propenyl)-2,5-pyrrolidinedione, 1-[(diiodomethyl)-sulphonyl]-4-methyl-benzene, 1-[[2-(2,4-dichlorophenyl)-1,3-dioxolan-2-yl]-methyl]-1H-imidazole, 1-[[2-(4-chlorophenyl)-3-phenyloxiranyl]-methyl]-1H-1,2,4-triazole, 1-[1-[2-[(2,4-dichlorophenyl)-methoxy]-phenyl]-ethenyl]-1H-imidazole, 1-methyl-5-nonyl-2-(phenylmethyl)-3-pyrrolidinole, 2',6'-dibromo-2-methyl-4'-trifluoromethoxy-4'-trifluoro-methyl-1,3-thiazole-5-carboxanilide, 2,2-dichloro-N-[1-(4-chlorophenyl)-ethyl]-1-ethyl-3-methyl-cyclopropane-carboxamide, 2,6-dichloro-5-(methylthio)-4-pyrimidinyl thiocyanate, 2,6-dichloro-N-(4-trifluoromethylbenzyl)-benzamide, 2,6-dichloro-N-[[4-(trifluoromethyl)-phenyl]-methyl]-benzamide, 2-(2,3,3-triiodo-2-propenyl)-2H-tetrazole, 2-[(1-methylethyl)-sulphonyl]-5-(trichloromethyl)-1,3,4-thiadiazole, 2-[[6-deoxy-4-O-(4-O-methyl-α-D-glycopyranosyl)-a-D-glucopyranosyl]-amino]-4-methoxy-1H-pyrrolo [2,3-d]pyrimidine-5-arbonitrile, 2-aminobutane, 2-bromo-2-(bromomethyl)-pentanedinitrile, 2-chloro-N-(2,3-dihydro-1,1,3-trimethyl-1H-inden-4-yl)-3-pyridinecarboxamide, 2-chloro-N-(2,6-dimethylphenyl)-N-(isothiocyanatomethyl)-acetamide, 2-phenylphenol (OPP), 3,4-dichloro-1-[4-(difluoromethoxy)-phenyl]-1H-pyrrol-2,5-dione, 3,5-dichloro-N-[cyano-[(1-methyl-2-propynyl)-oxy]-methyl]-benzamide, 3-(1,1-dimethylpropyl-1-oxo-1H-indene-2-carbonitrile, 3-[2-(4-chlorophenyl)-5-ethoxy-3-isoxazolidinyl]-pyridine, 4-chloro-2-cyano-N,N-dimethyl-5-(4-methylphenyl)-1H-imidazole-1-sulphonamide, 4-methyl-tetrazolo[1,5-a]quinazolin-5(4H)-one, 8-(1,1-dimethylethyl)-N-ethyl-N-propyl-1,4-dioxaspiro[4.5]decane-2-methanamine, 8-hydroxyquinoline sulphate, 9H-xanthene-2-[(phenylamino)-carbonyl]-9-carboxylic hydrazide, bis-(1-methylethyl) 3-methyl-4-[(3-methylbenzoyl)-oxy]-2,5-thiophenedicarboxylate, cis-1-(4-chlorophenyl)-2-(1H-1,2,4-triazol-1-yl)-cycloheptanol, cis-4-[3-[4-(1,1-dimethylpropyl)-phenyl-2-methylpropyl]-2,6-dimethyl-morpholine hydrochloride, ethyl [(4-chlorophenyl)-azo]-cyanoacetate, potassium hydrogen carbonate, methanetetrathiol sodium salt, methyl 1-(2,3-dihydro-2,2-dimethyl-1H-inden-1-yl)-1H-imidazole-5-carboxylate, methyl N-(2,6-dimethylphenyl)-N-(5-isoxazolylcarbonyl)-DL-alaninate, methyl N-(chloroacetyl)-N-(2,6-dimethylphenyl)-DL-alaninate, N-(2,3-dichloro-4-hydroxyphenyl)-1-methyl-cyclohexanecarboxamide, N-(2,6-dimethylphenyl)-2-methoxy-N-(tetrahydro-2-oxo-3-furanyl)-acetamide, N-(2,6-dimethylphenyl)-2-methoxy-N-(tetrahydro-2-oxo-3-thienyl)-acetamide, N-(2-chloro-4-nitrophenyl)-4-methyl-3-nitro-benzenesulphonamide, N-(4-cyclohexylphenyl)-1,4,5,6-tetrahydro-2-pyrimidineamine, N-(4-bexylphenyl)-1,4,5,6-tetrahydro-2-pyrimidineamine, N-(5-chloro-2-methylphenyl)-2-methoxy-N-(2-oxo-3-oxazolidinyl)-acetamide, N-(6-methoxy)-3-pyridinyl)-cyclopropanecarboxamide, N-[2,2,2-trichloro-1-[(chloroacetyl)-amino]-ethyl]-benzamide, N-[3-chloro-4,5-bis(2-propinyloxy)-phenyl]-N'-methoxy-methanimidamide, N-formyl-N-hydroxy-DL-alanine-sodium salt, O,O-diethyl [2-(dipropylamino)-2-oxoethyl]-ethylphosphoramidothioate, O-methyl S-phenyl phenylpropylphosphoramidothioate, S-methyl 1,2,3-benzothiadiazole-7-carbothioate, and spiro[2H]-1-benzopyran-2,1'(3'H)-isobenzofuran]-3'-one,

Bactericides: bronopol, dichlorophen, nitrapyrin, nickel dimethyldithiocarbamate, kasugamycin, octhilinone, furancarboxylic acid, oxytetracyclin, probenazole, streptomycin, tecloftalam, copper sulphate and other copper preparations.

Insecticides / acaricide / nematicides: abamectin, acephate, acetamiprid, acrinathrin, alanycarb, aldicarb, aldoxycarb, alpha-cypermethrin, alphamethrin, amitraz, avermectin, AZ 60541, azadirachtin, azamethiphos, azinphos A, azinphos M, azocyclotin, *Bacillus popilliae, Bacillus sphaericus, Bacillus subtilis, Bacillus thuringiensis,* baculoviruses, *Beauveria bassiana, Beauveria tenella,* bendiocarb, benfuracarb, bensultap, benzoximate, betacyfluthrin, bifenazate, bifenthrin, bioethanomethrin, bio-permethrin, BPMC, bromophos A, bufencarb, buprofezin, butathiofos, butocarboxim, butylpyridaben, cadusafos, carbaryl, carbofuran, carbophenothion, carbosulfan, cartap, chloethocarb, chlorethoxyfos, chlorfenapyr, chlorfenvinphos, chlorfluazuron, chlormephos, chlorpyrifos, chlorpyrifos M, chlovaporthrin, cis-resmethrin, cispermethrin, clocythrin, cloethocarb, clofentezine, cyanophos, cycloprene, cycloprothrin, cyfluthrin, cyhalothrin, cyhexatin, cypermethrin, cyromazine, deltamethrin, demeton M, demeton S, demeton-S-methyl, diafenthiuron, diazinon, dichlorvos, diflubenzuron, dimethoat, dimethylvinphos, diofenolan, disulfoton, docusat-sodium, dofenapyn, eflusilanate, emamectin, empenthrin, endosulfan, *Entomopfthorα spp.,* esfenvalerate, ethiofencarb, ethion, ethoprophos, etofenprox, etoxazole, etrimfos, fenamiphos, fenazaquin, fenbutatin oxide, fenitrothion, fenothiocarb, fenoxacrim, fenoxycarb, fenpropathrin, fenpyrad, fenpyrithrin, fenpyroximate, fenvalerate, fipronil, fluazinam, fluazuron, flubrocythrinate, flucycloxuron, flucythrinate, flufenoxuron, flutenzine, fluvalinate, fonophos, fosmethilan, fosthiazate, fubfenprox, furathiocarb, granulosis viruses, halofenozide, HCH, heptenophos, hexaflumuron, hexythiazox, hydroprene, imidacloprid, isazofos, isofenphos, isoxathion, ivermectin, nuclear polyhedrosis viruses, lambda-cyhalothrin, lufenuron malathion, mecarbam, metaldehyde, methamidophos, *Metarhizium anisopliae, Metarhizium flavoviride,* methidathion, methiocarb, methomyl, methoxyfenozide, metolcarb, metoxadiazone, mevinphos, milbemectin, monocrotophos, naled, nitenpyram, nithiazine, novaluron, omethoat, oxamyl, oxydemethon M, *Paecilomyces fumosoroseus,* parathion A, parathion M, permethrin, phenthoat, phorat, phosalone, phosmet, phosphamidon, phoxim, pirimicarb, pirimiphos A, pirimiphos M, profenofos, promecarb, propoxur, prothiofos, prothoat, pymetrozine, pyraclofos, pyresmethrin, pyrethrum, pyridaben, pyridathion, pyrimidifen, pyriproxyfen, quinalphos, ribavirin, salithion, sebufos, silafluofen, spinosad, sulfotep, sulprofos, tau-fluvalinate, tebufenozide, tebufenpyrad, tebupirimiphos, teflubenzuron, tefluthrin, temephos, temivinphos, terbufos, tetrachlorvinphos, theta-cypermethrin, thiamethoxam, thiapronil, thiatriphos, thiocyclam hydrogen oxalate, thiodicarb, thiofanox, thuringiensin, tralocythrin, tralomethrin, triarathene, triazamate, triazophos, triazuron, trichlophenidine, trichlorfon, triflumuron, trimethacarb, vamidothion, vaniliprole, *Verticillium lecanii,* YI 5302, zeta-cypermethrin, zolaprofos, (1R-cis)-[5-(phenylmethyl)-3-furanyl]-methyl3-[(dihydro-2-oxo-3 (2H)-furanylidene)-methyl]-2,2-imethylcyclopropanecarboxylate, (3-phenoxyphenyl)-methyl 2,2,3,3-tetramethylcyclopropanecarboxylate, 1-[(2-chloro-5-thiazolyl)methyl]tetrahydro-3,5-dimethyl-N-nitro-1,3,5-triazine-2(1H)-imine, 2-(2-chloro-6-fluorophenyl)-4-[4-(1,1-dimethylethyl)phenyl]-4,5-dihydro-oxazole, 2-(acetlyoxy)-3-dodecyl-1,4-naphthalenedione, 2-chloro-N-[[[4-(1-phenylethoxy)-phenyl]-amino]-carbonyl]-benzamide, 2-chloro-N-[[[4-(2,2-dichloro-1,1-difluoroethoxy)-phenyl]-amino]-carbonyl]-benzamide, 3-methylphenyl propylcarbamate. 4-[4-(4-ethoxyphenyl)-4-methylpentyl]-1-fluoro-2-phenoxy-benzene, 4-chloro-2-(1,1-dimethylethyl)-5-[[2-(2,6-dimethyl-4-phenoxyphenoxy)ethyl]thio]-3(2H)-pyridazinone, 4-chloro-2-(2-chloro-2-methylpropyl)-5-[(6-iodo-3-pyridinyl)methoxy]-3(2H)-pyridazinone, 4-chloro-5-[(6-chloro-3-pyridinyl)methoxy]-2-(3,4-dichlorophenyl)-3(2H)-pyridazinone, Bacillus thuringiensis strain EG-2348, [2-benzoyl-1-(1,1-dimethylethyl)-hydrazinobenzoic acid, 2,2-dimethyl-3-(2,4-dichlorophenyl)-2-oxo-1-oxaspiro[4.5]dec-3-en-4-yl butanoate, [3-[(6-chloro-3-pyridinyl)methyl]-2-thiazolidinylidene]-cyanamide, dihydro-2-(nitromethylene)-2H-1,3-thiazine-3(4H)-carboxaldehyde, ethyl [2-[[1,6-dihydro-6-oxo-1-(phenylmethyl)-4-pyridazinyl]oxy]ethyl]-carbamate, N-(3,4,4-trifluoro-1-oxo-3-butenyl)-glycine, N-(4-chlorophenyl)-3-[4-(difluoromethoxy)phenyl]-4,5-dihydro-4-phenyl-1H-pyrazole-1-carboxamide, N-[(2-chloro-5-thiazolyl)methyl]-N'-methyl-N"-nitro-guanidine, N-methyl-N'-(1-methyl-2-propenyl)-1,2-hydrazinedicarbothioamide, N-methyl-N'-2-propenyl-1,2-hydrazinedicarbothioamide, O,O-diethyl [2-(dipropylamino)-2-oxoethyl]-ethyl-phosphoroamidothioate.

Additionally the active compounds according to the invention, as such or in their formulations or above-mentioned mixtures, can also be used in a mixture with other known active compounds, such as herbicides, fertilizers and/or growth regulators.

The content of the compounds as described herein in a commercially useful formulation or application form can be varied in a wide range. The concentration of active compound can be from 0.0000001 to 100 % by weight of active compound, preferably between 0.0001 and 10 % by weight, more preferably between 0.01 and 1% by weight. The application rate can also be varied in a wide range. Preferably, it is within a range of about 0.05 to 10 kg, preferably about 0.1 to 2 kg of the active compound per hectare.

The present invention also relates to fibrous nematicide composition and its use as nematicide, wherein the fibrous composition comprises a non-woven fiber and an effective amount of at least one compound selected from the group of compounds of Formulas I to LIX covalently attached or stably adsorbed to the fiber. In an embodiment, the fibrous composition comprises at least two compounds as described herein.

In an embodiment, the fiber comprises low density polyethylene, high density polyethylene, poly(ethylene glycol), poly(ethylene oxide),vinyl acetate, urethane, graphite, silicone, neoprene, disoprene, poly(vinyl alcohol), poly(vinylpyrrolidone), poly(ethyloxazoline), poly(ethylene oxide)-co-poly(propylene oxide) copolymer, poly (lactide-co-glycolide), polyglycolides, polylactides, poloxamine, carboxymethyl cellulose, hydroxyalkylated cellulose, hydroxyethyl cellulose, hydroxypropyl methylcellulose, polysucrose, polyacrylic acids, polyacrylamides, alyplastic glycols, polyaromatic acids, polyurethane, polyactic acid, polyamides, polyanhydrides, polycaprolactone, polycarbonate, polydioxanone, polyester, polyester-water dispersible, polyether-block copolyamide, polyhydroxyalkanotes, polyolefin, polyorthoester, polyoxyethylene, polypropylene, polystyrene, polytrimethylene, perephthalate, rayon-non dispersible, hyaluronic acid, dextran, graphite, heparin sulfate, chondroitin sulfate, heparin, alginate, gelatin, collagen, albumin, ovalbumin, or starch. In a particular embodiment, the fiber comprises ethylene vinyl acetate.

In a further particular embodiment, the fiber is biodegradable and the adsorbed compound as described herein, can be slowly released into a localized area of the environment to control nematodes in that area over a period of time.

The present invention also encompasses solid formulations of slow-release nematicidal compound as described herein, and their use as nematicide. The formulations release the compound as described herein (a) into the environment (soil, aqueous medium, plants) in a controlled and slow fashion (complete release within several days up to a few months).

Said solid slow-release formulation is extruded and comprises (a) 0.1 to 80% by weight of at least one compound as defined herein; (b) 3 to 80% by weight of a thermoplastic, water-insoluble polymer from the group of the polylactides; (c) 0 to 80% by weight of at least one thermoplastic polymer; (d) 10 to 80% by weight of at least one mineral filler; and (e) 0 to 20% by weight of inorganic or organic additives; the total of components (a) to (e) being 100%. In an embodiment, the slow release formulation comprises (a) 0.1 to 80% by weight of at least two compounds as described herein.

"Insoluble in water" is understood as meaning that the polymeric binders (b) have a water solubility of less than 100 mg per liter of water at 20° C.

Suitable thermoplastic water-insoluble polymers from the group of the polylactides (b) are based on polycondensates of lactic acid and are described, for example, in WO 97/41836, WO 96/18591, WO 94/05484, U.S. Pat. No. 5,310,865, U.S. Pat. No. 5,428,126, U.S. Pat. No. 5,440,008, U.S. Pat. No. 5,142,023, U.S. Pat. No. 5,247,058, U.S. Pat. No. 5,247,059 and U.S. Pat. No. 5,484,881. Others, which can be mentioned in this context, are polylactide copolymers which are described in WO 98/09613, U.S. Pat. No. 4,045,418, U.S. Pat. No. 4,057,537, Adv. Mater. 2000, 12, 1841-1846. Polylactides are commercially available from Cargill Dow LLC (for example PLA Polymer 404ID, PLA Polymer 4040D, PLA Polymer 4031D, PLA Polymer 2000D or PLA Polymer 1100) or from Mitsui Chemicals (Lactea).

The amount of the thermoplastic water-insoluble polymer from the group of the polylactides (b) in the total slow-release formulation can vary depending on the efficacy, release rate and processability. In general, the amount ranges from 3 to 80% by weight, preferably from 3 to 50% by weight and particularly preferably from 5 to 30% by weight based on the total slow-release formulation.

Examples of suitable polymeric binders (c) include polyolefins, such as polyethylene, polypropylene, polybutylene and polyisobutinylylene; vinyl polymers such as polyvinyl chloride, polyvinylpyrrolidone, polyvinylinylcaprolactamcropolactouran, polyvinyl acetate, polystyrene, polyacrylonitrile, polyacrylates, polymethacrylates; polyacetals such as polyoxymethylene; polyesters with at least part-aliphatic ester groups such as polyhydroxybutyric acid, polyhydroxyvaleric acid, polybutylene succinates, polyalkylene terephthalates such as polyalkylene adipate terephthalates such as polybutylene adipate terephthalates; polyester amides; polyether amides; polyamides; polyester amides; polycaprolactams; polyimides; polyethers; polyether ketones; polyurethanes and polycarbonates; copolymers of ethylene/vinyl acetate, ethylene/(meth)acrylates, styrene/acrylonitrile, styrene/butadiene, styrene/butadiene/acrylonitrile, olefin/maleic anhydride; collagen, gelatin, cellulose and cellulose derivatives, starch and its derivatives. The amount of the thermoplastic water-insoluble polymer (c) in the total slow-release formulation can vary, depending on the activity, release rate and processability. In general, the amount ranges from 0-80% by weight, preferably 5-60% by weight and especially preferably 15-50% by weight, based on the total formulation.

Examples of suitable mineral fillers (d) include oxides, hydroxides, silicates, carbonates and sulfates of calcium, magnesium, aluminum and titanium; in individual cases for example chalk, gypsum, bentonite, kaolin, wollastonite, talc, phlogopite, clay minerals-in general, and mixtures of a variety of mineral fillers. The amount of mineral filler (d) may vary within wide limits, depending on the granulation properties and the processability. Thus, the filler content may range from 10-80% by weight, preferably from 20-70% by weight and especially preferably from 30-60% by weight, based on the total slow-release formulation.

The group of the additives (e) can be divided as follows: (1) auxiliaries conventionally used in extrusion technology, such as lubricants, mold release agents, fluidization auxiliaries, plasticizers and stabilizers, as are described, for example, in DE-A 19504832, which is herewith incorporated by reference; (2) additives which affect release of the active compound(s): water-soluble inorganic substances such as, for example, sodium chloride, sodium sulfate or calcium sulfate; water-soluble organic substances such as, for example, neopentyl glycol, polyethylene glycol or urea; nonionic or ionic surfactants such as, for example, fatty alcohol ethoxylates, alkylbenzenesulfonates or alkylnaphthalenesulfonates; waxes, fatty alcohols and fatty acids, fats and oils, such as, for example, carnauba wax, stearic acid, stearyl alcohol or castor oil.

To prepare the slow release formulations, all components can either be molten together directly in the form of a physical mixture or mixed with the pre-formed polymer melt and then extruded. In general, it is customary to meter into the extruder a physical mixture of active compound (a), polymer (b), polymer (c), filler (d) and additive (e) jointly in a free feed, for example via a differential weigh feeder, where it is molten.

The present invention also relates to surfactant-diatomaceous earth compositions for nematicidal use in the form of dry spreadable granules comprising at least one compound or at least two compounds as described herein. In a particular embodiment, said granules comprise from about 0.005 to about 60 % by weight of at least one compound described herein. In another particular embodiment, said granules comprise from about 0.005 to about 60 % by weight of at least two compounds as described herein. The granules comprises in addition to the diatomaceous earth, a surfactant composition designed to provide binding, rewetting and disintegration properties to the granules.

By diatomaceous earth is meant a silica material characterized by a large surface area per unit volume. Diatomaceous earth is a naturally occurring material and consists mainly of accumulated shells or frustules of intricately structured amorphous hydrous silica secreted by diatoms. Suitable diatomaceous earth has a surface area in the range of from greater than about 5 square meters per gram to less than about 90 m²/g, preferably from greater than about 10 to less than about 60 m²/g and a pore volume in the range of from greater than about 2 c³/g, to less than about 5 c3/g, preferably from greater than about 3 c3/g to less than about 4 c³/g. Diatomaceous earth is present in the granule composition at from about 35 to about 95 % by weight, preferably from about 50 to about 95 % by weight of the total diatomaceous earth, surfactant, and nematicidal granule composition.

The surfactant composition is present at from about 5 to about 40 % by weight, preferably from about 5 to about 20 % by weight of the total diatomaceous earth/surfactant/nematicide granule composition. The disintegration aids are usually present at from about 3 to about 15 % by weight; preferably from about 6 to about 10 % by weight based on the weight of the diatomaceous earth, surfactant, and nematicide granule composition. Suitable disintegration aids include water-soluble salts of alkylnaphthalenesulfonate-formaldehyde condensates; sodium lignosulfonate, diphenyloxide, ethoxylated tristyrylphenols, ethoxylated tristyrylphenol phosphates, ethylene oxide/propylene oxide block copolymers, and acid, salts and copolymers of the polyacrylates. The rewetting agents are usually present at from about 2 to about 15 5 % by weight, preferably from about 2 to about 35 % by weight based on the weight of the diatomaceous earth, surfactant, and nematicide granule composition. Suitable rewetting agents include alkylnaphthalenesulfonates, sodium methyloleoyl taurate, sulfosuccinates, carboxylates, alkylarylsulfonates, ethoxylated alkyl phenols and ethoxylated alcohols. The binders for use are usually present from about 0 to about 10 % by weight, preferably from about 2 to about 6 % by weight based on the weight of the diatomaceous earth, surfactant, and nematicide granule composition. Suitable binders can be traditional binders well known in the art such as the starches, the sugars, etc., but preferably the granules use residuals or the secondary characteristics of the disintegration aids and/or rewetting agents described herein as the binding agents.

The dry spreadable granules can be prepared by standard pan granulation process, or by homogeneous extrusion process. Of note, granules that are prepared in the absence of a nematicide by extrusion process can subsequently be sprayed with nematicide to adhere same to the granules.

The nematicidal granules, can be broadcast, that is, applied with a dry spreader to a target area and, when exposed to water via, for example, rain or irrigation, readily decompose or disintegrate and actively spread.

The dry spreadable granules show hardness and an ability to maintain integrity upon normal, commercial handling in a dry spreading operation and yet be capable of quickly disintegrating or scattering upon what may be a minimal exposure to water, such as, for example, a light rain. The highly active disintegration process allows the nematicide to be delivered over a larger surface area than that immediately covered by the original granules resulting in a much more effective delivery of the nematicide to the targeted area.

The present invention also provides solid, water-insoluble lipospheres and their use as nematicide, wherein said lipospheres are formed of a solid hydrophobic core having a layer of a phospholipid embedded on the surface of the core, containing at least one nematicidal compound as described herein in the core, in the phospholipid, adhered to the phospholipid, or a combination thereof. In an embodiment, said liposphere comprises at least two compounds as described herein.

Lipospheres can be prepared by a melt technique or a solvent technique, summarized as: (1) forming a liquid solution or suspension of at least one compound as described herein by either melting the compound, or dissolving or dispersing the compound in a liquid vehicle, to form a mixture of liquid compound that solidifies at room temperature or greater; (2) adding phospholipid and an aqueous solution to the liquid compound to form a suspension; (3) mixing the suspension at a temperature above the melting temperature until a homogeneous fine dispersion is obtained; and then (4) rapidly cooling the dispersion to below the melting temperature of the liquid mixture containing the compound. The compounds can also be added to the phospholipid or mixed with the resulting lipospheres.

The nematicidal compound containing lipospheres have several advantages including stability, low cost of reagents, ease of manufacture, high dispersibility in an aqueous medium, a release rate for the entrapped compound that is controlled by the phospholipid coating and the carrier.

The invention further relates to nematicidal formulations in the form of microcapsules having a capsule wall made from a urea/dialdehyde precondensate and comprising at least one compound as described herein. The microcapsules can be prepared by stirring an aqueous solution of a precondensate of urea and a dialdehyde selected from the group consisting of glutaraldehyde, succinaldehyde, adipaldehyde, malealdehyde, malonaldehyde, 1,3-difonnylcyclopentane, o-formylhydrocinnamaldehyde, phthalaldehyde and terephthalaldehyde in the molar ratio of urea to dialdehyde of 1:1 to 1:2.5, into an acidified aqueous dispersion of a water-immiscible compound as described herein or a readily volatile water-immiscible solvent. In a particular embodiment, the microcapsule comprises at least two compounds as described herein.

The present invention also encompasses aqueous emulsions containing at least one nematicide compound as described herein and no surfactants, with little or no aromatic solvents containing a polymer-type emulsion. Suitable polymers are selected from alkylated vinylpyrrolidone copolymer, polycarboxylic polyoxyethylene copolymer having some free acid group or a branched acrylic polymer. The aqueous emulsion preferably contain from 10 to 90 % by weight water, from 0 to 15 % of compound described herein and from 1 to 15 % of emulsifying polymer. In a particular embodiment, said emulsion comprises at least two compounds as described herein.

The present invention also encompasses an effervescent composition in powder form comprising an effervescent agent and at least one nematicidal compound as described herein. In a particular embodiment, said composition comprises at least two compounds as described herein.

Said composition may be further contained is a bag, preferably a bag whose wall is a film consisting of a film-forming, water-soluble or water-dispersible material. Preferably said film-forming, water-soluble or water-dispersible material is selected from polyethylene oxide, polyethylene glycol, starch, modified starch, alkyl or hydroxyalkylcellulose, including hydroxymethylcellulose, hydroxyethylcellulose, hydroxpropyl cellulose; carboxymethylcellulose; polyvinyl alcohol; polyvinylethers such as poly methyl vinylether or poly(2-methoxyethoxyethylene); poly(2,4-dimethyl-6-triazinylethylene; poly(3-morpholinyl ethylene); poly(N-1,2,4-triazolylethylene); poly(vinylsulfonic) acid; polyanhydrides; melamine-formaldehyde resins or urea-formaldehyde resins; poly(2-hydroxyethyl methacrylate); polyacrylic acid and its homologues. The effervescent agent consists preferably of an acid and a carbonate or a hydrogencarbonate.

Furthermore, the present invention relates to nematicidal composition developed to be used in human or veterinarian therapy, which nematicidal compositions comprise at least an active compound as described herein. In another embodiment, said nematicidal composition comprises at least two active compounds as described herein. A related aspect of the present invention is a method for the preparation of a medicament to treat or protect humans or animals from nematode damage, which medicament comprises at least one of the compounds of the Formula I to LIX as described herein. In an embodiment, said medicament comprises at least two compounds of the Formula I to LIX as described herein.

The pharmaceutical preparation or medicament according to the present invention comprises at least one compound, or at least two compounds as described herein and at least one pharmaceutically acceptable carrier, diluent or excipient and/or adjuvant, and optionally one or more further pharmaceutically active compounds. By means of non-limiting examples, such a formulation may be in a form suitable for oral administration, for parenteral administration (such as by intravenous, intramuscular or subcutaneous injection or intravenous infusion), for topical administration, for administration by inhalation, by a skin patch, by an implant, by a suppository, etc... Such suitable administration forms - which may be solid, semi-solid or liquid, depending on the manner of administration - as well as methods and carriers, diluents and excipients for use in the preparation thereof, will be clear to the skilled person; reference is again made to for instance US-A-6,372,778, US-A-6,369,086, US-A-6,369,087 and US-A-6,372,733, as well as to the standard handbooks, such as the latest edition of Remington's Pharmaceutical Sciences. Some preferred, but non-limiting examples of such preparations include tablets, pills, powders, lozenges, sachets, cachets, elixirs, suspensions, emulsions, solutions, syrups, aerosols, ointments, cremes, lotions, soft and hard gelatin capsules, suppositories, sterile injectable solutions and sterile packaged powders (which are usually reconstituted prior to use) for administration as a bolus and/or for continuous administration, which may be Formulated with carriers, excipients, and diluents that are suitable per se for such formulations, such as lactose, dextrose, sucrose, sorbitol, mannitol, starches, gum acacia, calcium phosphate, alginates, tragacanth, gelatin, calcium silicate, microcrystalline cellulose, polyvinylpyrrolidone, polyethylene glycol, cellulose, (sterile) water, methylcellulose, methyl- and propylhydroxybenzoates, talc, magnesium stearate, edible oils, vegetable oils and mineral oils or suitable mixtures thereof. The formulations can optionally contain other pharmaceutically active substances (which may or may not lead to a synergistic effect with the compounds of the invention) and other substances that are commonly used in pharmaceutical formulations, such as lubricating agents, wetting agents, emulsifying and suspending agents, dispersing agents, desintegrants, bulking agents, fillers, preserving agents, sweetening agents, flavoring agents, flow regulators, release agents, etc.. The compositions may also be formulated so as to provide rapid, sustained or delayed release of the active compound(s) contained therein, for example using liposomes or hydrophilic polymeric matrices based on natural gels or synthetic polymers.

The above preparations may be prepared in a manner known per se, which usually involves mixing the active substance(s) to be used with the one or more pharmaceutically acceptable carriers. Reference is again made to US-A-6,372,778, US-A-6,369,086, US-A-6,369,087 and US-A-6,372,733 and the further prior art mentioned above, as well as to the standard handbooks, such as the latest edition of Remington's Pharmaceutical Sciences.

The pharmaceutical preparations of the invention are preferably in a unit dosage form, and may be suitably packaged, for example in a box, blister, vial, bottle, sachet, ampoule or in any other suitable single-dose or multi-dose holder or container (which may be properly labeled); optionally with one or more leaflets containing product information and/or instructions for use. Generally, such unit dosages will contain between 1 and 1000 mg, and usually between 5 and 500 mg, of the compounds of the invention, e.g. about 10, 25, 50, 100, 200, 300 or 400 mg per unit dosage.

A further aspect of the invention is a method for controlling nematodes, comprising the application of a compound as mentioned herein or a nematicidal composition as mentioned herein to an organism to be protected in an effective amount to act on the nematode.

An "organism" as used herein encompasses any organism that is susceptible to nematode infestation.

According to a particular aspect of the invention, the organism is a plant and the compounds as disclosed herein are used to protect plants from nematode infestation. A "plant" as used herein encompasses a plant cell, plant tissue (including callus), plant part, whole plant, ancestors and progeny. The term "plant' also encompasses all plants and plant populations such as desired and undesired wild plants or crop plants (inclusive of naturally occurring crop plants). Crop plants can be plants which can be obtained by conventional plant breeding and optimization methods or by biotechnological and recombinant methods or by combinations of these methods, inclusive of the transgenic plants and inclusive of the plant cultivars protectable or not protectable by plant breeders' rights. A plant part may be any part or organ of the plant and include for example a seed, fruit, fruit body, stem, leaf, needle, stalk, shoot, flower, anther, root, tuber or rhizomes. The term "plant' also encompasses vegetative and generative material for example cuttings, tubers, rhizomes, offsets, seeds, suspension cultures, embryos, meristematic regions, callus tissue, gametophytes, sporophytes, pollen, and microspores. The plant as used herein refers to all plants including algae, ferns and trees. In a preferred embodiment the plant belongs to the superfamily of Viridiplantae, further preferably is a monocot or a dicot. According to one embodiment of the present invention, the plant is susceptible to infestation by a plant parasitic nematode. Therefore, in a preferred embodiment the compounds described herein are used to protect plants against nematodes, wherein said plant is chosen from the group of known nematode host plants, comprising , but not limited to, cereals (corn, rice, barley, wheat, millet), trees (Acer, Betula, Prunus and other fruit trees, Fraxinus, Ulmus), crops (cotton, coffee, tea, citrus, Vinca, tobacco), vegetables & fruits (tomato, cowpea, lettuce, rape, potato, bean, celery, cucurbits, pepper, carrots, aubergines, Allium, eggplant, strawberry, garlic, sugar beet, cabbage, soybean, banana), forage crops (beet, grasses, corn, barley) and ornamentals (Rosaceae, Liliaceae, Azalea, Rhododendron). In a particular embodiment, the compounds described herein are used to protect plants against nematodes, wherein said plant is selected from the group comprising rice, soybean, cotton, potato, banana, strawberry, garlic, eggplant, carrot, sugar beet, tobacco, tomato, cucumber, lettuce, celery and lilies.

The application of the compound or compositions as described herein to the plant may be in the usual way, such as for example by spraying on the plants.

Alternatively, the compounds or compositions as described herein may be applied to the seed grains (coating) by either soaking the grains in a liquid preparation of the compound or coating them with a solid preparation of the compound. For example, the compounds or compositions as described herein can be applied to a seed that has been harvested, cleaned and dried to a moisture content below 15%. In an alternative example, the seed can be one that has been dried and then prepared with water and/or another material and then re-dried before or during the application with the compounds or compositions as described herein. The compounds or compositions as described herein can be applied to the seed at any time between harvest of the seed and sowing of the seed. In an embodiment, the compounds as described herein can be applied to the seed pure, that is, without any diluting or additional components present. In another embodiment, the compounds or compositions as described herein can be applied to the seeds in the form of a nematicide formulation. This formulation may contain one or more other desirable components including but not limited to liquid diluents, binders to serve as a matrix for the compounds as described herein, fillers for protecting the seeds, and plasticizers to improve flexibility, adhesion and/or spreadability of the coating.

The nematicide formulation that is used to treat the seed can be in the form of a suspension; emulsion; slurry of particles in an aqueous medium (e.g., water); wettable powder; wettable granules (dry flowable); and dry granules. If formulated as a suspension or slurry, the concentration of the compounds as described herein in the formulation is preferably about 0.5% to about 99% by weight (w/w), preferably 5-40%.

As mentioned above, other conventional inactive or inert ingredients can be incorporated into the formulation. Such inert ingredients include but are not limited to: conventional sticking agents, dispersing agents such as methylcellulose (Methocel A15LV or Methocel A15C, for example, serve as combined dispersant/sticking agents for use in seed treatments), polyvinyl alcohol (e.g., Elvanol 51-05), lecithin (e.g., Yelkinol P), polymeric dispersants (e.g., polyvinylpyrrolidone/vinyl acetate PVPNA S-630), thickeners (e.g., clay thickeners such as Van Gel B to improve viscosity and reduce settling of particle suspensions), emulsion stabilizers, surfactants, antifreeze compounds (e.g., urea), dyes, colorants, and the like. Further inert ingredients useful in the present invention can be found in McCutcheon's, vol. 1, "Emulsifiers and Detergents," MC Publishing Company, Glen Rock, N.J., U.S.A., 1996. Additional inert ingredients useful in the present invention can be found in McCutcheon's, vol. 2, "Functional Materials," MC Publishing Company, Glen Rock, N.J., U.S.A., 1996.

The compounds as described herein and nematicide formulations thereof can be applied to seeds by any standard seed treatment methodology, including but not limited to mixing in a container (e.g., a bottle or bag), mechanical application, tumbling, spraying, and immersion. Any conventional active or inert material can be used for contacting seeds with the compounds as described herein a, such as conventional film-coating materials including but not limited to water-based film coating materials such as Sepiret (Seppic, Inc., Fairfield, N.J.) and Opacoat (Berwind Pharm. Services, Westpoint, Pa.).

The compounds as described herein can be applied to a seed as a component of a seed coating. Seed coating methods and compositions comprising the compounds as described herein are encompasses in the present invention. Non-limiting examples of coating methods and apparatus for their application which are useful for use with the compounds as described herein are described in EP 0 963 689, U.S. Pat. No. 5,891,246, EP 0 652 707, GB 2 207 035, U.S. Pat. No. 5,107,787, and EP 0 245 731. Seed coating compositions are described, for example, in U.S. Pat. No. 5,939,356, EP 0 758 198, U.S. Pat. Nos. 5,876,739, 5,791,084, WO9702735, U.S. Pat. No. 5,580,544, EP 0 595 894, EP 0 378 000.

Useful seed coatings contain one or more binders and at least one of the compounds or at least two of the compounds as described herein. Binders that are useful in the present invention preferably comprise an adhesive polymer that may be natural or synthetic and is without phytotoxic effect on the seed to be coated. The binder may be selected from polyvinyl acetates; polyvinyl acetate copolymers; ethylene vinyl acetate (EVA) copolymers; polyvinyl alcohols; polyvinyl alcohol copolymers; celluloses, including ethylcelluloses, methylcelluloses, hydroxymethylcelluloses, hydroxypropylcelluloses and carboxymethylcellulose; polyvinylpyrolidones; polysaccharides, including starch, modified starch, dextrins, maltodextrins, alginate and chitosans; fats; oils; proteins, including gelatin and zeins; gum arabics; shellacs; vinylidene chloride and vinylidene chloride copolymers; calcium lignosulfonates; acrylic copolymers; polyvinylacrylates; polyethylene oxide; acrylamide polymers and copolymers; polyhydroxyethyl acrylate, methylacrylamide monomers; and polychloroprene.

It is preferred that the binder be selected so that it can serve as a matrix for the compounds as described herein. While the binders disclosed above may all be useful as a matrix, the specific binder will depend upon the properties of the compounds as described herein. The term "matrix", as used herein, means a continuous solid phase of one or more binder compounds throughout which is distributed as a discontinuous phase one or more of the compounds as described herein. Optionally, a filler and/or other components can also be present in the matrix. The term matrix is to be understood to include what may be viewed as a matrix system, a reservoir system or a microencapsulated system. In general, a matrix system consists of one or more compounds as described herein and filler uniformly dispersed within a polymer, while a reservoir system consists of a separate phase comprising the compounds as described herein, that is physically dispersed within a surrounding, rate-limiting, polymeric phase. Microencapsulation includes the coating of small particles or droplets of liquid, but also to dispersions in a solid matrix.

The amount of binder in the coating can vary, but will be in the range of about 0.01 to about 25% of the weight of the seed, more preferably from about 0.05 to about 15%, and even more preferably from about 0.1%to about 10%.

As mentioned above, the matrix can optionally include a filler. The filler can be an absorbent or an inert filler, such as are known in the art, and may include woodflours, clays, activated carbon, sugars, diatomaceous earth, cereal flours, fine-grain inorganic solids, calcium carbonate, and the like. Clays and inorganic solids, which may be used, include calcium bentonite, kaolin, china clay, talc, perlite, mica, vermiculite, silicas, quartz powder, montmorillonite and mixtures thereof. Sugars, which may be useful, include dextrin and maltodextrin. Cereal flours include wheat flour, oat flour and barley flour. The filler is selected so that it will provide a proper microclimate for the seed, for example, the filler is used to increase the loading rate of the compound as described herein and to adjust the control-release of said compound. The filler can aid in the production or process of coating the seed. The amount of filler can vary, but generally, the weight of the filler components will be in the range of about 0.05 to about 75% of the seed weight, more preferably about 0.1 to about 50%, and even more preferably about 0.5% to 15%.

The amount of compounds as described herein that is applied to the seed will vary depending upon the type of seed and the type of compounds described herein, but the application will comprise contacting the seeds with an amount of at least one compound or at least two compounds as described herein. In general, the amount of compounds described herein that is applied to the seed will range from about 10 gm to about 2000 gm of the compound per 100 kg of the weight of the seed. In a particular embodiment, the amount of compounds applied will be within the range of about 50 gm to about 1000 gm compounds per 100 kg of seed. In another particular embodiment, the amount of compounds applied will be within the range of about 100 gm to about 600 gm compounds per 100 kg of seed. In yet another particular embodiment the amount of compounds applied will be within the range of about 200 gm to about 500 gm of compound per 100 kg of seed weight.

The application may be in the usual way, such as for example by spraying on the plants.

Other methods of application of the compound or compositions as described herein to the plant are possible, such as, for example, the direct treatment of particular parts or organs of the organism, such as treatment of the plant stems, buds or leaves. In a particular embodiment of the present invention, the compound or composition as described herein is applied to the roots of the plant.

The "effective amount" to be used for controlling plant parasitic nematodes in the methods described above is favorably from 500g to 6 kg of the compound per hectare, preferably from 1 to 4 kg of the compound per hectare. Preferably, the "effective amount" is the amount effective for controlling plant parasitic nematodes at concentrations, whereby that amount is non-phytotoxic, more preferably whereby that amount is non-toxic for non-target organisms, i.e. organism other than nematodes.

It is to be understood that the present invention extends to a plant or plant part comprising a compound as described herein or a nematicidal composition as described herein, wherein said plant is resistant against nematodes.

Alternatively, the "organism" is a human or animal and the compounds as described herein are used to protect humans and/or animals from nematode infestation and/or infestation by other parasites such as ecto-parasitic worms, which do not necessarily belong to the group of nematoda. Preferably, an "animal" as used herein means a nematode host animal, for example a cat, dog, sheep, cattle, pig, chicken, horse or pigeons.

The application of the compound or compositions as described herein to protect human or animals, may be by administration by a variety of routes including the oral, rectal, transdermal, subcutaneous, intravenous, intramuscular or intranasal routes, depending mainly on the specific formulation used and the condition to be treated or prevented, and with oral administration usually being preferred. The compound of the invention will generally be administered in an "effective amount", by which is meant any amount of a compound of as described herein that, upon suitable administration, is sufficient to achieve the desired therapeutic or prophylactic effect in the individual to which it is administered. Usually, depending on the condition to be prevented or treated and the route of administration, such an effective amount will usually be between 0.01 to 1000 mg, more often between 0.1 and 500 mg, such as between 1 and 250 mg, for example about 5, 10, 20, 50, 100, 150, 200 or 250 mg, per kilogram body weight day of the patient per day, which may be administered as a single daily dose, divided over one or more daily doses, or essentially continuously, e.g. using a drip infusion. The amount(s) to be administered, the route of administration and the further treatment regimen may be determined by the treating clinician, depending on factors such as the age, gender and general condition of the patient and the nature and severity of the disease/symptoms to be treated. Reference is again made to US-A-6,372,778, US-A-6,369,086, US-A-6,369,087 and US-A-6,372,733 and the further prior art mentioned above, as well as to the standard handbooks, such as the latest edition of Remington's Pharmaceutical Sciences. A further aspect of the invention is a method for controlling nematodes, comprising the application of a compound as described herein or a nematicidal composition as described herein to a locus of the organism to be protected in an effective amount to act on the nematode.

The "locus" as used herein encompasses the environment or habitat of the organism to be protected, such as the soil in case the organism is a plant.

According to a preferred embodiment of the invention, the compound is applied to soil and the method is used to control plant parasitic nematodes that are located in the soil. For example, the compounds as described herein may be introduced directly in the soil on which the plant grows or the locus of the plants is treated with a liquid or solid preparation of the compound. This treatment may occur before planting or after planting. The compound or the composition as described herein may be applied by spraying or by using a drench system or a drip system, or may be in a granulated formulation suitable to be ploughed into the soil.

It is to be understood that the present invention extends to soil comprising a compound or composition as described herein, wherein said soil is susceptible for nematode infestation.

### Examples

The present invention will now be described with reference to the following examples, which are by way of illustration alone and do not limit the scope of the invention in any way.

The following examples describe the nematicidal activity of a compound of Formula I.

### Example 1: Preparation of the tested compounds

The specific compounds as mentioned in Table 1 were purchased from the provider as indicated and were stored as pure compounds.

**Table 1: tested compounds, Formula number as used herein and commercial reference.**

| **Name compound** | **Formula** | **Commercial reference** |
|---|---|---|
| (RS)-1-aminopropylphosphonic acid | II | ACROS Cat. Nr. 344770010 |
| Tetrachloroisophthalonitrile | IV | Riedel-De-Haen Cat. Nr. 36791 |
| N-dichlorofluoromethylthio-N',N'-dimethyl-N-phenylsulfamide | VII | Riedel-De-Haen Cat. Nr. 45433 |
| (E,Z)-4-[3-(4-chlorophenyl)-3-(3,4-dimethoxyphenyl)acryloyl]morpholine | x | Riedel-De-Haen Cat. Nr. 46027 |
| 4'-fluoro-N-isopropyl-2-(5-trifluoromethyl-1,3,4-thiadiazol-2-yloxy)acetanilide | XIII | Riedel-De-Haen Cat. Nr. 46327 |
| (RS)-5-methylamino-2-phenyl-4-(a,a,a-trifluoro-m-tolyl)furan-3(2H)-one | XV | Riedel-De-Haen Cat. Nr. 46286 |
| 2-(2'-furyl)benzimidazole | XVI | Riedel-De-Haen Cat. Nr. 45515 |
| N-tert-butyl-N'-(4-chlorobenzoyl)benzo-hydrazide | XIX | CHEM-SERVICE Cat. Nr. PS-2146 |
| 1-(6-chloro-3-pyridylmethyl)-N-nitroimidazolidin-2-ylideneamine | XXII | Riedel-De-Haen Cat. Nr. 37894 |
| 3-(3,5-dichlorophenyl)-N-isopropyl-2,4-dioxoimidazolidine-1-carboxamide | XXV | Riedel-De-Haen Cat. Nr. 36132 |
| 5-cyclopropyl-1,2-oxazol-4-yl a,a,a-trifluoro-2-mesyl-p-tolyl ketone | XXVI | Riedel-De-Haen Cat. Nr. 46437 |
| prop-2-ynyl (E,E)-(RS)-3,7,11-trimethyldodeca-2,4-dienoate | XXVIII | Dr. Ehrenstorfer Cat. Nr. C14538000 |
| (E)-N-(6-chloro-3-pyridylmethyl)-N-ethyl-N'-methyl-2-nitrovinylidenediamine | XXIX | Riedel-De-Haen Cat. Nr. 46077 |
| 5- [2-(2-butoxyethoxy)ethoxymethyl] -6-propyl-1,3-benzodioxole; 2-(2-butoxyethoxy)ethyl 6-propylpiperonyl ether | XXXII | ACROS Cat. Nr. 33416-1000 |
| (4-ethoxyphenyl)[3-(4-fluoro-3-phenoxyphenyl)propyl](dimethyl)silane | XXXIII | Riedel-De-Haen Cat. Nr. 46026 |
| (RS)-a-cyano-3-phenoxybenzyl N-(2-chloro-a,a,a-trifluoro-p-tolyl)-D-valinate | XXXVI | Riedel-De-Haen Cat. Nr. 46294 |
| N-(4-tert-butylbenzyl)-4-chloro-3-ethyl-1-methylpyrazole-5-carboxamide | XXXVIII | Riedel-De-Haen Cat. Nr. 46438 |
| 3-(4-methoxy-6-methyl-1,3,5-triazin-2-ylcarbamoylsulfamoyl)thiophen-2-carboxylic acid | XL | Riedel-de-Haen 46028 |
| 4,6-dichloro-N -(2-chlorophenyl)-1,3,5-triazin-2-amine; 2-chloro-N -(4,6-dichloro-1,3,5-triazin-2-yl)aniline | XLII | Riedel-De-Haen Cat. Nr. 45325 |
| 5-butyl-2-ethylamino-6-methylpyrimidin-4-yl dimethylsulfamate | XLIII | Riedel-De-Haen Cat. Nr. 45360 |
| 4-cyclopropyl-6-methyl-N-phenylpyrimidin-2-amine | XLIV | Riedel-De-Haen Cat. Nr. 34389 |
| N-cyclopropyl-1,3,5-triazine-2,4,6-triamine | XLV | Riedel-De-Haen Cat. Nr. 45414 |
| N-(4,6-dimethylpyrimidin-2-yl)aniline | XLVI | Riedel-De-Haen Cat. Nr. 46039 |
| 1-(biphenyl-4-yloxy)-3,3-dimethyl-1-(1H-1,2,4-triazol-1-yl)butan-2-ol | XLVIII | Riedel-De-Haen Cat. Nr. 45349 |
| cis,trans-3-chloro-4-[4-methyl-2-(1H-1,2,4-triazol-1-ylmethyl)-1,3-dioxolan-2-yl]phenyl 4-chlorophenyl ether | XLIX | Riedel-De-Haen Cat. Nr. 36531 |
| 1-[3,5-dichloro-4-(3-chloro-5-trifluoromethyl-2-pyridyloxy)phenyl]-3-(2,6-difluorobenzoyl)urea | LI | Riedel-De-Haen: Cat. Nr. 36530 |
| 1-(2-cyano-2-methoxyiminoacetyl)-3-ethylurea | LII | Riedel-De-Haen Cat. Nr. 34326 |
| (±)-a-(2-chloro-N-2,6-xylylacetamido)-g-butyrolactone | LIV | Riedel-De-Haen Cat. Nr. 46143 |
| 2-methoxy-N-(2-oxo-1,3-oxazolidin-3-yl)aceto-2',6'-xylidide | LV | Riedel-De-Haen Cat. Nr. 34365 |
| 5-benzyl-3-furylmethyl (1RS,3RS;1RS,3SR)-2,2-di-methyl-3-(2-methylprop-1-enyl)cyclopropane-carboxylate | LVII | Riedel-De-Haen Cat. Nr. 45655 |
| 2,3,5,6-tetrafluoro-4-methylbenzyl (Z)-(1RS,3RS)-3-(2-chloro-3,3,3-trifluoroprop-1-enyl)-2,2-dimethylcyclopropanecarboxylate | LVIII | Riedel-De-Haen Cat. Nr. 35548 |
| cyclohex-1-ene-1,2-dicarboximidomethyl (1RS,3RS;1RS,3SR)-2,2-dimethyl-3-(2-methylprop-1-enyl)cyclopropanecarboxylate | LIX | Riedel-De-Haen Cat. Nr. 45681 |

### Example 2: The compounds of Table 1 exhibit nematicidal activity against plant parasitic nematodes during root infestation on agar plate

9 cm petri dishes were filled with a 15 ml agar. One stem cutting of a potato microplant (*Solanum tuberosum* cv. Desirée) was placed on top of the agar layer. After 2 to 3 weeks of incubation at 20°C, the root system was sufficiently developed to be inoculated.

The test compounds (see Table 1) were added 2 days before inoculation by way of spreading a 2 ml DMSO-solution with the compound over the agar and allowing the compound to diffuse in the agar during two days at constant temperature of 20°C. During incubation, the plates are protected from light in a dark incubator. The resulting concentration of each compound in each agar plate was 60 µM.

After incubation, approximately 400 axenic juveniles of *Meloidogyne incognita* species were added to the plate.

The plates were incubated in the dark at a constant temperature of 20°C and 5 weeks after inoculation the number of galls formed on the roots were determined by counting. Also any toxic effect of the test compounds on the roots was recorded. 8 weeks after inoculation the plates were stored at low temperature.

Each compound was tested in four replicates. Positive controls were treated with different concentrations of Aldicarb, a known nematicide. Negative controls included 5 replicates of double negative controls (no compound, no nematode), 5 replicates of single negative controls (no compound, with nematode) and 5 replicates of DMSO controls (DMSO solution, with nematode).

As is demonstrated in Table 2, the potato roots treated with a compound as mentioned in Table 1 prior to inoculation with *Meloidogyne* nematodes, show less root knots than untreated roots.

**Table 2: Root knot count of roots treated with the test compounds is shown. Roots on agar not infected and not contacted with the solvent were used as a negative control. The average of the replicate counts is given.**

| **Formula** | **Average** | **Formula** | **Average** |
|---|---|---|---|
| Negative control | 28.7 | XXXVIII | 16.5 |
| II | 6.5 | XL | 0 |
| IV | 11.5 | XLII | 17.25 |
| VII | 13.25 | XLIII | 8 |
| X | 10.5 | XLIV | 9.5 |
| XIII | 9.5 | XLV | 19.5 |
| XV | 18 | XLVI | 18.25 |
| XVI | 14.5 | XLVIII | 12.75 |
| XIX | 10.75 | XLIX | 19.25 |
| XXII | 12 | LI | 17.5 |
| XXV | 17 | LII | 15.5 |
| XXVI | 8.75 | LIV | 14.5 |
| XXVIII | 8.5 | LV | 17.75 |
| XXIX | 17.5 | LVII | 8.5 |
| XXXII | 19.25 | LVIII | 18.25 |
| XXXIII | 17.5 | LIX | 19 |
| XXXVI | 0 | | |

### Example 3: The compounds described herein protect plants against plant parasitic nematodes present in the soil.

The nematicidal activity of the compounds described herein was further tested in 3 independent experiments involving the growth of 3 different crop plants grown on soil infested with 2 types of plant parasitic nematodes. The plants were grown in the greenhouse in pots comprising the infested soil. Different types of soil were used. In addition to the testing of the single compounds, mixtures of 2 compounds (1:1 weight ratio) were also tested.

### Pot assay 1: Meloidogyne infection of potato

### Protocol and procedure

500 ml clay pots were filled with 400 ml of silver sand. One tuber of potato (*Solanum tuberosum* cv. Bintje) was planted in the sand. After 2 to 3 weeks incubation, the potato plant was sufficiently developed to be inoculated.

Plants were grown under the usual standard greenhouse conditions at 14°C-18°C, with 16 hours light and 8 hours dark and 80-90% relative humidity. The pots were watered using individual drippers and fertilizers were added under the form of macro- and micro nutrients according to plant growth requirements. When needed, the plants were sprayed with fungicides and insecticides.

The compounds as described herein were added one day before inoculation. The compounds were dissolved in a 20 ml DMSO-solution and spread over the sand surface. The final concentration is calculated under the assumption that the compound is diffused entirely in the pot. This process occurred during two days at the normal greenhouse conditions described above.

After compound incubation, approximately 1500 juveniles of *Meloidogyne incognita* nematodes were added to the pots.

The pots were incubated at the described greenhouse conditions until nematode development was completed. At week 8 after inoculation the number of galls formed on the roots was counted after washing off the sandy substrate. Also the effect of the compound on the plant development was recorded.

Every compound was tested in three replicates. Positive control plants were treated with different concentrations of aldicarb, a known nematicide. Negative controls involved 12 replicates of double negative controls (no compound, no nematode), 12 replicates of single negative controls (no compound, no DMSO, with nematode), 24 replicates of DMSO controls (DMSO solution, with nematode).

### Nematicidal effects and plant selectivity

On the single negative control plants, the number of egg masses was on average 150 per root system, ranging from 100 to 250. On the DMSO control plants, the number of egg masses was on average 125, with a range from 31 to 250. These results show that the test was successful. The reference compound Aldicarb had no effect on the nematode development at the three lowest concentrations. The highest concentration resulted in a reduction of the egg mass development to 41, which is a reduction to about 1/3.

Compounds have been classified according to their ability to significantly decrease the number of egg masses while showing no effects on the plant development. As assessment of the root development was taken into account.

The tested compounds showed a good nematode control compared to aldicarb.

Table 3 summarizes the data per replicate for each compound and dose. Abbreviations include the classification of the root system as small (s), medium (m) and good (g); an indication of the drought pot (d).

**Table 3**

| **Formula** | **conc. (µM)** | **Replicate 1** | | **Replicate 2** | | **Replicate 3** | |
|---|---|---|---|---|---|---|---|
| XLIII | 0.5 | | g | | g | 30 | g |
| | 2 | | g | 35 | g | 25 | g |
| | 10 | 15 | g | 5 | g | 10 | g |
| | 50 | 0 | g | 15 | g | 5 | g |
| XLIV | 0.5 | | g | | g | 5 | S |
| | 2 | 20 | g | | g | 15 | g |
| | 10 | 20 | g | | g | | s |
| | 0 | 15 | g | 25 | g | 5 | g |
| XLIX | 10 | 70 | g | 60 | g | 40 | g |
| | 50 | | g | 60 | g | 10 | g |
| XIII | 10 | | g | | g | 40 | g |
| | 50 | 60 | g | | g | 30 | g |
| XVI | 10 | | g | 50 | g | | d |
| | 50 | | g | 40 | g | 15 | g |
| XIX | 10 | | g | | g | 80 | g |
| | 50 | 60 | g | 45 | g | 20 | g |
| XXV | 10 | 50 | g | 50 | g | | m |
| | 50 | 30 | g | 25 | g | 20 | g |
| XXIX | 50 | 50 | g | 40 | g | 40 | g |
| XXXVIII | 50 | 40 | g | 70 | g | 1 | g |
| LVIII | 50 | 60 | g | 100 | g | 30 | g |
| XXXVI/XXXII | 50 | 60 | g | 70 | g | 70 | g |
| XXXVI + X | 50 | 20 | g | 75 | g | 25 | g |
| XLIV/XLIII | 2 | 50 | m | 50 | s | | g |
| | 10 | 10 | m | 10 | m | | d |
| | 50 | 50 | g | | g | 50 | d |
| XLIV/XXVIII | 50 | 15 | g | 15 | g | 0 | m |
| XLIV/XXXVI | 10 | | s | 10 | m | 40 | m |
| | 50 | 50 | m | 50 | m | 20 | s |
| DMSO | | 62 | s | 100-125 | g | >200 | g |
| DMSO | | 150-200 | g | 100-125 | m | 150-200 | g |
| DMSO | | 75-100 | g | 100-125 | g | | d |
| DMSO | | 31 | g | 100-125 | g | 75-100 | g |
| DMSO | | | d | 125-150 | g | 100-125 | g |
| DMSO | | 75-100 | g | | d | 100-125 | g |
| Single negative | | >200 | g | 100-125 | g | 100-125 | g |
| Single negative | | 125-150 | m | >200 | g | >200 | g |
| Single negative | | 100-125 | m | 150-200 | g | | d |
| Double negative | | 0 | g | 0 | g | 0 | g |
| Double negative | | 0 | g | 0 | g | 0 | g |
| Double negative | | 0 | g | 0 | g | 0 | g |

### Pot assay 2: Meloidogyne infection of tomato

The soil used in this assay originated from a plot, heavily infested with *Meloidogyne* nematodes. Part of this soil was sterilized by autoclaving and was used as negative control. Sandy soil, which was not infested with nematodes, was pursued from a commercial source.

Plastic seedling trays with wells of 60ml capacity were filled with about 40 ml of soil per well. 5 ml of water per well was used for irrigation.

Compounds as described herein were tested in 4 different rates and with 12 replicates for each concentration. The compounds as described herein were stored as dry films of 4 different concentrations. The day of the application of the compounds, all the dry films were dissolved in 60 ml water and poured into the 12 replicate wells: 5 ml per well. Every tray of 12 wells was identified with a label, indicating compound and concentration used. The 4 final rates in the soil of the tested compound were approximately 0.05 mg, 0.20 mg, 1 mg and 5 mg. These amounts translate to field application rates respectively as 30, 120, 600 and 3000 g per hectare.

3-5 days after application of the tested compound, tomato seeds (cv. Rio Grande) were sown in the wells by hand, at about 2 cm deep. A light cover of vermiculite on the surface was used to avoid dehydration. Plants were irrigated by micro-nebulization 3-4 times per week at a rate of 3 L/m², weeded by hand and treated with fertilizers, fungicide and insecticides when needed.

Their resistance against nematode infection was monitored and the efficacy of compounds described herein as a nematicide was measured. Furthermore the phytotoxicity of the test compounds was evaluated.

Efficacy of the compounds described herein as nematicide was measured by giving the roots a percentage of infestation measured as follows. Plants were grown to reach good development of the roots, which corresponds to plants grown to about 10 cm high at about one month after emergence. After removal of the soil from the roots by rinsing with water, the roots were visually inspected and root galls were counted on 4 plants of the set of 12 replicate plants. The number of galls and the corresponding degree of damage was scored on the 0 to 5 infestation scale described by Lambertini (1971, Tobacco, 738, 5-10), where 0 is no attack: no galls on root system (healthy plant), free from galls and 5 is extremely heavy attach: root system completely reduced and deformed by big gall (plant and roots dead, rotten root).

Phytotoxicity of compounds as described herein when used as a nematicide, was measured as follows. Plants were grown until most plants had emerged in the control wells and vigor and development of the control plants was adequate. At that moment, plant emergence was assessed for the plants treated with any of the compounds as described herein, by counting the number of plants per compound-concentration.

Vigor of roots was also assessed once the plants are well established so as not to loose plants. To assess vigor of the plants or roots, a visual value ranging from 0 to 10 (0 no vigor, 10 equal to control) was scored per compound-concentration. Symptoms of damage to the crop were accurately described (e.g. stunting chlorosis, deformation) according to the EPPO standard PP 1/135(2) guideline on phytotoxicity assessment which contain sections on individual crops.

Positive control plants were treated with a 10 micromolar concentration of oxamyl (Vydate, 10% SL; the rate of 10 micromolar corresponds to a commercial rate of 20 1/ha), a known nematicide. Negative controls involved double negative controls (no compound, sterile soil), and single negative controls (no compound, with nematode infested soil).

### Nematicidal effects and plant selectivity

On the double negative control plants, the average percentage of infestation was 0% (sterile soil, no compound applied). The average root development was scored to be 8.9. For the single negative control plants, the average percentage of infestation was 66% and the average root development was scored to be 4.1 (no compound, infested soil). The reference compound oxamyl showed a percentage of infestation of 13.8% while the root development was scored to be 7.5.

The tested compounds were both crop safe and equal to or better than oxamyl, for at least one or more of the doses applied.

Table 4 summarizes the % infestation and the root development per compound.

**Table 4**

| **Formula (Treatment)** | **RATE*** | **% INF.** | **ROOT DEV.** | **Formula** | **RATE*** | **% INF.** | **ROOT DEV.** |
|---|---|---|---|---|---|---|---|
| II | 0.05 | 0.0 | 6.7 | XXXII | 0.05 | 0.0 | 6.5 |
| | 0.2 | 0.0 | 7.3 | | 0.2 | 0.0 | 7.6 |
| | 1 | 0.0 | 7.3 | | 1 | 1.3 | 7.6 |
| | 5 | 0.0 | 7.9 | | 5 | 2.5 | 6.7 |
| XLII | 0.05 | 3.8 | 6.8 | XXXVI + XLIII | 0.05 | 0.0 | 8.3 |
| | 0.2 | 0.0 | 6.9 | | 0.2 | 2.5 | 8.6 |
| | 1 | 0.0 | 8.2 | XXXVI + XIII | 0.05 | 8.8 | 8.3 |
| | 5 | 0.0 | 8.1 | | 0.2 | 7.5 | 8.2 |
| XLVIII | 0.05 | 0.0 | 7.5 | | 1 | 1.3 | 8.6 |
| | 0.2 | 1.3 | 7.4 | | 5 | 0.0 | 6.8 |
| | 1 | 3.8 | 7.2 | XXXVI + XXVI | 0.05 | 3.8 | 8.8 |
| | 5 | 1.3 | 7.8 | | 0.2 | 1.3 | 8.3 |
| XLIII | 0.05 | 1.3 | 7.8 | XXXVI + XXXII | 0.05 | 22.5 | 7.0 |
| XLIX | 1 | 0.0 | 7.9 | | 0.2 | 16.3 | 6.5 |
| X | 0.05 | 5.0 | 6.8 | | 1 | 2.5 | 8.4 |
| | 0.2 | 1.3 | 7.9 | | 5 | 0.0 | 8.6 |
| XXVI | 0.05 | 1.3 | 7.4 | XXXVI + X | 0.05 | 3.8 | 7.8 |
| | 0.2 | 3.8 | 6.6 | | 0.2 | 1.3 | 7.9 |
| | 1 | 0.0 | 7.8 | XL + XIII | 0.05 | 5.0 | 7.9 |
| XXVIII | 0.05 | 2.5 | 7.4 | | 0.2 | 3.8 | 7.4 |
| | 0.2 | 1.3 | 7.8 | XLIV+X | 0.05 | 2.5 | 7.9 |
| XXIX | 0.05 | 3.8 | 7.9 | | 0.2 | 3.8 | 7.8 |
| | 0.2 | 1.3 | 7.7 | XLIV+XLIII | 0.05 | 8.8 | 7.4 |
| | 1 | 2.5 | 7.5 | | 0.2 | 10.0 | 7.0 |
| | 5 | 5.0 | 6.6 | | 1 | 2.5 | 8.3 |
| LIV | 0.05 | 5.0 | 7.5 | | 5 | 10.0 | 7.1 |
| | 0.2 | 5.0 | 7.2 | XLIV+XIII | 0.05 | 0.0 | 7.0 |
| | 1 | 3.8 | 7.6 | | 0.2 | 0.0 | 8.2 |
| | 5 | 2.5 | 6.6 | | 1 | 0.0 | 7.8 |
| Oxamyl | 1 | 13.8 | 7.5 | | | | |
| *Untreated infested* | | 66.3 | 4.1 | | | | |
| *Untreated sterile* | | 0.0 | 8.9 | | | | |

| | | | | | | | |
|---|---|---|---|---|---|---|---|
| *: mg; % INF: % Infestation | | | | | | | |

### Pot assay 3: Heterodera infection of sugar beet

The soil used in this assay originated from a *Heteroderα* nematode infested sugar plot of which the infestation was confirmed by means of several soil analyses. Each pot was filled up with a soil mixture composed as follows: a) the infested soil was constituted by silt loam soil (about 600 g/pot) mixed with sterile peat (about 600 g/pot) and sterile cork (about 200 g/pot); b) the sterile soil was instead constituted only by sterile peat (1200 g/pot) and sterile cork (200 g/pot).

Each compound or compound mixture as described herein was tested in 4 different rates with 4 replicates per rate. One pot per replicate was used in which 18 beava sugar beet seeds (variety GEA (KWS)) were sown. After crop germination, the number of plants was reduced to 10 plants. The 4 rates added to the soil of the tested compounds or compound mixtures were 0.05 mg, 0.20 mg, 1 mg and 5 mg. These amounts translate to field application rates respectively as 30, 120, 600 and 3000 g per hectare.

Efficacy of the compounds described herein as nematicide was measured by visual inspection of the crop vigor and the crop height. The crop vigor evaluation is based on a 0-100 scale, where 0 is "no vigor" and 100 is "maximum vigor". The crop height development is based on a measurement, in cm, per plant, excluding the root system.

Phytotoxicity assessments were carried by assessing any possible effects of the chemicals on the crop, such as chlorosis, yellowing, stunting, in comparison to the untreated control without nematodes. Phytotoxicity was expressed by a 0-100 injury scale, where 0 is "no injury" (comparable to the control plants containing no nematode) and 100 "maximum crop damage, plants dead or necrotic". Furthermore, the number of plants that emerged was counted, considering those which failed to sprout up since this is a parameter that is linked to the phytotoxicity of the plants.

Positive control plants were treated with Oxamyl (Vydate 5 G, 5% gr) at a rate of 40 kg fp per ha. Negative controls involved single negative controls (no compound, with nematode infested soil; referenced as "Untreated 1") and double negative controls (no compound, sterile soil; referenced as "Untreated 2").

### Nematicidal effects and plant selectivity

Sugar beet plants in the pots belonging to Untreated 1 (infested soil) showed the typical symptoms of damage by *Heterodera,* i.e. yellowing, stunted growth as well as the presence of cysts on the roots. The average crop vigor was scored to be 30%. The average crop development was measured to be 4 cm. The Untreated 2 (no compound, no infestation) sterile control reached values equal to 100% of Crop VIGOR and 15 cm of Height and gave the criteria employed for product selection. The positive control, Vydate, showed average crop vigor of 80% and a crop development of 12 cm.

The compounds proved capable of achieving together both the goals of good results against nematodes and good selectivity towards beet plants and were equal to or better than Vydate , for at least one or more of the doses applied.

**Table 5**

| **Name** | **Rate (mg)** | **# crops emerged** | **crop vigor** | **crop height** |
|---|---|---|---|---|
| | | (max 18) | (max 100%) | (cm) |
| XLIII | 1 | 18 | 80 | 14 |
| XLIII | 5 | 18 | 100 | 15 |
| XVI | 0.05 | 18 | 90 | 13 |
| XXXVI | 0.05 | 18 | 70 | 9 |
| XXXVI | 0.2 | 18 | 100 | 14 |
| XXXVI | 1 | 18 | 100 | 15 |
| XXXVI | 5 | 18 | 90 | 13 |
| XL | 0.05 | 18 | 90 | 12 |
| XXXVI/XLIII | 0.05 | 18 | 90 | 12 |
| XLIV/XLIII | 0.05 | 18 | 90 | 11 |
| XLIV/XLIII | 0.2 | 18 | 90 | 11 |
| XLIV/XLIII | 1 | 18 | 80 | 12 |
| XLIV/XLIII | 5 | 18 | 80 | 12 |
| XLIV/XIII | 0.05 | 18 | 90 | 12 |
| XLIV/XIII | 0.2 | 18 | 90 | 12 |
| XLIV/XIII | 1 | 18 | 90 | 12 |
| XLIV/XIII | 5 | 18 | 80 | 12 |
| XLIV/XXVI | 0.05 | 18 | 80 | 11 |
| Untreated 1 | | 18 | 30 | 4 |
| Untreated 2 | | 18 | 100 | 15 |
| VYDATE 5 G | 40 | | 100 | 12 |

### Example 4: Nematicidal formulations

### Granule

To a mixture of 10 parts of a compound as described herein, 30 parts of bentonite (montmorillonite), 58 parts of talc and 2 parts of ligninsulphonate salt, 25 parts water are added, well kneaded, worked up into granules of 10-40 mesh with the help of an extrusion granulator and dried at 40-50 °C to obtain granules.

### Granule

95 Parts of clay mineral particles having a particle diameter distribution of 0.2-2 mm are put into a rotary mixer. While rotating it, 5 parts of a compound as described herein, are sprayed onto the mineral particles together with a liquid diluent to obtain uniformly wetted particles and the particles are then dried at 40-50 °C to obtain granules.

### Emulsifiable Concentrates

30 Parts of a compound as described herein, 55 parts of xylene, 8 parts of polyoxyethylene alkyl phenyl ether and 7 parts of calcium alkylbenzenesulphonate are mixed and stirred to obtain an emulsion.

### Wettable Powder

15 parts of a compound as described herein, 80 parts of a mixture of white carbon (hydrous amorphous silicon oxide fine powders) and powder clay (1:5), 2 parts of sodium alkylbenzenesulphonate and 3 parts of sodium alkylnaphthalenesulphonate-fonnalin-condensate are crushed and mixed together to obtain a wettable powder.

### Example 5. Nematicide field trials

Formulation details are given in Table 6.

**Table 6**

| **FORMULA** | **Active ingredient** | **Concentration of ai*** | **Formulation type**** |
|---|---|---|---|
| XLIII | 5-butyl-2-ethylamino-6-methylpyrimidin-4-yl dimethylsulfamate | 250 g/l | SC |
| XLIV | 4-cyclopropyl-6-methyl-N-phenylpyrimidin-2-amine | 75.0% | WG |
| XXV | 3-(3,5-dichlorophenyl)-N-isopropyl-2,4-dioxoimidazolidine-1-carboxamide | 500 g/l | SC |
| XXXII | 5-[2-(2-butoxyethoxy)ethoxymethyl]-6-propyl-1,3-benzodioxole; 2-(2-butoxyethoxy)ethyl 6-propylpiperonyl ether | 900 g/l | SC |
| XXXVI | (RS)-a-cyano-3-phenoxybenzyl N-(2-chloro-a,a,a-trifluoro-p-tolyl)-D-valinate | 250 g/l | SC |
| **Commercial Reference** | | | |
| Vyadate 10L | Oxamyl | 10.0%w/w | SC |
| Vyadate 10G | Oxamyl | 10.0% w/w | GR |

All products are stable in water. * ai: active ingredient. ** GR: granule; SC: Suspension concentrate (= flowable concentrate); WG: Water dispersible granules

### 5.1. Nematicidal effects on Tomato

### Experimental setup

Open field tomatoes (Lycopersicon esculentum, variety incas) were grown on sandy soil with a natural root-knot nematode (Meloidogyne spp) population. Soil samples, collected prior to planting, contained on average 113 J2 juveniles per 100 g soil. A program of 5 applications with intervals of about 14 days was started two days after transplantation.

An experimental pattern at Complete Randomized Blocks with four replicas was adopted. Besides the experimental products, each test also included an untreated control and a treatment with the standard commercial product VYDATE 10L (10%) applied in accordance to label instructions.

A good performance of the crop was observed during the whole duration of the study: no symptoms of attack by fungal diseases or insects were detected on leaves, as well as no symptoms of water shortages were spotted.

### Results

The read-outs are the average yield of the marketable tomatoes per plant (Table 7). The level of nematode attack of the root system at the time of harvesting was assessed by means of the lamberti scoring.

**Table 7**

| **Treatment (Formula)** | **Product Rate*** | **Average root galling**** | **Average yield of marketable** | **Range Root fruits° galling*** | **Range Yield marketable fruits°** |
|---|---|---|---|---|---|
| Untreated | | 2.4 | 0.8 | 2.0-2.5 | 0.70-0.90 |
| Vyadate 10L | 1000 | 1.1 | 1.3 | 0.5-1.5 | 1.24-1.40 |
| XLIII | 400 | 1.1 | 1.28 | 1.0-1.5 | 1.12-1.42 |
| XLIII | 800 | 1.6 | 1.25 | 1.5-2.0 | 1.00-1.60 |
| XXV | 100 | 1.8 | 1.45 | 1.5-2.0 | 1.24-1.75 |
| XXV | 200 | 1.3 | 1.33 | 1.0-2.0 | 1.15-1.62 |
| XXXVI | 400 | 1.8 | 1.43 | 1.5-2.0 | 1.24-1.72 |

| **Treatment (Formula)** | **Product Rate*** | **Average root galling**** | **Average yield of marketable fruits°** | **Range Root galling*** | **Range Yield marketable fruits°** |
|---|---|---|---|---|---|
| XXXVI | 800 | 1.8 | 1.26 | 1.0-2.0 | 1.19-1.32 |

| | | | | | |
|---|---|---|---|---|---|
| *g ai /ha : grammes of active ingredient per ha ; ** 0-5 Lamberti scale ; ° : kg/plant/pot | | | | | |

### Efficacy:

A/ Gall Index/root: Untreated control showed an average of 2.4 Gall Index/root. VYDATE 10 L (1000 g/ha) showed an average of 1.1 Gall Index/root.

B/ Total yield/plant: The untreated control yielded an average of 0.8 kg/plant. VYDATE 10 L at 1000 g yielded an average of 1.3 kg/plant. All treatments were statistically different from the untreated control with values ranging from 1.28 to 1.45 kg/plant.

A good performance of the crop was observed during the whole duration of the study: no symptoms of attack by fungal diseases or insects were detected on leaves, as well as no symptoms of water shortages were spotted. Crop vigor for the experimental compounds, assessed at two different occasions, was statistically not different to the commercial standard (=100%). Crop selectivity (phytotoxicity), assessed at two different occasions, was statistically not different from the untreated control (=0%).

### 5.2. Nematicidal effects on Cucumber

### Experimental setup

Open ground grown cucumber (Cucumis sativus cv Carine) were grown on sandy soil with a natural root-knot nematode (Meloidogyne spp) population. Soil samples, collected prior to planting, contained on average 8 J2 juveniles per 100 g soil. A program of 4 applications with intervals of about 14 days was started six days after transplantation.

An experimental pattern at Complete Randomized Blocks with four replicas was adopted. Besides the experimental products, each test also included an untreated control and a treatment with the standard commercial product VYDATE 10L (10%) applied in accordance to label instructions.

### Results

The read-outs are the average yield of the marketable tomatoes per plant. The level of nematode attack of the root system at the time of harvesting was assessed by means of the lamberti scoring.

**Table 8**

| **Treatment (Formula)** | **Product Rate*** | **Average root galling**** | **Average yield of marketable fruits°** | **Range Root galling*** | **Range Yield marketable fruits°** |
|---|---|---|---|---|---|
| Untreated | | 4.25 | 3.5 | 3-5 | 2.95-3.85 |
| Vyadate 10L | 1000 | 1.88 | 9.2 | 1.5-2 | 8.05-9.71 |
| XLIII | 1500 | 1.5 | 8.7 | 1-2 | 7.85-9.3 |
| XLIV | 500 | 2.5 | 7.3 | 2-3 | 6.6-7.61 |
| XLIV | 1500 | 2.5 | 8.3 | 2-3 | 7.39-9.23 |
| XXV | 500 | 2.75 | 6.7 | 2-4 | 6.22-7.32 |
| XXV | 1500 | 1.75 | 9.1 | 1-2 | 8.25-10.2 |
| XXXVI | 250 | 1.88 | 9.3 | 1.5-2 | 8.7-9.85 |
| XXXVI | 500 | 1.63 | 9.6 | 1-2 | 9.1-9.85 |

| | | | | | |
|---|---|---|---|---|---|
| *g ai /ha : grammes of active ingredient per ha ; ** 0-5 Lamberti scale ; ° : kg/plant/pot | | | | | |

### Efficacy:

A/ Gall Index/root: Untreated control showed an average of 4.25 Gall Index/root (GI). All other treatments were statistically different from the untreated control. VYDATE 10 L (1000 g/ha) showed an average of 1.88 Gall Index/root.

B/ Total yield/plant: The untreated control yielded an average of 3.5 kg/plant. All treatments were statistically different from the untreated. VYDATE 10 L at 1000 g yielded an average of 9.2 kg/plant.

### 5.3. Nematicidal effects on Carrots

### Experimental setup

Garden carrots were grown in the open field. The soil contained high levels of stubby root nematodes (*Paratrichodorus*), stunt nematodes (*Tylenchorhynchus* spp.), root lesion nematodes (Pratylenchus spp.) and root knot nematodes (*Meloidogyne* spp.).

An experimental pattern at Complete Randomized Blocks with four replicas was adopted. Besides the experimental products, each test also included an untreated control and a treatment with the standard commercial product VYDATE 10L (10%) applied in accordance to label instructions.

### Results

In carrots, nematodes cause deformation such as stunting, dwarfing, twisting, splitting and bearding. For these experiments, the total percentage of deformed carrots were considered, as these are not marketed for human consumption and are of no commercial interest.

Three different tests have been performed (Tables 9, 10 and 11), each containing an untreated and commercial reference control. All treatments were statistically different from untreated control

**Table 9**

| **Treatment Name** | **Product Rate*** | **% total deformed** | **Range %total deformed** |
|---|---|---|---|
| Untreated | | 49.21 | 44.95-55.00 |
| XLIII | 500 | 35.53 | 38.14-47.83 |
| XLIII | 1500 | 41.34 | 28.43-50.45 |
| XLIII | 3000 | 41.02 | 29.81-44.92 |
| XLIV | 500 | 37.41 | 29.81-44.92 |
| XLIV | 1500 | 44.85 | 41.18-48.6 |
| XLIV | 3000 | 37.10 | 26.47-46.3 |
| Vyadate 10G | 1800 | 37.61 | 32.43-37.25 |

| | | | |
|---|---|---|---|
| *g ai /ha : grammes of active ingredient per ha | | | |

**Table 10**

| **Treatment Name** | **Product Rate*** | **% total deformed** | **Range %total deformed** |
|---|---|---|---|
| Untreated | | 45.15 | 37.98-50.55 |
| XLIII+XXXII | 375(B) + 125(P) | 35.62 | 28.30-47.5 |
| XLIII+XXXII | 1125(B) + 375(P) | 28.68 | 20.00-43.59 |
| XLIII+XXXII | 2250(B)+750(P) | 33.35 | 27.68-39.81 |
| XLIV+XXXII | 375(B) + 125(P) | 32.89 | 28.43-36.63 |
| XLIV+XXXII | 1125(B) + 375(P) | 38.45 | 28.97-51.16 |
| XLIV+XXXII | 2250(B)+750(P) | 33.99 | 33.33-34.34 |
| Vyadate 10G | 1800 | 30.12 | 24.04-36.56 |

| | | | |
|---|---|---|---|
| *g ai /ha : grammes of active ingredient per ha | | | |

**Table 11**

| **Treatment (Formula)** | **Product Rate*** | **% total deformed** | **Range %total deformed** |
|---|---|---|---|
| Untreated | | | 37.07-43.55 |
| XXV + XXXII | 375(I) + 125(P) | 28,31 | 19.63-36.19 |
| XXV + XXXII | 1125(I)+375(P) | 26,32 | 22.70-29.00 |
| XXV + XXXII | 2250(I) + 750(P) | 25,47 | 26.00-34.62 |
| XXXVI + XXXII | 185(T) + 65(P) | 31,49 | 26-34.62 |
| XXXVI+XXXII | 375(T) + 125(P) | 31,36 | 27.18-38.61 |
| XXXVI + XXXII | 750(T) + 250(P) | 29,43 | 27.45-31.31 |
| Vyadate 10G | 1800 | 28,96 | 27.36-28.85 |

| | | | |
|---|---|---|---|
| *g ai /ha : grammes of active ingredient per ha | | | |

The present invention relates to the following uses, compositions and methods:
A1. Use of a nematicidal composition comprising at least one compound selected from the group of compounds of Formulas XXIII and XXIV or a stereoisomer, tautomer, racemic thereof, or a salt, ester and/or solvate thereof, as a nematicide, 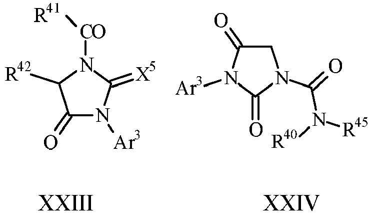 wherein for Formula XXIII: Ar³ represents a phenyl radical or a phenyl radical carrying one to five substituents, which may be the same or different, selected from halogen atoms, alkyl and alkoxy radicals containing one to four carbon atoms and the trifluoromethyl radical, R⁴¹ is selected from an alkoxy radical containing one to four carbon atoms or a grouping -NR⁴³R⁴⁴, wherein R⁴³ and R⁴⁴ are the same or different and each represents a hydrogen atom, an alkyl radical containing one to four carbon atoms or an alkenyl radical containing two to four carbon atoms, R⁴² is selected from a hydrogen atom or an alkyl radical containing one to four carbon atoms, and X⁵ represents an oxygen or sulphur atom,
   wherein for Formula XXIV: Ar³ represents a phenyl radical or a phenyl radical carrying one to five substituents, which may be the same or different, selected from halogen atoms, R⁴⁰ and R⁴⁵ are the same or different and each independently represents a hydrogen atom, or C₁-C₄ alkyl radical.
A2. Use according to A1, wherein at least two compounds are used.
A3. Use according to A2, wherein said second compound is selected from ampropylfos, bitertanol, chlorfluazuron, cymoxanil, dichlofluanid, difenoconazole, dimethomorf, flufenacet, flurtamone, fluvalinate, fuberidazole, halofenozide, imidacloprid, iprodione, isoxaflutole, kinoprene, nitenpyram, ofurace, oxadixyl, piperonyl butoxide, resmethrin, tebufenpyrad, tefluthrin, tetramethrin, thifensulfuron-methyl, anilazine, bupirimate, cyprodinyl, cyromazine, pyrimethanil, or stereoisomer, tautomer, racemic thereof, or salt, ester and/or solvate thereof.
A4. Use according to A2, wherein a first compound is a compound of Formula XXIII or XXIV, and wherein at least one other compound has a Formula XXX, XXXI or XLI, 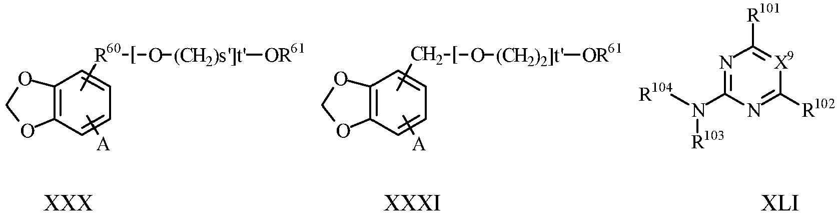 wherein for Formula XXX: A is hydrogen or an aliphatic radical on the benzene nucleus, R⁶⁰ is an intermediate aliphatic hydrocarbon radical, R⁶¹ is an alkyl, aryl, or a heterocyclic or carboxylic group, s' is two or more and t' is one in the case of a monoglycol ether and more than one in the case of a polyglycol ether radical,
   wherein for Formula XXXI: A is hydrogen or an aliphatic radical on the benzene nucleus and R⁶¹ is selected from alkyl, aryl, or a heterocyclic or carboxylic group, and t' is one in the case of a monoglycol ether and more than one in the case of a polyglycol ether radical,
   wherein for Formula XLI: X⁹ represents the group =N-, -CH= or -C(R¹⁰⁵)=; R¹⁰⁵ is selected from lower alkyl, lower alkynyl, or lower alkenyl; R¹⁰¹ is selected from hydrogen, halogen, alkyl, OR¹⁰⁶, OSO₂N(R¹⁰)₂, NH₂, wherein R¹⁰⁶ and R¹⁰⁷ are independently of each other selected from hydrogen or a lower alkyl group;R¹⁰² is selected from lower alkyl, cycloalkyl, halogen, NH₂ or OH;R¹⁰³ is selected from hydrogen, lower alkyl or cycloalkyl groups; R¹⁰⁴ is selected from hydrogen or an aromatic hydrocarbon radical selected from phenyl, naphthyl or phenanthryl, which may be further ring substituted with hydrocarbon or monovalent radicals selected from nitroso, nitro, amino, substituted amino, fluoro, chloro, bromo, iodo, hydroxyl, substituted hydroxyl, azo, cyano, thiocyano, acyloxy, aroyloxy, mercaptyl and substituted mercaptyl groups.
A5. Use according to A4, wherein said first compound is iprodione and wherein said at least one other compound is piperonyl butoxide.
A6. Use according to A4 wherein the compound of Formula XXIII or XXIV is iprodione and the compound of Formula XLI is bupirimate .
A7. Use according to any of A1 to A6, wherein said nematicide is active against plant parasitic nematodes.
A8. Use according to any of A1 to A6, for controlling nematodes, comprising applying an effective amount of said nematicidal composition to a plant or plant part to be protected or to a locus thereof.
A9. Use according to A8, wherein said locus is soil.
A10. Use according to A8 or A9, wherein the application occurs before planting.
A11. Use according to A8 or A9, wherein the application occurs after planting.
A12. Use according to any of A1 to A11, wherein said compound is used in a mixture with herbicides, fungicides, bactericides, acaricides, nematicides or insecticides.
A13. Use according to any of A1 to A6, for the preparation of a medicament to treat or protect humans or animals from nematode damage.
A14. A nematicidal composition, comprising an effective amount of at least two compounds wherein said first compound is selected from the group of compounds of Formula XXIII or XXIV and said second compound is selected from the group of compounds of Formula XXX, XXXI, XLI, or a stereoisomer, tautomer, racemic thereof, or a salt, ester and/or solvate thereof, 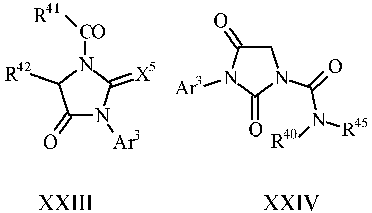 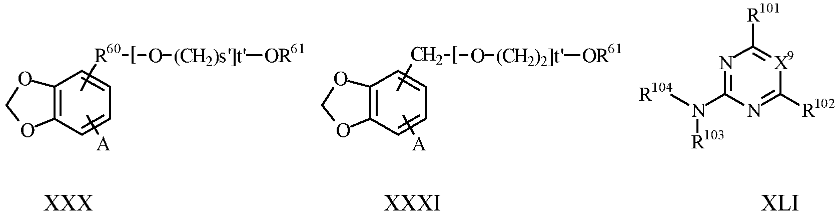 wherein for Formula XXIII: Ar³ represents a phenyl radical or a phenyl radical carrying one to five substituents, which may be the same or different, selected from halogen atoms, alkyl and alkoxy radicals containing one to four carbon atoms and the trifluoromethyl radical, R⁴¹ is selected from an alkoxy radical containing one to four carbon atoms or a grouping -NR⁴³R⁴⁴, wherein R⁴³ and R⁴⁴ are the same or different and each represents a hydrogen atom, an alkyl radical containing one to four carbon atoms or an alkenyl radical containing two to four carbon atoms, R⁴² is selected from a hydrogen atom or an alkyl radical containing one to four carbon atoms, and X⁵ represents an oxygen or sulphur atom,
   wherein for Formula XXIV: Ar³ represents a phenyl radical or a phenyl radical carrying one to five substituents, which may be the same or different, selected from halogen atoms, R⁴⁰ and R⁴⁵ are the same or different and each independently represents a hydrogen atom, or C₁-C₄ alkyl radical,
   wherein for Formula XXX: A is hydrogen or an aliphatic radical on the benzene nucleus, R⁶⁰ is an intermediate aliphatic hydrocarbon radical, R⁶¹ is an alkyl, aryl, or a heterocyclic or carboxylic group, s' is two or more and t' is one in the case of a monoglycol ether and more than one in the case of a polyglycol ether radical,
   wherein for Formula XXXI: A is hydrogen or an aliphatic radical on the benzene nucleus and R⁶¹ is selected from alkyl, aryl, or a heterocyclic or carboxylic group, and t' is one in the case of a monoglycol ether and more than one in the case of a polyglycol ether radical,
   wherein for Formula XLI: X⁹ represents the group =N-, -CH= or -C(R¹⁰⁵)=; R¹⁰⁵ is selected from lower alkyl, lower alkynyl, or lower alkenyl; R¹⁰¹ is selected from hydrogen, halogen, alkyl, OR¹⁰⁶, OSO₂N(R¹⁰⁷)₂, NH₂, wherein R¹⁰⁶ and R¹⁰⁷ are independently of each other selected from hydrogen or a lower alkyl group;R¹⁰² is selected from lower alkyl, cycloalkyl, halogen, NH₂ or OH;R¹⁰³ is selected from hydrogen, lower alkyl or cycloalkyl groups; R¹⁰⁴ is selected from hydrogen or an aromatic hydrocarbon radical selected from phenyl, naphthyl or phenanthryl, which may be further ring substituted with hydrocarbon or monovalent radicals selected from nitroso, nitro, amino, substituted amino, fluoro, chloro, bromo, iodo, hydroxyl, substituted hydroxyl, azo, cyano, thiocyano, acyloxy, aroyloxy, mercaptyl and substituted mercaptyl groups.
A15. A nematicidal composition comprising an effective amount of at least two compounds wherein said first compound is selected from the group of compounds of Formula XXIII or XXIV and said second compound is selected from bupirimate, anilazine, cyromazine, iprodione, ampropylfos, dichlofluanid, dimethomorf, flufenacet, flurtamone, fuberidazole, halofenozide, imidacloprid, isoxaflutole, kinoprene, nitenpyram, piperonyl butoxide, fluvalinate, tebufenpyrad, thifensulfuron-methyl, cyprodinil, pyrimethanil, bitertanol, difenoconazole, chlorfluazuron, cymoxanil, ofurace, oxadixyl, resmethrin, tefluthrin, tetramethrin or stereoisomer, tautomer, racemic thereof, or salt, ester and/or solvate thereof, 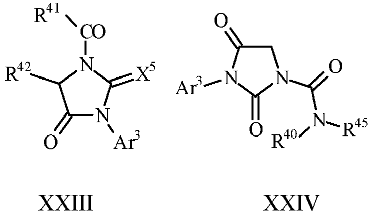 wherein for Formula XXIII: Ar³ represents a phenyl radical or a phenyl radical carrying one to five substituents, which may be the same or different, selected from halogen atoms, alkyl and alkoxy radicals containing one to four carbon atoms and the trifluoromethyl radical, R⁴¹ is selected from an alkoxy radical containing one to four carbon atoms or a grouping -NR⁴³R⁴⁴, wherein R⁴³ and R⁴⁴ are the same or different and each represents a hydrogen atom, an alkyl radical containing one to four carbon atoms or an alkenyl radical containing two to four carbon atoms, R⁴² is selected from a hydrogen atom or an alkyl radical containing one to four carbon atoms, and X⁵ represents an oxygen or sulphur atom,
   wherein for Formula XXIV: Ar³ represents a phenyl radical or a phenyl radical carrying one to five substituents, which may be the same or different, selected from halogen atoms, R⁴⁰ and R⁴⁵ are the same or different and each independently represents a hydrogen atom, or C₁-C₄ alkyl radical.
A16. A nematicidal composition according to A 14 or A15, comprising further at least one of the following: surfactant, solid or liquid diluent, characterized in that the surfactant or the diluent is normally used in nematicidal compositions.
A17. A fibrous nematicide composition comprising a non-woven fiber and an effective amount of at least one compound selected from the group of compounds of Formulas XXIII, XXIV, or XXV stably adsorbed to the fiber, 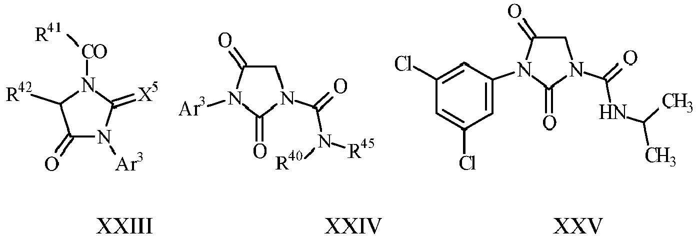 wherein for Formula XXIII: Ar³ represents a phenyl radical or a phenyl radical carrying one to five substituents, which may be the same or different, selected from halogen atoms, alkyl and alkoxy radicals containing one to four carbon atoms and the trifluoromethyl radical, R⁴¹ is selected from an alkoxy radical containing one to four carbon atoms or a grouping -NR⁴³R⁴⁴, wherein R⁴³ and R⁴⁴ are the same or different and each represents a hydrogen atom, an alkyl radical containing one to four carbon atoms or an alkenyl radical containing two to four carbon atoms, R⁴² is selected from a hydrogen atom or an alkyl radical containing one to four carbon atoms, and X⁵ represents an oxygen or sulphur atom,
   wherein for Formula XXIV: Ar³ represents a phenyl radical or a phenyl radical carrying one to five substituents, which may be the same or different, selected from halogen atoms, R⁴⁰ and R⁴⁵ are the same or different and each independently represents a hydrogen atom, or C₁-C₄ alkyl radical.
A18. The fibrous composition according to A17 comprising at least two compounds as described in any one of A2-A6.
A19. The fibrous composition according to A 17 or A18 wherein the fiber comprises low density polyethylene, high density polyethylene, poly(ethylene glycol), poly(ethylene oxide), vinyl acetate, urethane, graphite, silicone, neoprene, disoprene, poly(vinyl alcohol), poly(vinylpyrrolidone), poly(ethyloxazoline), poly(ethylene oxide)-co-poly(propylene oxide) copolymer, poly (lactide-co-glycolide), polyglycolides, polylactides, poloxamine, carboxymethyl cellulose, hydroxyalkylated cellulose, hydroxyethyl cellulose, hydroxypropyl methylcellulose, polysucrose, polyacrylic acids, polyacrylamides, alyplastic glycols, polyaromatic acids, polyurethane, polylactic acid, polyamides, polyanhydrides, polycaprolactone, polycarbonate, polydioxanone, polyester, polyester-water dispersible, polyether-block copolyamide, polyhydroxyalkanotes, polyolefin, polyorthoester, polyoxyethylene, polypropylene, polystyrene, polytrimethylene, perephthalate, rayon-non dispersible, hyaluronic acid, dextran, graphite, heparin sulfate, chondroitin sulfate, heparin, alginate, gelatin, collagen, albumin, ovalbumin, or starch.
A20. The composition according to A17 or A19 wherein the fiber comprises ethylene vinyl acetate.
A21. The composition according to any of A 17 to A20 wherein the fiber is biodegradable.
A22. Use of a composition according to any of A 14 to A21 as a nematicide.
A23. A seed comprising a coat of a fibrous composition according to any of A 17 to A21.
A24. A method for preparing the nematicidal compositions of any of A14 to A21, comprising the step of mixing at least two compounds as defined in A14 to A21, with a surfactant or diluent normally used in nematicidal compositions.
A25. A method of producing a merchandise comprising obtaining a nematicidal composition as defined in any of A 14 to A21 and preparing a merchandise from said composition.
A26. A coated seed comprising a seed contacted with a liquid or solid preparation of at least one compound as described in A1.
A27. The coated seed of A26, wherein the liquid or solid preparation comprises an effective amount of at least two of the compounds as described in any one of A2 to A6.
A28. The coated seed of A26 or A27, wherein the seed is coated with the liquid or solid preparation by mixing the seed and the liquid or solid preparation in a container, mechanical application of the liquid or solid preparation to the seed, tumbling of the seed in the liquid or solid preparation, spraying the seed with the liquid or solid preparation, and immersion of the seed in the liquid or solid preparation.
A29. The coated seed of any of A26 to A28, wherein the liquid or solid preparation is a formulation comprising liquid diluents, binders to serve as a matrix for the compounds, fillers for protecting the seeds, and/or plasticizers to improve flexibility, adhesion and/or spreadability of the coating.
A30. The coated seed of any of A26 to A29, wherein the liquid or solid preparation comprises one or more binders that comprise a natural or synthetic adhesive polymer that is without phytotoxic effect on the coated seed.
A31. The coated seed of any of A29 or A30, wherein the one or more binders are selected from polyvinyl acetates; polyvinyl acetate copolymers; ethylene vinyl acetate (EVA) copolymers; polyvinyl alcohols; polyvinyl alcohol copolymers; celluloses, including ethylcelluloses, methylcelluloses, hydroxymethylcelluloses, hydroxypropylcelluloses and carboxymethylcellulose; polyvinylpyrolidones; polysaccharides, including starch, modified starch, dextrins, maltodextrins, alginate and chitosans; fats; oils; proteins, including gelatin and zeins; gum arabics; shellacs; vinylidene chloride and vinylidene chloride copolymers; calcium lignosulfonates; acrylic copolymers; polyvinylacrylates; polyethylene oxide; acrylamide polymers and copolymers; polyhydroxyethyl acrylate, methylacrylamide monomers; or polychloroprene.
A32. The coated seed of any of A26 to A31, comprising a continuous solid phase of one or more binder compounds throughout which is distributed as a discontinuous phase one or more of the compounds.
A33. The coated seed of any of A26 to A32, wherein the compound or compounds are used in a mixture with fungicides, bactericides, acaricides, nematicides or insecticides.
A34. An aqueous emulsion comprising one or more polymers and at least one compound as described in A1 and no surfactants, with little or no aromatic solvents.
A35. The aqueous emulsion of A34, wherein the one or more polymers are selected from alkylated vinylpyrrolidone copolymer, polycarboxylic polyoxyethylene copolymer having a free acid group or a branched acrylic polymer.
A36. The aqueous emulsion of 134 or 35, wherein the emulsion comprises from 10 to 90 % by weight water, from 0 to 15 % of the at least one compound and from 1 to 15 % of polymer.
A37. The aqueous emulsion of any of A34 to A36, wherein the emulsion comprises at least two compounds as described in any one of A2 to A6.
A38. A diatomaceous earth composition for nematicidal use comprising dry spreadable granules comprising at least one compound as described in A1.
A39. The diatomaceous earth composition of A38, comprising at least two compounds as described in any one of A2 to A6.
A40. The diatomaceous earth composition of A38, comprising from about 0.005 to about 60 % by weight of the at least one compound.
A41. The diatomaceous earth composition of any of A38 to A40, further comprising a surfactant composition.
A42. The diatomaceous earth composition of A41, wherein the surfactant composition is present at from about 5 to about 40 % by weight.
A43. A solid slow-release formulation comprising (a) 0.1 to 80% by weight of at least one compound as described in A1; (b) 3 to 80% by weight of a thermoplastic, water-insoluble polymer from the group of polylactides; (c) 0 to 80% by weight of at least one thermoplastic polymer; (d) 10 to 80% by weight of at least one mineral filler; and (e) 0 to 20% by weight of inorganic or organic additives; the total of components (a) to (e) being 100%.
A44. The solid slow-release formulation of A43, comprising (a) 0.1 to 80% by weight of at least two compounds as described in any one of A2 to A6.
A45. The solid slow-release formulation of A43 or A44, wherein the at least one thermoplastic polymer of (c) is selected from polyolefins, such as polyethylene, polypropylene, polybutylene and polyisobutinylylene; vinyl polymers such as polyvinyl chloride, polyvinylpyrrolidone, polyvinylinylcaprolactamcropolactouran, polyvinyl acetate, polystyrene, polyacrylonitrile, polyacrylates, polymethacrylates; polyacetals such as polyoxymethylene; polyesters with at least part-aliphatic ester groups such as polyhydroxybutyric acid, polyhydroxyvaleric acid, polybutylene succinates, polyalkylene terephthalates such as polyalkylene adipate terephthalates such as polybutylene adipate terephthalates; polyester amides; polyether amides; polyamides; polyester amides; polycaprolactams; polyimides; polyethers; polyether ketones; polyurethanes and polycarbonates; copolymers of ethylene/vinyl acetate, ethylene/(meth)acrylates, styrene/acrylonitrile, styrene/butadiene, styrene/butadiene/acrylonitrile, olefin/maleic anhydride; collagen, gelatin, cellulose and cellulose derivatives, and/or starch and its derivatives.
A46. The solid slow-release formulation of any of A43 to A45, wherein the at least one mineral filler of (d) is selected from oxides, hydroxides, silicates, carbonates and sulfates of calcium, magnesium, aluminum and/or titanium.
A47. The solid slow-release formulation of any of A43 to A46, wherein the at least one additives of (e) is selected from: (1) auxiliaries conventionally used in extrusion technology, such as lubricants, mold release agents, fluidization auxiliaries, plasticizers and stabilizers; and/or (2) additives which affect release of the active compound(s): water-soluble inorganic substances such as sodium chloride, sodium sulfate or calcium sulfate; water-soluble organic substances such as neopentyl glycol, polyethylene glycol or urea; nonionic or ionic surfactants such as fatty alcohol ethoxylates, alkylbenzenesulfonates or alkylnaphthalenesulfonates; waxes, fatty alcohols and fatty acids, fats and oils, such as carnauba wax, stearic acid, stearyl alcohol or castor oil.
A48. A method for controlling nematodes, comprising:
   the use of a composition according to any of A1 to A6 on a plant or plant part to be protected or to a locus thereof, or
   the applying to a plant or plant part to be protected or to a locus thereof an effective amount of a nematicidal composition according to any of A14 to A21, or an effective amount of an aqueous emulsion according to any of A34-A37, or an effective amount of a diatomaceous earth composition according to any of A38-A42, or an effective amount of a solid slow-release formulation according to any of A43-A47.
A49. A method according to A48, wherein said locus is soil.
A50. A method according to A48 or A49, wherein the application occurs before planting.
A51. A method according to A48 or A49, wherein the application occurs after planting.
A52. A method according to any one of A48 to A51, wherein the compound in said composition is used in a mixture with herbicides, fungicides, bactericides, acaricides, nematicides or insecticides.
A53. A method according to any one of A48 to A51, or the use according to A8, wherein the plant part is selected from a seed, fruit, fruit body, stem, leaf, needle, stalk, shoot, flower, anther, root, tuber or rhizome.

## Claims

1. A method for controlling plant parasitic nematodes, comprising applying a liquid or solid preparation of iprodione, a salt and/or solvate to a seed, in an effective amount to act on the plant parasitic nematodes.

2. The method according to claim 1, wherein the seed is coated with the liquid or solid preparation by mixing the seed and the liquid or solid preparation in a container, mechanical application of the liquid or solid preparation to the seed, tumbling of the seed in the liquid or solid preparation, spraying the seed with the liquid or solid preparation, and immersion of the seed in the liquid or solid preparation.

3. The method according to any of claims 1 or 2, wherein the liquid or solid preparation is a formulation comprising liquid diluents, binders to serve as a matrix for the compounds, fillers for protecting the seeds, and/or plasticizers to improve flexibility, adhesion and/or spreadability of the coating.

4. The method according to any of claims 1 to 3, wherein the liquid or solid preparation comprises one or more binders that comprise a natural or synthetic adhesive polymer that is without phytotoxic effect on the coated seed.

5. The method according to any of claims 3 or 4, wherein the one or more binders are selected from polyvinyl acetates; polyvinyl acetate copolymers; ethylene vinyl acetate (EVA) copolymers; polyvinyl alcohols; polyvinyl alcohol copolymers; celluloses, preferably selected from the group comprising ethylcelluloses, methylcelluloses, hydroxymethylcelluloses, hydroxypropylcelluloses and carboxymethylcellulose; polyvinylpyrolidones; polysaccharides, preferably selected from the group comprising starch, modified starch, dextrins, maltodextrins, alginate and chitosans; fats; oils; proteins, preferably selected from the group comprising gelatin and zeins; gum arabics; shellacs; vinylidene chloride and vinylidene chloride copolymers; calcium lignosulfonates; acrylic copolymers; polyvinylacrylates; polyethylene oxide; acrylamide polymers and copolymers; polyhydroxyethyl acrylate, methylacrylamide monomers; or polychloroprene.

6. The method according to any of claims 1 to 5, comprising a continuous solid phase of one or more binder compounds throughout which is distributed as a discontinuous phase one or more of the compounds.

7. A method for controlling plant parasitic nematodes, comprising applying iprodione, a salt and/or solvate to a plant or plant part to be protected or to a locus thereof, in an effective amount to act on the plant parasitic nematodes.

8. The method according to any of claims 1 to 7, wherein said iprodione is used in a mixture at least one second compound selected from ampropylfos, bitertanol, chlorfluazuron, cymoxanil, dichlofluanid, difenoconazole, dimethomorf, flufenacet, flurtamone, fluvalinate, fuberidazole, halofenozide, imidacloprid, iprodione, isoxaflutole, kinoprene, nitenpyram, ofurace, oxadixyl, piperonyl butoxide, resmethrin, tebufenpyrad, tefluthrin, tetramethrin, thifensulfuron-methyl, anilazine, bupirimate, cyprodinyl, cyromazine, pyrimethanil, or stereoisomer, tautomer, racemic thereof, or salt, ester and/or solvate thereof.

9. The method according to any of claims 1 to 8, wherein said iprodione is used in a mixture with piperonyl butoxide.

10. The method according to any of claims 1 to 8, wherein said iprodione is used in a mixture with bupirimate .

11. The method according to any of claims 7 to 10, wherein said locus is soil.

12. The method according to any of claims 7 to 11, wherein the application occurs before planting.

13. The method according to any of claims 7 to 11, wherein the application occurs after planting.

14. The method according to any of claims 1 to 13, wherein said iprodione is used in a mixture with herbicides, fungicides, bactericides, acaricides, nematicides or insecticides.

15. The method according to claim 14, wherein said insecticides, acaricide or nematicides are selected from the group consisting of abamectin, acephate, acetamiprid, acrinathrin, alanycarb, aldoxycarb, alpha-cypermethrin, alphamethrin, amitraz, avermectin, AZ 60541, azadirachtin, azamethiphos, azinphos A, azinphos M, azocyclotin, Bacillus popilliae, Bacillus sphaericus, Bacillus subtilis, Bacillus thuringiensis, baculoviruses, Beauveria bassiana, Beauveria tenella, bendiocarb, benfuracarb, bensultap, benzoximate, betacyfluthrin, bifenazate, bifenthrin, bioethanomethrin, bio-permethrin, BPMC, bromophos A, bufencarb, buprofezin, butathiofos, butocarboxim, butylpyridaben, cadusafos, carbaryl, carbofuran, carbophenothion, carbosulfan, cartap, chloethocarb, chlorethoxyfos, chlorfenapyr, chlorfenvinphos, chlorfluazuron, chlormephos, chlorpyrifos, chlorpyrifos M, chlovaporthrin, cis-resmethrin, cispermethrin, clocythrin, cloethocarb, clofentezine, cyanophos, cycloprene, cycloprothrin, cyfluthrin, cyhalothrin, cyhexatin, cypermethrin, cyromazine, deltamethrin, demeton M, demeton S, demeton-S-methyl, diafenthiuron, diazinon, dichlorvos, diflubenzuron, dimethoat, dimethylvinphos, diofenolan, disulfoton, docusat-sodium, dofenapyn, eflusilanate, emamectin, empenthrin, endosulfan, Entomopfthora spp., esfenvalerate, ethiofencarb, ethion, ethoprophos, etofenprox, etoxazole, etrimfos, fenamiphos, fenazaquin, fenbutatin oxide, fenitrothion, fenothiocarb, fenoxacrim, fenoxycarb, fenpropathrin, fenpyrad, fenpyrithrin, fenpyroximate, fenvalerate, fipronil, fluazinam, fluazuron, flubrocythrinate, flucycloxuron, flucythrinate, flufenoxuron, flutenzine, fluvalinate, fonophos, fosmethilan, fosthiazate, fubfenprox, furathiocarb, granulosis viruses, halofenozide, HCH, heptenophos, hexaflumuron, hexythiazox, hydroprene, imidacloprid, isazofos, isofenphos, isoxathion, ivermectin, nuclear polyhedrosis viruses, lambda-cyhalothrin, lufenuron malathion, mecarbam, metaldehyde, methamidophos, Metarhizium anisopliae, Metarhizium flavoviride, methidathion, methiocarb, methomyl, methoxyfenozide, metolcarb, metoxadiazone, mevinphos, milbemectin, monocrotophos, naled, nitenpyram, nithiazine, novaluron, omethoat, oxamyl, oxydemethon M, Paecilomyces fumosoroseus, parathion A, parathion M, permethrin, phenthoat, phorat, phosalone, phosmet, phosphamidon, phoxim, pirimicarb, pirimiphos A, pirimiphos M, profenofos, promecarb, propoxur, prothiofos, prothoat, pymetrozine, pyraclofos, pyresmethrin, pyrethrum, pyridaben, pyridathion, pyrimidifen, pyriproxyfen, quinalphos, ribavirin, salithion, sebufos, silafluofen, spinosad, sulfotep, sulprofos, tau-fluvalinate, tebufenozide, tebufenpyrad, tebupirimiphos, teflubenzuron, tefluthrin, temephos, temivinphos, terbufos, tetrachlorvinphos, theta-cypermethrin, thiamethoxam, thiapronil, thiatriphos, thiocyclam hydrogen oxalate, thiodicarb, thiofanox, thuringiensin, tralocythrin, tralomethrin, triarathene, triazamate, triazophos, triazuron, trichlophenidine, trichlorfon, triflumuron, trimethacarb, vamidothion, vaniliprole, Verticillium lecanii, YI 5302, zeta-cypermethrin, zolaprofos, (1R-cis)-[5-(phenylmethyl)-3-furanyl]-methyl3-[(dihydro-2-oxo-3(2H)-furanylidene)-methyl]-2,2-imethylcyclopropanecarboxylate, (3-phenoxyphenyl)-methyl 2,2,3,3-tetramethylcyclopropanecarboxylate, 1-[(2-chloro-5-thiazolyl)methyl]tetrahydro-3,5-dimethyl-N-nitro-1,3,5-triazine-2(1H)-imine, 2-(2-chloro-6-fluorophenyl)-4-[4-(1,1-dimethylethyl)phenyl]-4,5-dihydro-oxazole, 2-(acetlyoxy)-3-dodecyl-1,4-naphthalenedione, 2-chloro-N-[[[4-(1-phenylethoxy)-phenyl]-amino]-carbonyl]-benzamide, 2-chloro-N-[[[4-(2,2-dichloro-1,1-difluoroethoxy)-phenyl]-amino]-carbonyl]-benzamide, 3-methylphenyl propylcarbamate. 4-[4-(4-ethoxyphenyl)-4-methylpentyl]-1-fluoro-2-phenoxy-benzene, 4-chloro-2-(1,1-dimethylethyl)-5-[[2-(2,6-dimethyl-4-phenoxyphenoxy)ethyl]thio]-3(2H)-pyridazinone, 4-chloro-2-(2-chloro-2-methylpropyl)-5-[(6-iodo-3-pyridinyl)methoxy]-3(2H)-pyridazinone, 4-chloro-5-[(6-chloro-3-pyridinyl)methoxy]-2-(3,4-dichlorophenyl)-3(2H)-pyridazinone, Bacillus thuringiensis strain EG-2348, [2-benzoyl-1-(1,1-dimethylethyl)-hydrazinobenzoic acid, 2,2-dimethyl-3-(2,4-dichlorophenyl)-2-oxo-1-oxaspiro[4.5]dec-3-en-4-yl butanoate, [3-[(6-chloro-3-pyridinyl)methyl]-2-thiazolidinylidene]-cyanamide, dihydro-2-(nitromethylene)-2H-1,3-thiazine-3(4H)-carboxaldehyde, ethyl [2-[[1,6-dihydro-6-oxo-1-(phenylmethyl)-4-pyridazinyl]oxy]ethyl]-carbamate, N-(3,4,4-trifluoro-1-oxo-3-butenyl)-glycine, N-(4-chlorophenyl)-3-[4-(difluoromethoxy)phenyl]-4,5-dihydro-4-phenyl-1H-pyrazole-1-carboxamide, N-[(2-chloro-5-thiazolyl)methyl]-N'-methyl-N"-nitro-guanidine, N-methyl-N'-(1-methyl-2-propenyl)-1,2-hydrazinedicarbothioamide, N-methyl-N'-2-propenyl-1,2-hydrazinedicarbothioamide, O,O-diethyl [2-(dipropylamino)-2-oxoethyl]-ethyl-phosphoroamidothioate.

16. The method according to claim 14, wherein said fungicides are selected from the group comprising aldimorph, ampropylfos, ampropylfos potassium, andoprim, anilazine, azaconazole, azoxystrobin, benalaxyl, benodanil, benomyl, benzamacril, benzamacril-isobutyl, bialaphos, binapacryl, biphenyl, bitertanol, blasticidin-S, bromuconazole, bupirimate, buthiobate, calcium polysulphide, capsimycin, captafol, captan, carbendazim, carboxin, carvon, quinomethionate, chlobenthiazone, chlorfenazole, chloroneb, chloropicrin, chlorothalonil, chlozolinate, clozylacon, cufraneb, cymoxanil, cyproconazole, cyprodinil, cyprofuram, debacarb, dichlorophen, diclobutrazole, diclofluanid, diclomezine, dicloran, diethofencarb, difenoconazole, dimethirimol, dimethomorf, diniconazole, diniconazole-M, dinocap, diphenylamine, dipyrithione, ditalimfos, dithianon, dodemorph, dodine, drazoxolon, ediphenphos, epoxiconazole, etaconazole, ethirimol, etridiazole, famoxadon, fenapanil, fenarimol, fenbuconazole, fenfuram, fenitropan, fenpiclonil, fenpropidin, fenpropimorph, fentin acetate, fentin hydroxide, ferbam, ferimzone, fluazinam, flumetover, fluoromide, fluquinconazole, flurprimidol, flusilazole, flusulfamide, flutolanil, flutriafol, folpet, fosetyl-aluminium, fosetyl-sodium, fthalide, fuberidazole, furalaxyl, furametpyr, furcarbonil, furconazole, furconazolecis, furmecyclox, guazatine, hexachlorobenzene, hexaconazole, hymexazole, imazalil, imibenconazole, iminoctadine, iminoctadine albesilate, iminoctadine triacetate, iodocarb, ipconazole, iprobenfos (IBP), iprodione, irumamycin, isoprothiolane, isovaledione, kasugamycin, kresoxim-methyl, copper preparations, such as: copper hydroxide, copper naphthenate, copper oxychloride, copper sulphate, copper oxide, oxine-copper and Bordeaux mixture, mancopper, mancozeb, maneb, meferimzone, mepanipyrim, mepronil, metalaxyl, metconazole, methasulfocarb, methfuroxam, metiram, metomeclam, metsulfovax, mildiomycin, myclobutanil, myclozolin, nickel dimethyldithiocarbamate, nitrothal-isopropyl, nuarimol, ofurace, oxadixyl, oxamocarb, oxolinic acid, oxycarboxim, oxyfenthiin, paclobutrazole, pefurazoate, penconazole, pencycuron, phosdiphen, pimaricin, piperalin, polyoxin, polyoxorim, probenazole, prochloraz, procymidone, propamocarb, propanosine-sodium, propiconazole, propineb, pyrazophos, pyrifenox, pyrimethanil, pyroquilon, pyroxyfur, quinconazole, quintozene (PCNB), sulphur and sulphur preparations, tebuconazole, tecloftalam, tecnazene, tetcyclacis, tetraconazole, thiabendazole, thicyofen, thifluzamide, thiophanate-methyl, thiram, tioxymid, tolclofos-methyl, tolylfluanid, triadimefon, triadimenol, triazbutil, triazoxide, trichlamide, tricyclazole, tridemorph, triflumizole, triforine, triticonazole, uniconazole, validamycin A, vinclozolin, viniconazole, zarilamide, zineb, ziram and also Dagger G, OK-8705, OK-8801, α-(1,1-dimethylethyl)-β-(2-phenoxyethyl)-1H-1,2,4-triazole-l-ethanol, α-(2,4-dichlorophenyl)-β-fluoro-b-propy)-1H-1,2,4-triazole-1-ethanol, α-(2,4-dichlorophenyl)-β-methoxy-a-methyl-1H-1,2,4-triazole-1-ethanol, α-(5-methyl-1,3-dioxan-5-yl)-β-[[4-(trifluoromethyl)-phenyl]-methylene]-1H-1,2,4-triazole-1-ethanol, (5RS,6RS)-6-hydroxy-2,2,7,7-tetramethyl-5-(1H-1,2,4-triazol-1-yl)-3-octanone, (E)-a-(methoxyimino)-N-methyl-2-phenoxy-phenylacetamide, isopropyl 1-{2-methyl-1-[[[1-(4-methylphenyl)-ethyl]-amino]-carbonyl]-propyl}-carbamate, 1-(2,4-dichlorophenyl)-2-(1H-1,2,4-triazol-1-yl)-ethanone O-(phenylmethyl) oxime, 1-(2-methyl-1-naphthalenyl)-1H-pyrrol-2,5-dione, 1-(3,5-dichlorophenyl)-3-(2-propenyl)-2,5-pyrrolidinedione, 1-[(diiodomethyl)-sulphonyl]-4-methylbenzene, 1-[[2-(2,4-dichlorophenyl)-1,3-dioxolan-2-yl]-methyl]-1H-imidazole, 1-[[2-(4-chlorophenyl)-3-phenyloxiranyl]-methyl]-1H-1,2,4-triazole, 1-[1-[2-[(2,4-dichlorophenyl)-methoxy]-phenyl]-ethenyl]-1H-imidazole, 1-methyl-5-nonyl-2-(phenylmethyl)-3-pyrrolidinole, 2',6'-dibromo-2-methyl-4'-trifluoromethoxy-4'-trifluoro-methyl-1,3-thiazole-5-carboxanilide, 2,2-dichloro-N-[1-(4-chlorophenyl)-ethyl]-1-ethyl-3-methyl-cyclopropane-carboxamide, 2,6-dichloro-5-(methylthio)-4-pyrimidinyl thiocyanate, 2,6-dichloro-N-(4-trifluoromethylbenzyl)-benzamide, 2,6-dichloro-N-[[4-(trifluoromethyl)-phenyl]-methyl]-benzamide, 2-(2,3,3-triiodo-2-propenyl)-2H-tetrazole, 2-[(1-methylethyl)-sulphonyl]-5-(trichloromethyl)-1,3,4-thiadiazole, 2-[[6-deoxy-4-O-(4-O-methyl-α-D-glycopyranosyl)-a-D-glucopyranosyl]-amino]-4-methoxy-1H-pyrrolo[2,3-d]pyrimidine-5-arbonitrile, 2-aminobutane, 2-bromo-2-(bromomethyl)-pentanedinitrile, 2-chloro-N-(2,3-dihydro-1,1,3-trimethyl-1H-inden-4-yl)-3-pyridinecarboxamide, 2-chloro-N-(2,6-dimethylphenyl)-N-(isothiocyanatomethyl)-acetamide, 2-phenylphenol (OPP), 3,4-dichloro-1-[4-(difluoromethoxy)-phenyl]-1H-pyrrol-2,5-dione, 3,5-dichloro-N-[cyano-[(1-methyl-2-propynyl)-oxy]-methyl]-benzamide, 3-(1,1-dimethylpropyl-1-oxo-1H-indene-2-carbonitrile, 3-[2-(4-chlorophenyl)-5-ethoxy-3-isoxazolidinyl]-pyridine, 4-chloro-2-cyano-N,N-dimethyl-5-(4-methylphenyl)-1H-imidazole-1-sulphonamide, 4-methyl-tetrazolo[1,5-a]quinazolin-5(4H)-one, 8-(1,1-dimethylethyl)-N-ethyl-N-propyl-1,4-dioxaspiro[4.5]decane-2-methanamine, 8-hydroxyquinoline sulphate, 9H-xanthene-2-[(phenylamino)-carbonyl]-9-carboxylic hydrazide, bis-(1-methylethyl) 3-methyl-4-[(3-methylbenzoyl)-oxy]-2,5-thiophenedicarboxylate, cis-1-(4-chlorophenyl)-2-(1H-1,2,4-triazol-1-yl)-cycloheptanol, cis-4-[3-[4-(1,1-dimethylpropyl)-phenyl-2-methylpropyl]-2,6-dimethyl-morpholine hydrochloride, ethyl [(4-chlorophenyl)-azo]-cyanoacetate, potassium hydrogen carbonate, methanetetrathiol sodium salt, methyl 1-(2,3-dihydro-2,2-dimethyl-1H-inden-1-yl)-1H-imidazole-5-carboxylate, methyl N-(2,6-dimethylphenyl)-N-(5-isoxazolylcarbonyl)-DL-alaninate, methyl N-(chloroacetyl)-N-(2,6-dimethylphenyl)-DL-alaninate, N-(2,3-dichloro-4-hydroxyphenyl)-1-methyl-cyclohexanecarboxamide, N-(2,6-dimethylphenyl)-2-methoxy-N-(tetrahydro-2-oxo-3-furanyl)-acetamide, N-(2,6-dimethylphenyl)-2-methoxy-N-(tetrahydro-2-oxo-3-thienyl)-acetamide, N-(2-chloro-4-nitrophenyl)-4-methyl-3-nitro-benzenesulphonamide, N-(4-cyclohexylphenyl)-1,4,5,6-tetrahydro-2-pyrimidineamine, N-(4-bexylphenyl)-1,4,5,6-tetrahydro-2-pyrimidineamine, N-(5-chloro-2-methylphenyl)-2-methoxy-N-(2-oxo-3-oxazolidinyl)-acetamide, N-(6-methoxy)-3-pyridinyl)-cyclopropanecarboxamide, N-[2,2,2-trichloro-1-[(chloroacetyl)-amino]-ethyl]-benzamide, N-[3-chloro-4,5-bis(2-propinyloxy)-phenyl]-N'-methoxy-methanimidamide, N-formyl-N-hydroxy-DL-alanine-sodium salt, O,O-diethyl [2-(dipropylamino)-2-oxoethyl]-ethylphosphoramidothioate, O-methyl S-phenyl phenylpropylphosphoramidothioate, S-methyl 1,2,3-benzothiadiazole-7-carbothioate, and spiro[2H]-1-benzopyran-2,1'(3'H)-isobenzofuran]-3'-one.

17. The method according to any of claims 1 to 16, wherein said iprodione is used in a mixture with herbicides, fertilizers and/or growth regulators.

18. The method according to any of claims 1 to 17, wherein said iprodione is used in a mixture with a synergist.

19. The method according to claim 18, wherein said synergist is selected from piperonyl butoxide, piprotal, propyl isome, sesamex or sesamolin.

20. The method according to any of claims 7 to 19, wherein said iprodione is formulated as a solution, emulsion, wettable powder, water dispersible granule, suspension, powder, dusting agent, foaming agent, paste, soluble powder, granules, suspo-emulsion concentrate, microcapsule, fumigant, natural and synthetic materials impregnated with iprodione and very fine capsules or polymeric substance

21. The method according to any of claims 1 to 20, wherein said iprodione is formulated as a composition which comprises further at least one of the following: emulsion stabilizer, surfactant, or antifreeze compound.

22. The method according to any of claims 7 to 21, wherein said iprodione is formulated as a composition which comprises solid diluents or carriers selected from ammonium salts; ground natural minerals selected from kaolins, clays, talc, chalk, quartz, attapulgite, montmorillonite or diatomaceous earth, ground synthetic minerals selected from finely divided silica, alumina and silicates.

23. The method according to any of claims 7 to 21, wherein said iprodione is formulated as a composition which comprises solid carriers for granules selected from crushed and fractionated natural rocks selected from calcite, marble, pumice, sepiolite and dolomite, or synthetic granules of inorganic and organic meals, and granules of organic material selected from sawdust, coconut shells, maize cobs and tobacco stalks.

24. The method according to any of claims 7 to 21, wherein said iprodione is formulated as an aqueous emulsion comprising one or more polymers and iprodione, a salt and/or solvate thereof and no surfactants, with no aromatic solvents.

25. The method according to claim 24, wherein the one or more polymers are selected from alkylated vinylpyrrolidone copolymer, polycarboxylic polyoxyethylene copolymer having a free acid group or a branched acrylic polymer.

26. The method according to any of claims 7 to 21, wherein said iprodione is formulated as a diatomaceous earth composition comprising dry spreadable granules comprising iprodione, a salt and/or solvate thereof.

27. The method according to claim 26, comprising from 0.005 to 60 % by weight of iprodione, a salt and/or solvate thereof.

28. The method according to any of claims 26 to 27, further comprising a surfactant composition.

29. The method according to claim 28, wherein the surfactant composition is present at from 5 to 40 % by weight.

30. The method according to any of claims 7 to 21, wherein said iprodione is formulated as a solid slow-release formulation comprising (a) 0.1 to 80% by weight of iprodione, a salt and/or a solvate thereof; (b) 3 to 80% by weight of a thermoplastic, water-insoluble polymer from the group of polylactides; (c) 0 to 80% by weight of at least one thermoplastic polymer; (d) 10 to 80% by weight of at least one mineral filler; and (e) 0 to 20% by weight of inorganic or organic additives; the total of components (a) to (e) being 100%.

31. The method according to claim 30, wherein the at least one thermoplastic polymer of (c) is selected from polyolefins, preferably selected from the group comprising polyethylene, polypropylene, polybutylene and polyisobutinylylene; vinyl polymers preferably selected from the group comprising polyvinyl chloride, polyvinylpyrrolidone, polyvinylinylcaprolactamcropolactouran, polyvinyl acetate, polystyrene, polyacrylonitrile, polyacrylates, polymethacrylates; polyacetals preferably selected from the group comprising polyoxymethylene; polyesters with at least part-aliphatic ester groups preferably selected from the group comprising polyhydroxybutyric acid, polyhydroxyvaleric acid, polybutylene succinates, polyalkylene terephthalates preferably selected from the group comprising polyalkylene adipate terephthalates preferably selected from the group comprising polybutylene adipate terephthalates; polyester amides; polyether amides; polyamides; polyester amides; polycaprolactams; polyimides; polyethers; polyether ketones; polyurethanes and polycarbonates; copolymers of ethylene/vinyl acetate, ethylene/(meth)acrylates, styrene/acrylonitrile, styrene/butadiene, styrene/butadiene/acrylonitrile, olefin/maleic anhydride; collagen, gelatin, cellulose, and/or starch.

32. The method according to any of claims 30 to 31, wherein the at least one mineral filler of (d) is selected from oxides, hydroxides, silicates, carbonates and sulfates of calcium, magnesium, aluminum and/or titanium.

33. The method according to any of claims 30 to 32, wherein the at least one additives of (e) is selected from: (1) auxiliaries conventionally used in extrusion technology, preferably selected from the group comprising lubricants, mold release agents, fluidization auxiliaries, plasticizers and stabilizers; and/or (2) additives which affect release of the active compound(s) which are selected from the group comprising water-soluble inorganic substances preferably selected from the group comprising sodium chloride, sodium sulfate or calcium sulfate; water-soluble organic substances preferably selected from the group comprising neopentyl glycol, polyethylene glycol or urea; nonionic or ionic surfactants preferably selected from the group comprising fatty alcohol ethoxylates, alkylbenzenesulfonates or alkylnaphthalenesulfonates; waxes, fatty alcohols and fatty acids, fats and oils, preferably selected from the group comprising carnauba wax, stearic acid, stearyl alcohol or castor oil.

34. The method according to any of claims 7 to 21, wherein the plant part is selected from a seed, fruit, fruit body, stem, leaf, needle, stalk, shoot, flower, anther, root, tuber or rhizome.

35. The method according to claim 7, wherein said iprodione is formulated as a composition consisting of a nematicidal effective amount of iprodione or a salt or solvate thereof, and optionally at least one of the following: surfactant, antifreeze compound and/or emulsion stabilizer.

36. The method according to any of claims 7 to 35, wherein said plant is selected from the group consisting of corn, rice, barley, wheat, millet, Acer, Betula, Prunus, fruit trees, Fraxinus, Ulmus, cotton, coffee, tea, citrus, Vinca, tobacco, tomato, cowpea, lettuce, rape, potato, bean, celery, cucurbits, pepper, carrots, aubergines, Allium, eggplant, strawberry, garlic, cabbage, soybean, banana, Rosaceae, Liliaceae, Azalea, and Rhododendron.
